(19) Europäisches Patentamt
European Patent Office
Office européen des brevets

(11) **EP 2 060 464 A2**

(12) **EUROPEAN PATENT APPLICATION**

(43) Date of publication:
**20.05.2009 Bulletin 2009/21**

(51) Int Cl.:
***B60W 30/02*** [(2006.01)]

(21) Application number: **08019957.3**

(22) Date of filing: **14.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.11.2007 JP 2007298358**

(71) Applicant: **Hitachi Ltd.**
**Chiyoda-ku**
**Tokyo 100-8280 (JP)**

(72) Inventors:
• **Takahashi, Junya c/o Hitachi, Ltd.,**
**Int.Prop.Group**
**Tokyo 100-8220 (JP)**
• **Yokoyama, Atsushi c/o Hitachi Ltd.**
**Int.Prop.Group**
**Tokyo 100-8220 (JP)**
• **Kuragaki, Satoru c/o Hitachi, Ltd., Int.Prop.Group**
**Tokyo 100-8220 (JP)**

(74) Representative: **Beetz & Partner**
**Patentanwälte**
**Steinsdorfstrasse 10**
**80538 München (DE)**

(54) **Forward collision avoidance assistance system**

(57)    An object of the present invention is to provide a forward collision avoidance assistance system that attains the reduction of driver's uncomfortable feeling and the improvement in drivability while ensuring the collision avoidance performance during operation for avoiding contact with an object.

A collision avoidance calculation unit 3 determines a risk of collision between a host vehicle and an object detected in the host vehicle traveling direction based on information about the host vehicle detected by a host vehicle information detection unit 1 and information about the object detected by an object information detection unit 2, and calculates control information for object avoidance to be output to an actuator 5 based on a result of collision risk judgment. The collision avoidance calculation unit 3 uses a collision-avoidable limit distance $\Delta xctl2$ determined based on a physical limit that can avoid collision with the object, and a jerk-limited collision avoidable distance $\Delta xctl1$ determined based on the acceleration and jerk generated on the host vehicle by object avoidance movement, to control the brake force generated on the host vehicle by a brake actuator 5.

**FIG.1**

**Description**

BACKGROUND OF THE INVENTION

1. Field of the Invention

The present invention relates to a forward collision avoidance assistance system that detects an object existing ahead of a host vehicle and, if the host vehicle is judged to have the possibility of contact with the object, automatically generates brake force, lateral force, and the like in the vehicle.

2. Description of the Related Art

Conventionally, an apparatus that detects an object ahead of a host vehicle and automatically generates brake force and lateral force in the vehicle depending on the possibility of contact with the object has been proposed.

For example, JP-A-6-298022 discloses a known technique for automatically actuating brake if the distance to a preceding vehicle becomes equal to or smaller than the braking-based collision-avoidable limit distance that can prevent contact with the preceding vehicle by braking operation and the steering-based collision-avoidable limit distance that can prevent contact with the preceding vehicle by steering operation.

JP-A-11-203598 discloses a known technique for actuating brake if steering-based collision avoidance of contact with an object is judged to be impossible, that is, if the relative distance to the object becomes equal to or smaller than the steering-based collision-avoidable limit distance.

JP-A-2003-182544 discloses a known technique for starting a gradual increase in brake fluid pressure if either braking-based collision avoidance of contact with an object or steering-based collision avoidance of contact with an object is judged to be impossible, that is, if the distance to a preceding vehicle becomes equal to or smaller than the braking-based collision-avoidable limit distance or the steering-based collision-avoidable limit distance, and increasing the brake pressure to a predetermined pressure if neither braking-based collision avoidance of contact with an object nor steering-based collision avoidance of contact with an object is judged to be possible.

With the above-mentioned techniques, the possibility of contact with the object can be reduced while preventing braking-based deceleration from occurring at an inappropriate timing.

SUMMARY OF THE INVENTION

However, any of the above-mentioned techniques determines timing for generating brake force based on the braking-based collision-avoidable limit distance or the steering-based collision-avoidable limit distance, and therefore does not sufficiently reduce driver's uncomfortable feeling or improve the drivability.

Further, although the technique disclosed in JP-A-2003-182544 reduces driver's uncomfortable feeling by gradually increasing the brake fluid pressure if the relative distance to an object falls below the braking-based collision-avoidable limit distance or the steering-based collision-avoidable limit distance. For example, under a condition where the braking-based collision-avoidable limit distance nearly equals the steering-based collision-avoidable limit distance, the brake fluid pressure may steeply increase and therefore it cannot be said that driver's uncomfortable feeling is sufficiently reduced.

In order to reduce driver's uncomfortable feeling and improve the drivability, it is necessary to take into consideration a change rate of acceleration (hereinafter referred to as jerk) generated on the vehicle during collision avoidance movement.

An object of the present invention is to provide a forward collision avoidance assistance system that attains the reduction of driver's uncomfortable feeling and the improvement in drivability while ensuring the collision avoidance performance during operation for avoiding contact with an object.

(1) In order to attain the above-mentioned object, the present invention provides a forward collision avoidance assistance system comprising: means for host vehicle information detection; means for object information detection; and/or means for collision avoidance calculation; wherein the collision avoidance calculation means performs the steps of: determining a risk of collision between a host vehicle and an object detected in the host vehicle traveling direction based on information about the host vehicle detected by host vehicle information detection means and information about the object detected by object information detection means, and/or calculating control information for object avoidance to be output to an actuator based on a result of collision risk judgment; wherein the actuator is brake force control means that can control the brake force of the vehicle; and/or wherein the collision avoidance calculation means uses the collision-avoidable limit distance $\Delta xctl2$ determined based on a physical limit for enabling avoidance of collision with the object, and the jerk-limited collision avoidable distance $\Delta xctl1$ determined based on

the acceleration and jerk generated on the host vehicle by object avoidance movement, to control the brake force generated on the host vehicle by the brake force control means.

The above configuration makes it possible, during object avoidance operation, to ensure the collision avoidance performance and at the same time perform deceleration control with a reduced acceleration change generated on the vehicle while preventing excessive warning, thus reducing driver's uncomfortable feeling and improving the drivability.

(2) The forward collision avoidance assistance system according to (1), wherein: preferably, the collision avoidance calculation means performs the steps of: defining the collision-avoidable limit distance Δxctl2 based on the deceleration-based collision-avoidable limit distance Δxbrk which is a physical limit for avoiding collision with the object by deceleration, and the lateral-motion-based collision-avoidable limit distance Δxstr which is a physical limit for avoiding collision with the object by lateral movement; and defining the jerk-limited collision avoidable distance Δxctl1 based on the jerk-limited deceleration-based collision avoidable distance Δxbrklmt over which the absolute value of the jerk generated on the host vehicle by deceleration-based collision avoidance movement becomes equal to or smaller than a predetermined value (upper-limit longitudinal jerk |Jxlmt|), and/or the jerk-limited lateral-motion-based collision avoidable distance Δxstrlmt over which the absolute value of the jerk generated on the host vehicle by lateral-motion-based collision avoidance movement becomes equal to or smaller than a predetermined value (upper-limit lateral jerk |Jylmt|).

(3) The forward collision avoidance assistance system according to (1), wherein: preferably, the collision avoidance calculation means calculates the collision-avoidable limit distance Δxctl2 and the jerk-limited collision avoidable distance Δxctl1 based on road surface information.

(4) The forward collision avoidance assistance system according to (3), wherein: preferably, the collision avoidance calculation means presumes the road surface information based on a brake force generated at each tire by the brake force control means.

(5) The forward collision avoidance assistance system according to (1), wherein: preferably, the collision avoidance calculation means controls the throttle valve opening to limit the absolute value of the jerk to a predetermined value or below.

(6) The forward collision avoidance assistance system according to (1), wherein, preferably, the actuator serves as lateral force control means enabling lateral force control as well as the brake force control means; and wherein the collision avoidance calculation means uses the collision-avoidable limit distance Δxctl2 determined based on a physical limit that can avoid collision with the object, and the jerk-limited collision avoidable distance Δxctl1 determined based on the acceleration and jerk generated on the host vehicle by object avoidance movement, to control the brake force and lateral force generated on the host vehicle by the brake force control means.

(7) The forward collision avoidance assistance system according to (6), wherein: preferably, the collision avoidance calculation means performs the steps of: defining the collision-avoidable limit distance Δxctl2 based on the deceleration-based collision-avoidable limit distance Δxbrk which is a physical limit for avoiding collision with the object by deceleration, and the lateral-motion-based collision-avoidable limit distance Δxstr which is a physical limit for avoiding collision with the object by lateral movement; and defining the jerk-limited collision avoidable distance Δxctl1 based on the jerk-limited deceleration-based collision avoidable distance Δxbrklmt over which the absolute value of the jerk generated on the host vehicle by deceleration-based collision avoidance movement becomes equal to or smaller than a predetermined value (upper-limit longitudinal jerk |Jxlmt|), and the jerk-limited lateral-motion-based collision avoidable distance Δxstrlmt over which the absolute value of the jerk generated on the host vehicle by lateral-motion-based collision avoidance movement becomes equal to or smaller than a predetermined value (upper-limit lateral jerk |Jylmt|).

(8) The forward collision avoidance assistance system according to (7), wherein: preferably, the collision avoidance calculation means controls the deceleration using the brake force control means and then controls the lateral force using the lateral force control means.

(9) The forward collision avoidance assistance system according to (7), wherein a region A1 is a region where the collision-avoidable limit distance with respect to the relative velocity ΔV is larger than both the jerk-limited deceleration-based collision avoidable distance Δxbrklmt and the jerk-limited lateral-motion-based collision avoidable distance Δxstrlmt; wherein a region A2 is a region where the collision-avoidable limit distance is equal to or smaller than the jerk-limited deceleration-based collision avoidable distance Δxbrklmt, equal to or smaller than the deceleration-based collision-avoidable limit distance Δxbrk, and larger than the jerk-limited lateral-motion-based collision avoidable distance Δxstrlmt; wherein a region A3 is a region where the collision-avoidable limit distance is equal to or smaller than the jerk-limited lateral-motion-based collision avoidable distance Δxstrlmt, equal to or larger than the lateral-motion-based collision-avoidable limit distance Δxstr, and larger than the jerk-limited deceleration-based collision avoidable distance Δxbrklmt; wherein a region A4 is a region where the collision-avoidable limit distance is smaller than the deceleration-based collision-avoidable limit distance

$\Delta$xbrk, and larger than the jerk-limited lateral-motion-based collision avoidable distance $\Delta$xstrlmt; wherein a region A5 is a region where the collision-avoidable limit distance is smaller than the lateral-motion-based collision-avoidable limit distance $\Delta$xstr, and larger than the jerk-limited deceleration-based collision avoidable distance $\Delta$xbrklmt; wherein a region A6 is a region where the collision-avoidable limit distance is equal to or smaller than both the jerk-limited deceleration-based collision avoidable distance $\Delta$xbrklmt and the jerk-limited lateral-motion-based collision avoidable distance $\Delta$xstrlmt, and equal to or larger than both the deceleration-based collision-avoidable limit distance $\Delta$xbrk and the lateral-motion-based collision-avoidable limit distance $\Delta$xstr; wherein a region A7 is a region where the collision-avoidable limit distance is smaller than the deceleration-based collision-avoidable limit distance $\Delta$xbrk, equal to or smaller than the jerk-limited lateral-motion-based collision avoidable distance $\Delta$xstrlmt, and equal to or larger than the lateral-motion-based collision-avoidable limit distance $\Delta$xstr; wherein a region A8 is a region where the collision-avoidable limit distance is smaller than the lateral-motion-based collision-avoidable limit distance $\Delta$xstr, equal to or smaller than the jerk-limited deceleration-based collision avoidable distance $\Delta$xbrklmt, and equal to or larger than the deceleration-based collision-avoidable limit distance $\Delta$xbrk; wherein a region A9 is a region where the collision-avoidable limit distance is smaller than both the deceleration-based collision-avoidable limit distance $\Delta$xbrk and the lateral-motion-based collision-avoidable limit distance $\Delta$xstr; and wherein, preferably, the collision avoidance calculation means does not perform collision avoidance control if the collision-avoidable limit distance with respect to the relative velocity $\Delta$V is included in the region A1, A2, A3, A4, or A5; wherein the collision avoidance calculation means decelerates the vehicle with the maximum possible acceleration |Gmax| on the road surface in the region A9; wherein the collision avoidance calculation means sets the deceleration such that the longitudinal jerk generated by deceleration-based collision avoidance movement becomes equal to or smaller than the maximum possible longitudinal jerk |Jxmax|, or the lateral acceleration such that the lateral jerk generated by lateral-motion-based collision avoidance movement becomes equal to or smaller than the maximum possible lateral jerk |Jymax| in the region A6; wherein the collision avoidance calculation means sets the lateral acceleration to the maximum lateral jerk |Jymax| or below in the region A7; and wherein the collision avoidance calculation means sets the deceleration to the maximum longitudinal jerk |Jxmax| or below in the region A8.

(10) In order to attain the above-mentioned object, the present invention provides a forward collision avoidance assistance system comprising: means for host vehicle information detection; means for object information detection; and/or means for collision avoidance calculation; wherein the collision avoidance calculation means performs the steps of: determining a risk of collision between a host vehicle and an object detected in the host vehicle traveling direction based on information about the host vehicle detected by host vehicle information detection means and information about the object detected by object information detection means, and/or calculating control information for object avoidance to be output to an actuator based on a result of collision risk judgment; wherein the actuator serves as the brake force control means that can control the brake force of the vehicle and the lateral force control means that can control the lateral force; and/or wherein the collision avoidance calculation means uses the collision-avoidable limit distance $\Delta$xctl2 determined based on a physical limit that can avoid collision with the object, and the jerk-limited collision avoidable distance $\Delta$xctl1 determined based on the acceleration and jerk generated on the host vehicle by object avoidance movement, to control the brake force and lateral force generated on the host vehicle by the brake force control means.

The above configuration makes it possible, during object avoidance operation, to ensure the collision avoidance performance and at the same time perform deceleration and steering control with a reduced acceleration change generated on the vehicle while preventing excessive warning, thus reducing driver's uncomfortable feeling and improving the drivability.

(11) The forward collision avoidance assistance system according to (10), wherein: preferably, the collision avoidance calculation means performs the steps of: defining the collision-avoidable limit distance $\Delta$xctl2 based on the deceleration-based collision-avoidable limit distance $\Delta$xbrk which is a physical limit for avoiding collision with the object by deceleration, and the lateral-motion-based collision-avoidable limit distance $\Delta$xstr which is a physical limit for avoiding collision with the object by lateral movement; and defining the jerk-limited collision avoidable distance $\Delta$xctl1 based on the jerk-limited deceleration-based collision avoidable distance $\Delta$xbrklmt over which the absolute value of the jerk generated on the host vehicle by deceleration-based collision avoidance movement becomes equal to or smaller than a predetermined value (upper-limit longitudinal jerk |Jxlmt|), and the jerk-limited lateral-motion-based collision avoidable distance $\Delta$xstrlmt over which the absolute value of the jerk generated on the host vehicle by lateral-motion-based collision avoidance movement becomes equal to or smaller than a predetermined value (upper-limit lateral jerk |Jylmt|).

(12) The forward collision avoidance assistance system according to (11), wherein: preferably, the collision avoidance calculation means controls the deceleration using the brake force control means and then the lateral force using the lateral force control means.

(13) The forward collision avoidance assistance system according to (11),

wherein the region A1 is a region where the collision-avoidable limit distance with respect to the relative velocity ΔV is larger than both the jerk-limited deceleration-based collision avoidable distance Δxbrklmt and the jerk-limited lateral-motion-based collision avoidable distance Δxstrlmt; wherein the region A2 is a region where the collision-avoidable limit distance is equal to or smaller than the jerk-limited deceleration-based collision avoidable distance Δxbrklmt, equal to or smaller than the deceleration-based collision-avoidable limit distance Δxbrk, and larger than the jerk-limited lateral-motion-based collision avoidable distance Δxstrlmt; wherein the region A3 is a region where the collision-avoidable limit distance is equal to or smaller than the jerk-limited lateral-motion-based collision avoidable distance Δxstrlmt, equal to or larger than the lateral-motion-based collision-avoidable limit distance Δxstr, and larger than the jerk-limited deceleration-based collision avoidable distance Δxbrklmt; wherein the region A4 is a region where the collision-avoidable limit distance is smaller than the deceleration-based collision-avoidable limit distance Δxbrk, and larger than the jerk-limited lateral-motion-based collision avoidable distance Δxstrlmt; wherein the region A5 is a region where the collision-avoidable limit distance is smaller than the lateral-motion-based collision-avoidable limit distance Δxstr, and larger than the jerk-limited deceleration-based collision avoidable distance Δxbrklmt; wherein the region A6 is a region where the collision-avoidable limit distance is equal to or smaller than both the jerk-limited deceleration-based collision avoidable distance Δxbrklmt and the jerk-limited lateral-motion-based collision avoidable distance Δxstrlmt, and equal to or larger than both the deceleration-based collision-avoidable limit distance Δxbrk and the lateral-motion-based collision-avoidable limit distance Δxstr; wherein the region A7 is a region where the collision-avoidable limit distance is smaller than the deceleration-based collision-avoidable limit distance Δxbrk, equal to or smaller than the jerk-limited lateral-motion-based collision avoidable distance Δxstrlmt, and equal to or larger than the lateral-motion-based collision-avoidable limit distance Δxstr; wherein the region A8 is a region where the collision-avoidable limit distance is smaller than the lateral-motion-based collision-avoidable limit distance Δxstr, equal to or smaller than the jerk-limited deceleration-based collision avoidable distance Δxbrklmt, and equal to or larger than the deceleration-based collision-avoidable limit distance Δxbrk; wherein the region A9 is a region where the collision-avoidable limit distance is smaller than both the deceleration-based collision-avoidable limit distance Δxbrk and the lateral-motion-based collision-avoidable limit distance Δxstr; and wherein, preferably, the collision avoidance calculation means does not perform collision avoidance control if the collision-avoidable limit distance with respect to the relative velocity ΔV is included in the region A1, A2, A3, A4, or A5; wherein the collision avoidance calculation means decelerates the vehicle with the maximum possible acceleration |Gmax| on the road surface in the region A9; wherein the collision avoidance calculation means sets the deceleration such that the longitudinal jerk generated by deceleration-based collision avoidance movement becomes equal to or smaller than the maximum possible longitudinal jerk |Jxmax|, or the lateral acceleration such that the lateral jerk generated by lateral-motion-based collision avoidance movement becomes equal to or smaller than the maximum possible lateral jerk |Jymax| in the region A6; wherein the collision avoidance calculation means sets the lateral acceleration to the maximum lateral jerk |Jymax| or below in the region A7; and wherein the collision avoidance calculation means sets the deceleration to the maximum longitudinal jerk |Jxmax| or below in the region A8.

The present invention can reduce driver's uncomfortable feeling and improve the drivability while ensuring the collision avoidance performance during operation for avoiding contact with an object.


BRIEF DESCRIPTION OF THE DRAWINGS

Fig. 1 is a system block diagram showing the configuration of a forward collision avoidance assistance system according to a first embodiment.
Fig. 2 is a diagram showing the positional relation between a host vehicle and an object ahead of the host vehicle for explaining the calculation of the collision-avoidable limit distance and the jerk-limited collision avoidable distance between the host vehicle and the object in the forward collision avoidance assistance system according to the first embodiment.
Figs. 3A, 3B, and 3C are graphs respectively showing deceleration of the host vehicle, the relative velocity with respect to an object existing in the host vehicle traveling direction, and the host vehicle travel distance, for explaining the forward collision avoidance assistance system according to the first embodiment.
Fig. 4 is a graph showing the relation between the lateral-movement distance and the lateral-movement time of the host vehicle, for explaining the forward collision avoidance assistance system according to the first embodiment.
Fig. 5 is a graph showing the relation between the relative velocity with respect to an object existing in the host vehicle traveling direction and the collision-avoidable limit distance, for explaining the forward collision avoidance assistance system according to the first embodiment.
Fig. 6 is a graph showing the relation between the relative velocity and the collision-avoidable limit distance, for explaining the forward collision avoidance assistance system according to the first embodiment.
Fig. 7 is a graph showing the relation between the relative velocity and the collision-avoidable limit distance, for explaining the forward collision avoidance assistance system according to the first embodiment.

Fig. 8 is a flow chart showing the operation of the forward collision avoidance assistance system according to the first embodiment.

Fig. 9 is a diagram showing a collision risk area used by the forward collision avoidance assistance system according to the first embodiment.

Fig. 10 is a diagram showing a case where the offset amount ΔdR between a front left corner FL1 and a rear right corner RR2 becomes negative in control with the forward collision avoidance assistance system according to the first embodiment.

Fig. 11 is a flow chart showing calculations of a deceleration-based collision avoidance limit Δxbrk, a lateral-motion-based collision avoidance limit Δxstr, a jerk-limited deceleration-based collision avoidable distance Δxbrklmt, and a jerk-limited lateral-motion-based collision avoidable distance Δxstrlmt by the forward collision avoidance assistance system according to the first embodiment.

Figs. 12A and 12B are graphs showing calculation of a target longitudinal acceleration by the forward collision avoidance assistance system according to the first embodiment.

Figs. 13A, 13B, and 13C are graphs showing control with an upper-limit longitudinal jerk |Jxlmt| in target brake torque/warning operation 2 by the forward collision avoidance assistance system according to the first embodiment.

Figs. 14A, 14B, and 14C are graphs showing control with a maximum longitudinal jerk |Jxmax|.

Figs. 15A and 15B are graphs showing control in target brake torque/warning operation 3 by the forward collision avoidance assistance system according to the first embodiment.

Figs. 16A, 16B, and 16C are graphs showing another example of the maximum value of a longitudinal jerk |Jx| set with the forward collision avoidance assistance system according to the first embodiment.

Figs. 17A and 17B are graphs showing another example of the deceleration-based collision-avoidable limit distance Δxbrk and the jerk-limited deceleration-based collision avoidable distance Δxbrklmt used by the forward collision avoidance assistance system according to the first embodiment.

Fig. 18 is a system block diagram showing the configuration of a forward collision avoidance assistance system according to a second embodiment.

Fig. 19 is a flow chart showing the operation of the forward collision avoidance assistance system according to the second embodiment.

Figs. 20A, 20B, 20C, and 20D are graphs showing calculation of a target throttle valve opening angle in the forward collision avoidance assistance system according to the second embodiment.

Figs. 21A and 21B are graphs showing calculation of a target longitudinal acceleration in the forward collision avoidance assistance system according to the second embodiment.

Fig. 22 is a system block diagram showing the configuration of a forward collision avoidance assistance system according to a third embodiment.

Fig. 23 is a flow chart showing the operation of the forward collision avoidance assistance system according to the third embodiment.

Figs. 24A and 24B are graphs showing calculation of a target lateral acceleration in the forward collision avoidance assistance system according to the third embodiment.

Fig. 25 is a flow chart showing the operation of a forward collision avoidance assistance system according to a fourth embodiment.

Fig. 26 is a flow chart showing the operation of a forward collision avoidance assistance system according to a fifth embodiment.

DESCRIPTION OF THE PREFERRED EMBODIMENTS

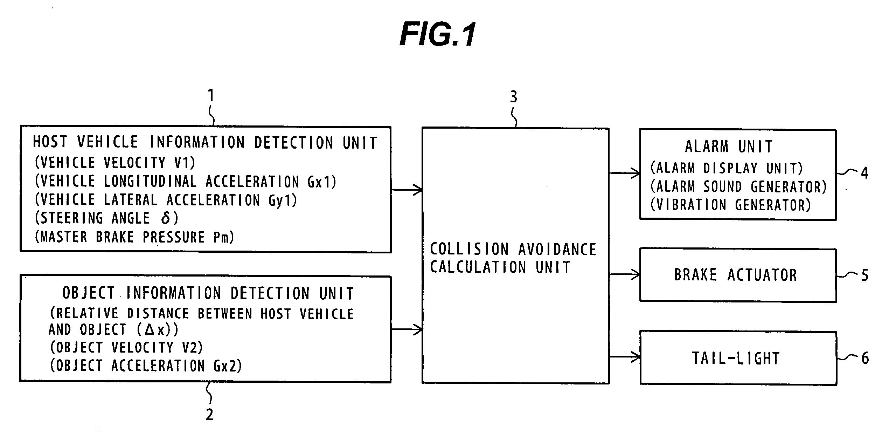

The configuration and operation of a forward collision avoidance assistance system according to a first embodiment are explained below with reference to Figs. 1 to 17.

First of all, the configuration of the forward collision avoidance assistance system according to the first embodiment is explained with reference to Fig. 1.

Fig. 1 is a system block diagram showing the configuration of the forward collision avoidance assistance system according to the first embodiment.

The forward collision avoidance assistance system of the present embodiment is to be mounted on a vehicle. The system comprises a host vehicle information detection unit 1 for obtaining the operating state of the host vehicle and the operational variables set by the driver; an object information detection unit 2 for detecting an object existing in the host vehicle traveling direction; a collision avoidance calculation unit 3 for calculating the risk level of the host vehicle colliding with the object and for giving commands to an alarm unit 4, a brake actuator 5, and a tail-light 6; the alarm unit 4 for warning the driver based on a command from the collision avoidance calculation unit 3; a brake actuator 5 for generating brake force for each tire; and a tail-light 6 (or a stop-light) for signaling the deceleration of the host vehicle to a following vehicle.

Input to the host vehicle information detection unit 1 are a steering angle $\delta$, a vehicle velocity V1_0, a vehicle longitudinal acceleration rate Gx1_0, a vehicle lateral acceleration rate Gy1_0, a master brake pressure Pm, etc. The vehicle velocity V1_0 can be estimated from tire speeds or can be directly measured using an external sensor or the like. The operational variables set by the driver are obtained with the use of a steering torque, a brake pedal stroke amount, or the like.

Input to the object information detection unit 2 are the relative distance between the host vehicle and the object existing in the host vehicle traveling direction (the distance represented by $\Delta x$), an object velocity V2_0, an object acceleration rate Gx2_0, the object width, and the offset amount between the center of the host vehicle and that of the object (the amount represented by $\Delta y$). Those variables can be calculated from continuous images obtained by a CCD imaging element or other imaging devices or can be detected with the use of a millimeter-wave radar, a laser radar, or the like.

The collision avoidance calculation unit 3 calculates a collision-avoidable limit distance and a jerk-limited collision avoidable distance based on the steering angle $\delta$, the vehicle velocity V1_0, the vehicle longitudinal acceleration rate Gx1_0, the vehicle lateral acceleration rate Gy1_0, and the master brake pressure Pm, all of which are obtained by the host vehicle information detection unit 1 and based on the relative distance $\Delta x0$ between the object and the host vehicle, the object velocity V2_0, and the object acceleration rate Gx2_0, all of which are obtained by the object information detection unit 2. Based on the collision-avoidable limit distance and the jerk-limited collision avoidable distance, the collision avoidance calculation unit 3 further calculates the risk of collision between the host vehicle and the object. The collision avoidance calculation unit 3 also calculates drive control variables for the alarm unit 4, the brake actuator 5, and the tail-light 6 based on the risk of collision.

In the present embodiment, the collision avoidability region of the host vehicle is divided into nine regions based on the collision-avoidable limit distance and the jerk-limited collision avoidable distance in relation to the relative velocity between the host vehicle and the object. The collision avoidance calculation unit 3 determines a collision avoidability region the host vehicle is in based on a calculated collision-avoidable limit distance and jerk-limited collision avoidable distance and performs collision avoidance control suitable for that region.

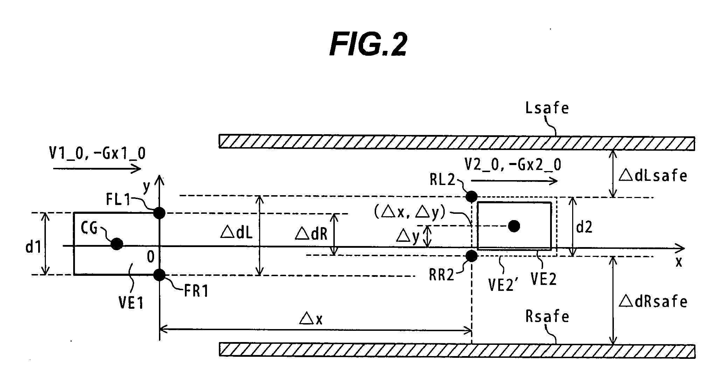

The calculations of a collision-avoidable limit distance $\Delta xctl2$ and a jerk-limited collision avoidable distance $\Delta xctl1$ are explained below with reference to Figs. 2 to 17.

As explained below, the collision-avoidable limit distance $\Delta xctl2$ is obtained from a deceleration-based collision-avoidable limit distance $\Delta xbrk$ and a lateral-motion-based collision-avoidable limit distance $\Delta xstr$ in relation to a relative velocity $\Delta V0$. The jerk-limited collision avoidable distance $\Delta xctl1$ is obtained from a jerk-limited deceleration-based collision avoidable distance $\Delta xbrklmt$ and a jerk-limited lateral-motion-based collision avoidable distance $\Delta xstrlmt$ in relation to the relative velocity $\Delta V0$.

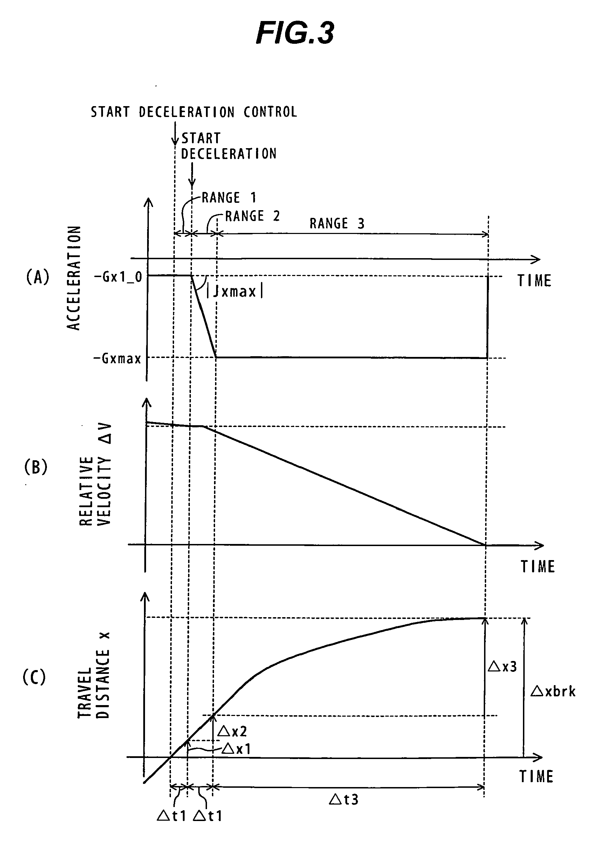

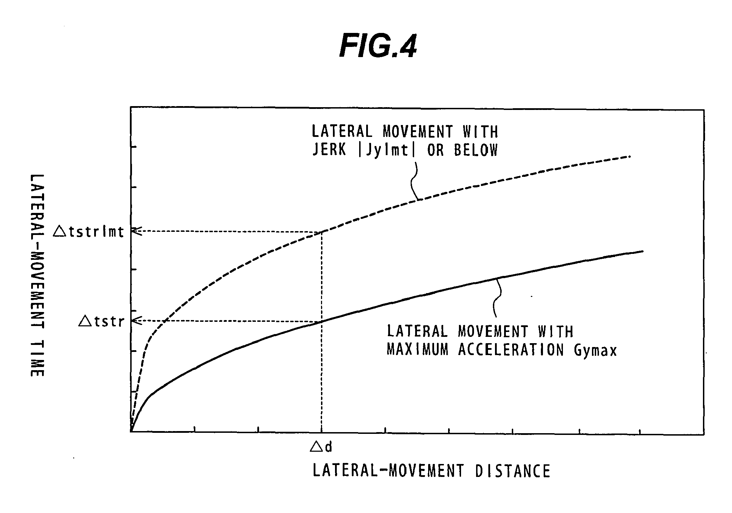

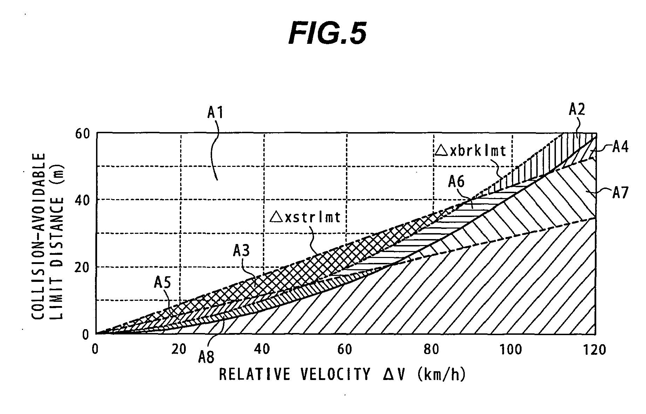

Fig. 2 is a diagram of the positional relation between the host vehicle and an object ahead of the vehicle, explaining the calculations of the collision-avoidable limit distance and the jerk-limited collision avoidable distance between them, which calculations are performed by the forward collision avoidance assistance system according to the first embodiment. Figs. 3A, 3B, and 3C are graphs respectively showing the deceleration of the host vehicle, the relative velocity between the host vehicle and the object existing in the host vehicle traveling direction, and the travel distance of the host vehicle for explaining the forward collision avoidance assistance system according to the first embodiment. Fig. 4 is a graph showing the relation between the lateral-movement distance and the lateral-movement duration of the host vehicle for explaining the forward collision avoidance assistance system according to the first embodiment. Fig. 5 is a graph showing the relation between the relative velocity between the host vehicle and the object existing in the host vehicle traveling direction and the collision-avoidable limit distance for explaining the forward collision avoidance assistance system according to the first embodiment.

As shown in Fig. 2, assume that an object VE2 exists ahead of a host vehicle VE1. The host vehicle VE1 is moving at the vehicle velocity V1_0 and a vehicle longitudinal acceleration rate -Gx1_0, and the object is moving at the vehicle velocity V2_0 and a vehicle longitudinal acceleration rate -Gx2_0. Further assume that the midpoint between the front right corner FR1 and the front left corner FLl of the host vehicle VE1 is the origin. The forward direction of the host vehicle VE1 is the x direction, the direction perpendicularly intersecting the x direction is the y direction, and the traveling direction of the host vehicle VE1 and the left direction with respect to the traveling direction are positive. A collision risk area VE2' is an area formed by expanding the object VE2 laterally and longitudinally. As shown in Fig. 2, d1 denotes the y-directional width of the host vehicle VE1, d2 denotes the y-directional width of the collision risk area VE2', and ($\Delta x$, Ay) denotes the coordinates of the midpoint between the rear left corner RL2 and the rear right corner RR2 of the collision risk area VE2'. Ay denotes the y-directional offset amount of the midpoint of the collision risk area VE2' with respect to the midpoint of the host vehicle VE1. If the midpoint of the collision risk area VE2' exists to the right of the midpoint of the host vehicle VE1 with respect to its traveling direction, the y-directional offset amount $\Delta y$ becomes negative; if the midpoint of the collision risk area VE2' exists to the left of the midpoint of the host vehicle VE1, the y-directional offset amount $\Delta y$ becomes positive.

The offset amount ΔdR between the front left corner FL1 and the rear right corner RR2 and the offset amount ΔdL between the front right corner FR1 and the rear left corner RL2 are represented by the following Formulas (1) and (2), respectively.

[Formula 1]

$$\Delta dR = \frac{d_1}{2} + \frac{d_2}{2} - \Delta y \qquad \ldots \ldots (1)$$

[Formula 2]

$$\Delta dL = \frac{d_1}{2} + \frac{d_2}{2} + \Delta y \qquad \ldots \ldots (2)$$

Further, the relative velocity ΔV0 and the relative acceleration ΔGx0 between the host vehicle VE1 and the object VE2 are represented by the following Formulas (3) and (4), respectively.

[Formula 3]

$$\Delta V0 = V1\_0 - V2\_0 \qquad \ldots \ldots (3)$$

[Formula 4]

$$\Delta Gx0 = (-Gx1\_0) - (-Gx2\_0) \qquad \ldots \ldots (4)$$

Here, V1_0 denotes the velocity of the host vehicle VE1, and V2_0 the velocity of the object VE2. (-Gx1_0) denotes the acceleration of the host vehicle VE1, and (-Gx2_0) the acceleration of the object VE2.

If the relative velocity ΔV0 is positive and both the offset amounts ΔdR and ΔdL are positive, the host vehicle VE1 might collide with the object VE2. Methods for avoiding this collision include deceleration-based collision avoidance and lateral-motion-based collision avoidance.

First of all, the deceleration-based collision avoidance is explained below with reference to Figs. 3A to 3C.

Fig. 3A shows the acceleration (-Gx1_0) of the host vehicle VE1, Fig. 3B shows the relative velocity ΔV0 between the host vehicle VE1 and the object VE2, and Fig. 3C shows the relative distance x between the host vehicle VE1 and the object VE2. The horizontal axis of Figs. 3A to 3C denotes time t.

When the host vehicle VE1 decelerates from the acceleration -Gx1_0 to a maximum possible deceleration -Gxmax of the host vehicle VE1 as shown in Fig. 3A and then travels until the relative velocity ΔV becomes zero as shown in Fig. 3B, the travel distance shown in Fig. 3C reaches the deceleration-based collision-avoidable limit distance Δxbrk, i.e., a physical limit distance above which collision cannot be avoided by deceleration.

Referring to Fig. 3A, |Jxmax| denotes a maximum possible longitudinal jerk of the host vehicle VE1. A range 1 denotes the dead time Δt1 ranging from the start of deceleration control to the start of the deceleration control taking effect. A range 2 denotes the time Δt2 ranging from the start of the host vehicle VE1 decelerating at the maximum longitudinal jerk |Jxmax| to the deceleration rate reaching the maximum deceleration -Gxmax. Further, a range 3 denotes the time Δt3 ranging from the deceleration rate reaching the maximum deceleration -Gxmax to the relative velocity ΔV becoming zero.

Provided that the object VE2 continues moving at the acceleration -Gx2_0, a relative velocity ΔV1 and a travel distance Δx1 during the time Δt1 after the start of the deceleration control are represented by the following Formulas (5) and (6), respectively.

[Formula 5]

$$\Delta V1 = \Delta V0 + \Delta Gx0 \cdot t1 \qquad \ldots \ldots (5)$$

[Formula 6]

$$\Delta x1 = \Delta V0 \cdot t1 + \frac{1}{2}\Delta Gx0 \cdot t1^2 \qquad \ldots \ldots (6)$$

Likewise, in the range 2, a relative velocity $\Delta V2$ and a travel distance $\Delta x2$ during the time $\Delta t2$ are represented by the following Formulas (7) and (8), respectively.

[Formula 7]

$$\Delta V2 = \Delta V1 - \frac{1}{2 \cdot |Jxmax|}(Gxmax - Gx1\_0) \cdot (Gxmax + Gx1\_0 - 2 \cdot Gx2\_0) \qquad \ldots \ldots (7)$$

[Formula 8]

$$\Delta x2 = \left(\frac{Gxmax - Gx1\_0}{|Jxmax|}\right) \cdot \left(-\frac{1}{6} \cdot |Jxmax| \cdot \left(\frac{Gxmax - Gx1\_0}{|Jxmax|}\right)^2 + \frac{1}{2} \cdot \Delta Gx0 \cdot \left(\frac{Gxmax - Gx1\_0}{|Jxmax|}\right) + \Delta V1\right)$$

$$\ldots \ldots (8)$$

Likewise, in the range 3, a distance $\Delta x3$ that the vehicle travels during the time $\Delta t3$ is represented by the following Formula (9).

[Formula 9]

$$\Delta x3 = \frac{1}{2} \cdot \left(\frac{\Delta V2^2}{Gxmax}\right) \qquad \ldots \ldots (9)$$

The deceleration-based collision-avoidable limit distance $\Delta xbrk$ shown in Fig. 3C is thus given by the sum of the obtained distances $\Delta x1$, $\Delta x2$, and $\Delta x3$, as shown by the following Formula (10).

[Formula 10]

$$\Delta xbrk = \Delta x1 + \Delta x2 + \Delta x3 \qquad \ldots \ldots (10)$$

If the distance $\Delta x$ between the host vehicle VE1 and the object VE2 in Fig. 2 is larger than the deceleration-based collision-avoidable limit distance $\Delta xbrk$, collision can be avoided through deceleration.

The lateral-motion-based collision avoidance is now explained with reference to Fig. 4.

Assume that a steering operation is performed for the host vehicle VE1 to move laterally, thereby avoiding the host vehicle VE1 from colliding with the object VE2. If a right-hand side safe area $\Delta$dRsafe or a left-hand side safe area $\Delta$dLsafe of the collision risk area VE2' is larger than the width d1 of the host vehicle VE1, collision can be avoided by moving the host vehicle by an offset amount $\Delta$dR to the right with respect to the traveling direction of the host vehicle VE1 or by an offset amount $\Delta$dL to the left with respect to the traveling direction of the host vehicle VE1, as shown in Fig. 2.

Here, if both the right-hand side safe area $\Delta$dRsafe and the left-hand side safe area $\Delta$dLsafe are larger than the width d1 of the host vehicle VE1 and collision can thus be avoided, the host vehicle VE1 moves toward the direction of a smaller offset amount, $\Delta$dR or $\Delta$dL, to avoid collision. For example, if the offset amount $\Delta$dR is smaller than the offset amount $\Delta$dL, the host vehicle VE1 moves to the right with respect to the traveling direction.

Here, $\Delta$tstr denotes the time necessary for the host vehicle VE1 to move by an offset amount $\Delta$d at a maximum possible lateral acceleration Gymax. Fig. 4 shows the relation between the time $\Delta$tstr taken for the movement and the lateral-movement distance $\Delta$d when the right-hand side safe area $\Delta$dRsafe is sufficiently larger than the offset amount $\Delta$dR.

In this case, the distance the host vehicle VE1 travels during the time $\Delta$tstr is a lateral-motion-based collision-avoidable limit distance $\Delta$xstr, i.e., collision avoidable limit distance by lateral movement. The lateral-motion-based collision-avoidable limit distance $\Delta$xstr is represented by the following Formula (11).

[Formula 11]

$$\Delta xstr = \tfrac{1}{2}\Delta Gx0 \cdot \Delta tstr^2 + \Delta V0 \cdot \Delta tstr \qquad \ldots \ldots (11)$$

In this way, the deceleration-based collision-avoidable limit distance $\Delta$xbrk in relation to the relative velocity $\Delta$V0 (Formula 10) and the lateral-motion-based collision-avoidable limit distance $\Delta$xstr in relation to the relative velocity $\Delta$V0 (Formula 11) can be calculated. Further, a collision-avoidable limit distance $\Delta$xctl2 can be calculated from these distances as mentioned later.

Then, a case where a jerk |Jx| generated in the host vehicle VE1 is limited to an upper-limit longitudinal jerk |Jxlmt| to avoid collision with the object VE2 is explained below.

First, deceleration-based collision avoidance is explained.

In the deceleration-based collision avoidance, when |Jxlmt| denotes the upper-limit of a longitudinal jerk generated on the host vehicle VE1 after deceleration control is started, when the maximum longitudinal jerk |Jxmax| of Formulas (5) to (7) is replaced with the upper-limit longitudinal jerk |Jxlmt|, a relative velocity $\Delta$V2lmt and a travel distance $\Delta$x2lmt in the time $\Delta$2, and a travel distance $\Delta$x3lmt in the time $\Delta$3 are represented by the following Formulas (12), (13), and (14), respectively.

[Formula 12]

$$\Delta V2lmt = \Delta V1 - \frac{1}{2 \cdot |Jxlmt|}(Gxmax - Gx1\_0) \cdot (Gxmax + Gx1\_0 - 2 \cdot Gx2\_0) \qquad \ldots \ldots (12)$$

[Formula 13]

$$\Delta x2lmt = \left(\frac{Gxmax - Gx1\_0}{|Jxlmt|}\right) \cdot \left(-\frac{1}{6} \cdot |Jxlmt| \cdot \left(\frac{Gxmax - Gx1\_0}{|Jxlmt|}\right)^2 + \frac{1}{2} \cdot \Delta Gx0 \cdot \left(\frac{Gxmax - Gx1\_0}{|Jxlmt|}\right) + \Delta V1\right)$$

$$\ldots \ldots (13)$$

[Formula 14]

$$\Delta x3lmt = \frac{1}{2} \cdot \left( \frac{\Delta V2lmt^2}{Gxmax} \right) \qquad \ldots\ldots (14)$$

Thus, a jerk-limited deceleration-based collision avoidable distance $\Delta$xbrklmt in which a jerk generated during deceleration is limited is represented by the following Formula (15) from the obtained travel distances $\Delta$x2lmt and $\Delta$x3lmt.

[Formula 15]

$$\Delta xbrklmt = \Delta xl + \Delta x2lmt + \Delta x3lmt \qquad \ldots\ldots (15)$$

Lateral-motion-based collision avoidance is explained below.

In the lateral-motion-based collision avoidance, when $\Delta$tstrlmt denotes the time taken to laterally move the distance $\Delta$d so that the upper-limit of the lateral jerk generated on the host vehicle VE1 becomes |Jylmt|, the relation between the time $\Delta$tstrlmt taken for movement and the lateral-movement distance $\Delta$d is given as in Fig. 4.

In this case, the distance that the host vehicle VE1 travels during the time $\Delta$tstrlmt taken for movement with a limited lateral-motion-based jerk, i.e., a jerk-limited lateral-motion-based collision avoidable distance $\Delta$xstrlmt, is represented by the following Formula (16).

[Formula 16]

$$\Delta xstrlmt = \frac{1}{2}\Delta Gx0 \cdot \Delta tstrlmt^2 + \Delta V0 \cdot \Delta tstrlmt \qquad \ldots\ldots (16)$$

In this way, the jerk-limited deceleration-based collision avoidable distance $\Delta$xbrklmt (Formula 15) and the jerk-limited lateral-motion-based collision avoidable distance $\Delta$xstrlmt (Formula 16) with respect to the relative velocity $\Delta$V0 can be calculated. As mentioned later, the jerk-limited collision avoidable distance $\Delta$xctl1 is obtained from these values.

The deceleration-based collision-avoidable limit distance $\Delta$xbrk, the lateral-motion-based collision-avoidable limit distance $\Delta$xstr, the jerk-limited deceleration-based collision avoidable distance $\Delta$xbrklmt, and the jerk-limited lateral-motion-based collision avoidable distance $\Delta$xstrlmt with respect to the relative velocity $\Delta$V0, respectively calculated by Formulas (10), (11), (15), and (16), are explained below with reference to Fig. 5.

Fig. 5 is a graph showing a calculation result obtained with the following conditions: d1=2m, d2=3m, $\Delta$y=1m, Gx1_0=Gx2_0=0, t1=0s, Maximum longitudinal acceleration Gxmax = Maximum lateral acceleration Gymax = 9.8 m/s2, Maximum longitudinal jerk |Jxmax| = 100 m/s3, and Upper-limit longitudinal jerk |Jxlmt| = Upper-limit lateral jerk |Jylmt| = 15 m/s3 in Fig. 2.

Fig. 5 shows the relation among the deceleration-based collision-avoidable limit distance $\Delta$xbrk, the lateral-motion-based collision-avoidable limit distance $\Delta$xstr, the jerk-limited deceleration-based collision avoidable distance $\Delta$xbrklmt, and the jerk-limited lateral-motion-based collision avoidable distance $\Delta$xstrlmt. Over the entire relative velocity range, the jerk-limited deceleration-based collision avoidable distance $\Delta$xbrklmt is equal to or larger than the deceleration-based collision-avoidable limit distance $\Delta$xbrk, and the jerk-limited lateral-motion-based collision avoidable distance $\Delta$xstrlmt is equal to or larger than the lateral-motion-based collision-avoidable limit distance $\Delta$xstr. The nine regions A1 to A9 are created in terms of the deceleration-based collision-avoidable limit distance $\Delta$xbrk, the lateral-motion-based collision-avoidable limit distance $\Delta$xstr, the jerk-limited deceleration-based collision avoidable distance $\Delta$xbrklmt, and the jerk-limited lateral-motion-based collision avoidable distance $\Delta$xstrlmt.

Details of each of the nine regions A1 to A9 are be explained below.

- Region A1:
  Both deceleration-based collision avoidance and lateral-motion-based collision avoidance are possible.
- Region A2:
  Both deceleration-based collision avoidance and lateral-motion-based collision avoidance are possible. However, in the case of deceleration-based collision avoidance, the longitudinal jerk generated is equal to or larger than the upper-limit longitudinal jerk |Jxlmt|. With lateral-motion-based collision avoidance, on the other hand, collision can be avoided with a lateral jerk smaller than the upper-limit lateral jerk |Jylmt|.

- Region A3:

Both deceleration-based collision avoidance and lateral-motion-based collision avoidance are possible. However, with lateral-motion-based collision avoidance, the lateral jerk generated is equal to or larger than the upper-limit lateral jerk |Jylmt|. With deceleration-based collision avoidance, on the other hand, collision can be avoided with a longitudinal jerk smaller than the upper-limit longitudinal jerk |Jxlmt|.

- Region A4:

Lateral-motion-based collision avoidance is possible, but deceleration-based collision avoidance is impossible. With lateral-motion-based collision avoidance, collision can be avoided with a lateral jerk smaller than the upper-limit lateral jerk |Jylmt|.

- Region A5:

Deceleration-based collision avoidance is possible, but lateral-motion-based collision avoidance is impossible. With deceleration-based collision avoidance, collision can be avoided with a longitudinal jerk smaller than the upper-limit longitudinal jerk lJxlmt|.

- Region A6:

Both deceleration-based collision avoidance and lateral-motion-based collision avoidance are possible. However, with lateral-motion-based collision avoidance, the lateral jerk generated is equal to or larger than the upper-limit lateral jerk |Jylmt|. Also with deceleration-based collision avoidance, the longitudinal jerk is equal to or larger than the upper-limit longitudinal jerk |Jxlmt|.

- Region A7:

Lateral-motion-based collision avoidance is possible, but deceleration-based collision avoidance is impossible. With lateral-motion-based collision avoidance, the lateral jerk generated is equal to or larger than the upper-limit lateral jerk |Jylmt|.

- Region A8:

Deceleration-based collision avoidance is possible, but lateral-motion-based collision avoidance is impossible. With deceleration-based collision avoidance, the longitudinal jerk generated is equal to or larger than the upper-limit longitudinal jerk |Jxlmt|.

- Region A9:

Neither deceleration-based collision avoidance nor lateral-motion-based collision avoidance is possible.

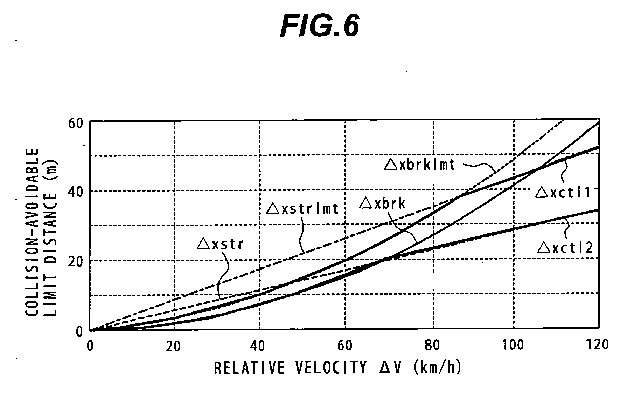

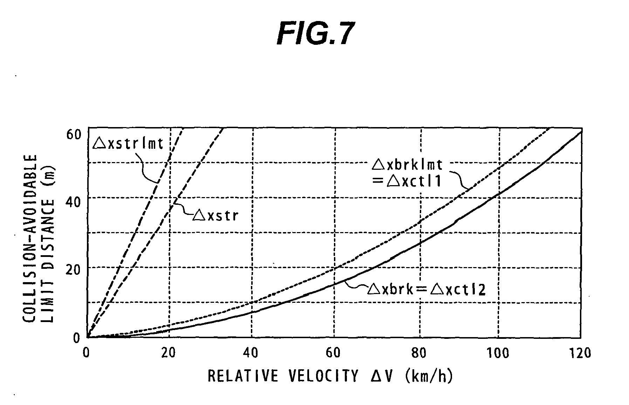

The jerk-limited collision avoidable distance $\Delta$xctl1 and the collision-avoidable limit distance $\Delta$xctl2 are explained below with reference to Figs. 6 and 7.

Figs. 6 and 7 are graphs showing the relation between the relative velocity and the collision-avoidable limit distance, for explaining the forward collision avoidance assistance system according to the first embodiment.

As shown in Fig. 5, nine regions are created in terms of the deceleration-based collision-avoidable limit distance $\Delta$xbrk, the lateral-motion-based collision-avoidable limit distance $\Delta$xstr, the jerk-limited deceleration-based collision avoidable distance $\Delta$xbrklmt, and the jerk-limited lateral-motion-based collision avoidable distance $\Delta$xstrlmt.

In five regions A1 to A5 out of the nine regions, collision can be avoided with the longitudinal jerk |Jx| or the lateral jerk |Jy| generated which is smaller than the upper-limit longitudinal jerk |Jxlmt| or the upper-limit lateral jerk |Jylmt|, respectively. In these regions, the possibility that the driver performs avoidance operation is high. In the regions A1 to A5, therefore, it is not necessary to perform warning for collision avoidance or deceleration control for collision avoidance.

In the regions A6 to A8, collision can be avoided with the longitudinal jerk |Jx| or the lateral jerk |Jy| generated which is equal to or larger than the upper-limit longitudinal jerk |Jxlmt| or the upper-limit lateral jerk |Jylmt|, respectively. Specifically in these regions, avoidance of an object is difficult unless operation is performed with a larger longitudinal or lateral jerk than normal driving. Therefore, in these regions, the driver does not recognize the object and therefore the possibility that the driver performs avoidance operation is low. A boundary between the regions A1 to A5 and the regions A6 to A8 is defined as the jerk-limited collision avoidable distance $\Delta$xctl1 at which a warning for collision avoidance and deceleration control for collision avoidance are started. The region A9 is a region where collision cannot be avoided. A boundary between the regions A6 to A8 and the region A9 is defined as the collision-avoidable limit distance $\Delta$xctl2.

Here, the jerk-limited collision avoidable distance $\Delta$xctl1 is either the jerk-limited deceleration-based collision avoidable distance $\Delta$xbrklmt or the jerk-limited lateral-motion-based collision avoidable distance $\Delta$xstrlmt, whichever smaller. The collision-avoidable limit distance $\Delta$xctl2 is either the deceleration-based collision-avoidable limit distance $\Delta$xbrk or the lateral-motion-based collision-avoidable limit distance $\Delta$xstr, whichever smaller.

Fig. 6 shows the jerk-limited deceleration-based collision avoidable distance $\Delta$xbrklmt, the jerk-limited lateral-motion-based collision avoidable distance $\Delta$xstrlmt, the deceleration-based collision-avoidable limit distance $\Delta$xbrk, and

the lateral-motion-based collision-avoidable limit distance $\Delta xstr$ shown in Fig. 5.

As shown in Fig. 6, over a small relative velocity range, the jerk-limited deceleration-based collision avoidable distance $\Delta xbrklmt$ equals the jerk-limited collision avoidable distance $\Delta xctl1$, and the deceleration-based collision-avoidable limit distance $\Delta xbrk$ equals the collision-avoidable limit distance $\Delta xctl2$; over a large relative velocity range, the jerk-limited lateral-motion-based collision avoidable distance $\Delta xstrlmt$ equals the jerk-limited collision avoidable distance $\Delta xctl1$, and the lateral-motion-based collision-avoidable limit distance $\Delta xstr$ equals the collision-avoidable limit distance $\Delta xctl2$.

The jerk-limited collision avoidable distance $\Delta xctl1$ and the collision-avoidable limit distance $\Delta xctl2$ when lateral-motion-based collision avoidance is impossible are explained below with reference to Fig. 7. Fig. 7 shows the deceleration-based collision-avoidable limit distance $\Delta xbrk$, the lateral-motion-based collision-avoidable limit distance $\Delta xstr$, the jerk-limited deceleration-based collision avoidable distance $\Delta xbrklmt$, and the jerk-limited lateral-motion-based collision avoidable distance $\Delta xstrlmt$ shown in Fig. 5. However, since lateral-motion-based collision avoidance is difficult, the lateral-motion-based collision-avoidable limit distance $\Delta xstr$ and the jerk-limited lateral-motion-based collision avoidable distance $\Delta xstrlmt$ are larger than the deceleration-based collision-avoidable limit distance $\Delta xbrk$ and jerk-limited deceleration-based collision avoidable distance $\Delta xbrklmt$, respectively.

Therefore, over a wide relative velocity range, the jerk-limited deceleration-based collision avoidable distance $\Delta xbrklmt$ equals the jerk-limited collision avoidable distance $\Delta xctl1$, and the deceleration-based collision-avoidable limit distance $\Delta xbrk$ equals the collision-avoidable limit distance $\Delta xctl2$.

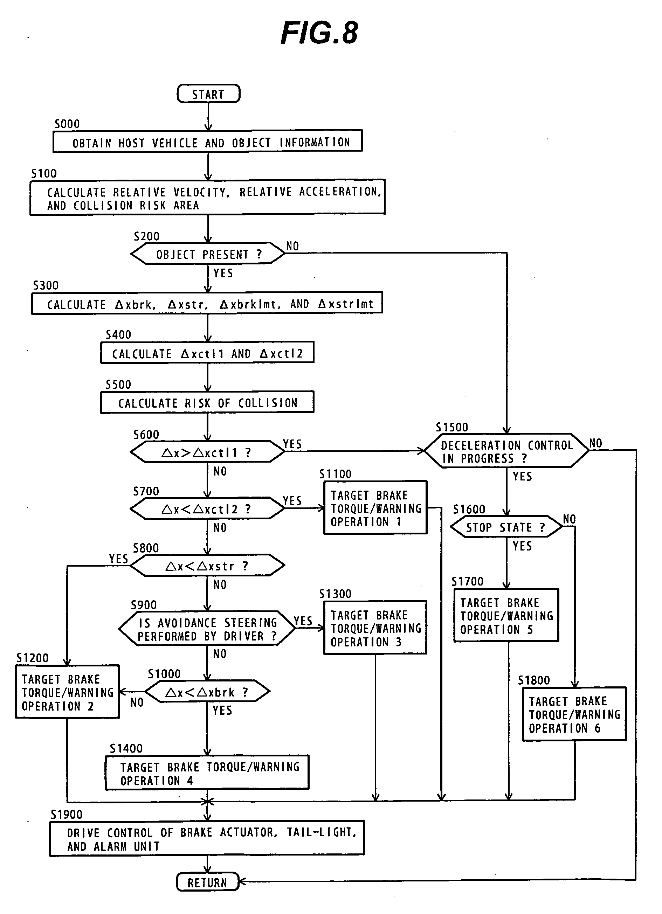

Detailed control of collision avoidance support through deceleration control by the forward collision avoidance assistance system according to the first embodiment is explained below with reference to Figs. 8 to 17.

First of all, the overall operation of the forward collision avoidance assistance system according to the present embodiment is explained with reference to Fig. 8.

Fig. 8 is a flow chart showing the operation of the forward collision avoidance assistance system according to the first embodiment.

Fig. 8 shows calculations in the collision avoidance calculation unit 3 shown in Fig. 1.

In Step S000, the collision avoidance calculation unit 3 obtains host vehicle information and object information. As host vehicle information, the collision avoidance calculation unit 3 inputs the vehicle velocity $V1\_0$, the vehicle longitudinal acceleration rate $Gx1\_0$, the vehicle lateral acceleration rate $Gy1\_0$, the steering angle $\delta$, and the master cylinder pressure Pm from the host vehicle information detection unit 1 shown in Fig. 1. The collision avoidance calculation unit 3 may input the yaw rate r and the lateral moving velocity $Vy1\_0$ in addition to the vehicle velocity $V1\_0$, the vehicle longitudinal acceleration rate $Gx1\_0$, the vehicle lateral acceleration rate $Gy1\_0$, the steering angle $\delta$, and master cylinder pressure Pm. As object information, the collision avoidance calculation unit 3 inputs the relative distance between the host vehicle and the object ($\Delta x$), the object velocity $V2\_0$, the object acceleration rate $Gx2\_0$, the object width, and the offset amount $\Delta y$ from the object information detection unit 2 shown in Fig. 1.

In Step S100, the collision avoidance calculation unit 3 calculates the relative velocity $\Delta V0$ between the host vehicle and the object and the relative acceleration $\Delta Gx0$ using Formulas (3) and (4), respectively. The collision avoidance calculation unit 3 also calculates the collision risk area VE2', the relative distance $\Delta x$, and the offset amount Ay based on the object information.

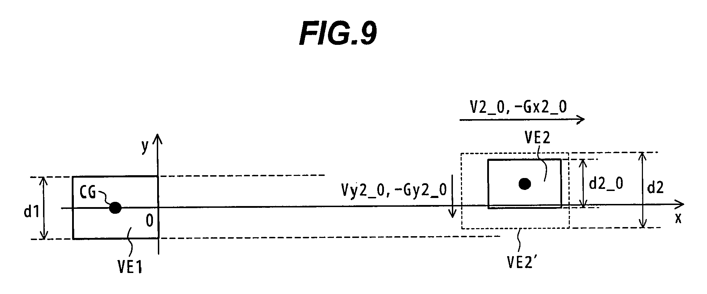

The collision risk area VE2' used by the forward collision avoidance assistance system according to the present embodiment is explained below with reference to Fig. 9.

Fig. 9 is a diagram showing a collision risk area used with the forward collision avoidance assistance system according to the first embodiment.

As shown in Fig. 9, the collision risk area VE2' is formed by adding a certain quantity to the width $d2\_0$ of the object VE2. When the object VE2 is laterally moving at a velocity $Vy2\_0$ and the lateral acceleration $Gy2\_0$, it is possible to make setting so as to enlarge the collision risk area VE2' in the traveling direction.

Then, a certain offset amount $\Delta y$ is added to the rear end position of the object VE2 to enlarge the collision risk area VE2' in the rear direction.

If the object VE2 has an acceleration, it is possible to correct the collision risk area VE2' based on the magnitude of the acceleration. For example, if the object VE2 has the longitudinal acceleration $-Gx2\_0$ (deceleration), it is possible to make setting so as to enlarge the collision risk area VE2' in the rear direction of the object VE2.

It is also possible to correct the collision risk area VE2' based on the measurement error accuracy of the object VE2, and the uncertainty and reliability of detectors. For example, an image pickup device like a CCD image pickup element has a tendency to have a larger measurement error with a farther relative position. Therefore, in areas where the relative position is distant, it is possible to make setting so as to enlarge the collision risk area VE2'.

The collision avoidance calculation unit 3 calculates the relative distance between the collision risk area VE2' and the host vehicle ($\Delta x$) and the offset amount between the center of the host vehicle and the center of the collision risk area VE2' ($\Delta y$).

The collision avoidance calculation unit 3 may input the relative velocity $\Delta V0$, the relative acceleration $\Delta Gx0$,

the relative distance Ax, and the offset amount Ay as object information.

In Step S200 of Fig. 8, the collision avoidance calculation unit 3 determines whether or not an object is present depending on the possibility of collision between the host vehicle VE1 and the collision risk area VE2'. As a method for determining whether or not an object is present, if object information acquisition means does not detect any object, the collision avoidance calculation unit 3 determines that no object exists. Even if an object has been detected, if the relative velocity $\Delta V0$ represented by Formula (3) is negative, the possibility of collision with an object is low and therefore the collision avoidance calculation unit 3 determines that no object exists.

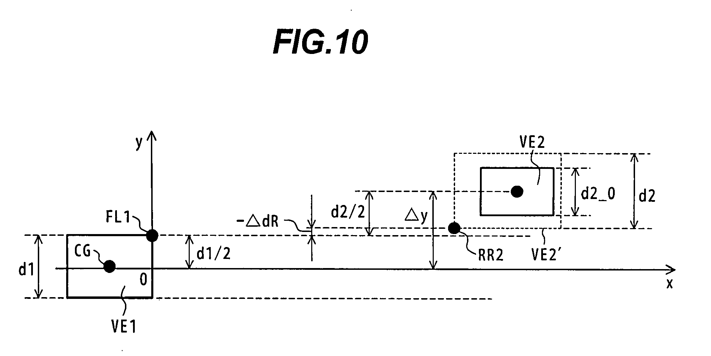

A case where the offset amount $\Delta dR$ between the front left corner FLI and the rear right corner RR2 becomes negative in control with the forward collision avoidance assistance system according to the present embodiment is explained below with reference to Fig. 10.

Fig. 10 is a diagram showing a case where the offset amount $\Delta dR$ between the front left corner FLI and the rear right corner RR2 becomes negative in control with the forward collision avoidance assistance system according to the first embodiment.

Specifically, if the offset amount $\Delta dR$ between the front left corner FLI and the rear right corner RR2 represented by the Formula (1) becomes negative, as shown in Fig. 10, the possibility of collision is low and therefore the collision avoidance calculation unit 3 determines that no object exists. Likewise, if the offset amount $\Delta dL$ between the front right corner FR1 and the rear right corner RL2 represented by Formula (2) becomes negative, the possibility of collision is low and therefore the collision avoidance calculation unit 3 determines that no object exists. If the vehicle velocity of the host vehicle is zero (stop state), the possibility of collision with an object is low and therefore the collision avoidance calculation unit 3 determines that no object exists.

In Step S200 of Fig. 8, if the collision avoidance calculation unit 3 determines that no object exists, processing proceeds to Step S1500; when it determines that there is an object, processing proceeds to Step S300.

In Step S300, the collision avoidance calculation unit 3 calculates the deceleration-based collision avoidance limit $\Delta xbrk$, the lateral-motion-based collision avoidance limit $\Delta xstr$, the jerk-limited deceleration-based collision avoidable distance $\Delta xbrklmt$, and the jerk-limited lateral-motion-based collision avoidable distance $\Delta xstrlmt$.

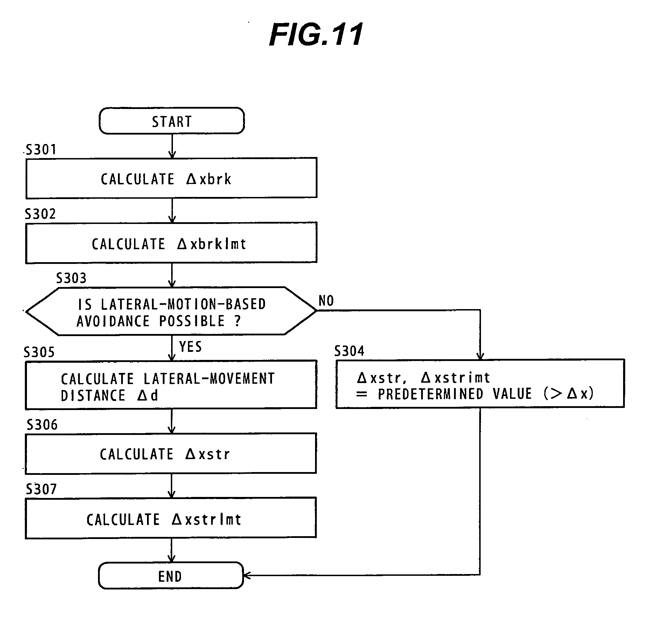

Calculations of the deceleration-based collision avoidance limit $\Delta xbrk$, the lateral-motion-based collision avoidance limit $\Delta xstr$, the jerk-limited deceleration-based collision avoidable distance $\Delta xbrklmt$, and the jerk-limited lateral-motion-based collision avoidable distance $\Delta xstrlmt$ by the forward collision avoidance assistance system according to the present embodiment are explained below with reference to Fig. 11.

Fig. 11 is a flow chart showing calculations of the deceleration-based collision avoidance limit $\Delta xbrk$, the lateral-motion-based collision avoidance limit $\Delta xstr$, the jerk-limited deceleration-based collision avoidable distance $\Delta xbrklmt$, and the jerk-limited lateral-motion-based collision avoidable distance $\Delta xstrlmt$ by the forward collision avoidance assistance system according to the first embodiment.

In Step S301 of Fig. 11, the collision avoidance calculation unit 3 calculates the deceleration-based collision avoidance limit $\Delta xbrk$ using the above-mentioned Formulas (3) to (10).

In the calculation of the deceleration-based collision avoidance limit $\Delta xbrk$, the maximum possible deceleration $-Gxmax$ on the road surface on which the host vehicle is traveling is assumed to be the maximum deceleration value that can be generated on the host vehicle on a dry road surface, i.e., the maximum possible deceleration $-Gxmax$ on a dry road surface.

If the system includes maximum acceleration presumption means for presuming the maximum possible acceleration $|Gmax|$ on the vehicle based on the state of the road surface on which the host vehicle is traveling, it is possible to create the maximum deceleration $-Gxmax$ assuming the maximum acceleration $|Gmax|$ obtained by the maximum acceleration presumption means as Gxmax. The maximum acceleration presumption means may be a method for presuming the maximum acceleration based on the road surface information obtained through communications between vehicles and between the road and the host vehicle, a method for presuming the maximum acceleration based on the operating state of the wiper of the host vehicle, or a method for presuming the maximum acceleration based on tire speed change of the host vehicle. The maximum acceleration presumption means can presume the road surface friction coefficient as road surface information based on tire speed change of the host vehicle, i.e., the brake force generated at each tire by the brake force control means.

If the system includes the maximum acceleration presumption means, the deceleration-based collision avoidance limit $\Delta xbrk$ can be presumed with higher accuracy. Further, the maximum acceleration $|Gmax|$ presumption means may be a method for presuming the maximum acceleration based on the longitudinal acceleration, the brake torque, and the tire speed generated on the vehicle, or a method for presuming the maximum acceleration based on the lateral acceleration, the tire skid angle, and the tire speed generated on the vehicle.

In the calculation of the deceleration-based collision avoidance limit $\Delta xbrk$, the maximum longitudinal jerk $|Jxmax|$ may be the absolute value of a value obtained by dividing the maximum deceleration $-Gxmax$ by the time since deceleration is generated by the brake actuator used until the maximum deceleration $-Gxmax$ is generated. Further, the maximum value of the possible longitudinal jerk by the brake actuator used may be used as the maximum longitudinal jerk |Jxmax|.

After calculation of the deceleration-based collision avoidance limit $\Delta$xbrk in Step S301, processing proceeds to Step S302.

In Step S302, the collision avoidance calculation unit 3 calculates the jerk-limited deceleration-based collision avoidable distance $\Delta$xbrklmt using Formulas (3) to (6) and Formulas (12) to (14).

In the calculation of the jerk-limited deceleration-based collision avoidable distance $\Delta$xbrklmt, the upper-limit of the longitudinal jerk |Jxlmt| to be generated is preset to a value that applies neither intensive uncomfortable feeling nor a sudden posture change to a common driver.

Since a desirable value of the upper-limit longitudinal jerk |Jxlmt| depends on the driver, it is possible to provide a plurality of upper-limit longitudinal jerks |Jxlmt| having different magnitudes in advance and allow the driver to select a desired upper-limit longitudinal jerk |Jxlmt|. It is also possible to make the upper-limit longitudinal jerk |Jxlmt| variable in a certain fixed range and allow the driver to adjust its magnitude. It is also possible to store an average of longitudinal jerks generated in driver's braking operation during normal driving as an average jerk, and use a value obtained by multiplying the average jerk by a certain gain or adding a certain value thereto as the upper-limit longitudinal jerk |Jxlmt|. It is also possible to store upper-limit longitudinal jerks |Jxlmt| for drivers and change the upper-limit longitudinal jerk |Jxlmt| for each driver. As a method for recognizing a driver, it is possible to allow the driver to make setting for himself or herself, use a camera or other image pickup devices, or use a fingerprint or vein information.

After calculation of the jerk-limited deceleration-based collision avoidable distance $\Delta$xbrklm in Step S302, processing proceeds to Step S303.

In Step S303, the collision avoidance calculation unit 3 determines whether or not lateral-motion-based collision avoidance is possible.

As a method for determining whether or not lateral-motion-based collision avoidance is possible, if the right-hand side safe area $\Delta$dRsafe of the collision risk area VE2' is larger than the width d1 of the host vehicle VE1 as shown in Fig. 2, the collision avoidance calculation unit 3 determines that lateral movement to the right with respect to the traveling direction is possible. If the left-hand side safe area $\Delta$dLsafe of the collision risk area VE2' is larger than the width d1 of the host vehicle VE1, the collision avoidance calculation unit 3 determines that lateral movement to the left with respect to the traveling direction is possible.

As a method for setting the right-hand edge Rsafe of the right-hand side safe area $\Delta$dRsafe, a certain offset amount $\Delta$y is added to the right-hand side position of the host vehicle driving lane. It is possible to define the right-hand edge of an area judged to contain no object which may collide with the host vehicle as the right-hand edge Rsafe, the judgment being made using the object information acquisition means such as a CCD image pickup element or other image pickup devices, a millimeter-wave radar, a laser radar, etc. or communication means such as communications between the road and the host vehicle and between vehicles, navigation, etc.

Likewise, as a method for setting the left-hand edge Lsafe of the left-hand side safe area $\Delta$dLsafe, a certain offset amount $\Delta$y is added to the left-hand side position of the host vehicle driving lane. It is possible to define the left-hand edge of an area judged to contain no object which may collide with the host vehicle as the left-hand edge Lsafe, the judgment being made using the object information acquisition means such as a CCD image pickup element or other image pickup devices, a millimeter-wave radar, a laser radar, etc. or communication means such as communications between the road and the host vehicle and between vehicles, navigation, etc.

If both the right-hand side safe area $\Delta$dRsafe and the left-hand side safe area $\Delta$dLsafe obtained in this way are smaller than the width d1 of the host vehicle VE1, the collision avoidance calculation unit 3 determines that lateral-motion-based collision avoidance is impossible, and processing proceeds to Step S304.

If the right-hand side safe area $\Delta$dRsafe is larger than the width d1 of the host vehicle and the left-hand side safe area $\Delta$dLsafe is smaller than the width d1 of the host vehicle, the collision avoidance calculation unit 3 determines that rightward lateral movement is possible. Further, if the left-hand side safe area $\Delta$dLsafe is larger than the width d1 of the host vehicle and the right-hand side safe area $\Delta$dRsafe is smaller than the width d1 of the host vehicle, the collision avoidance calculation unit 3 determines that leftward lateral movement is possible. Further, if both the right-hand side safe area $\Delta$dRsafe and the left-hand side safe area $\Delta$dLsafe are larger than the width d1 of the host vehicle, the collision avoidance calculation unit 3 determines that both rightward and leftward lateral movements are possible, and processing proceeds to Step S305.

The left-hand edge Lsafe and the right-hand edge Rsafe are limits the host vehicle can travel therebetween. If a left-hand edge Lsafe or a right-hand edge Rsafe exists in the host vehicle traveling direction, the left-hand edge Lsafe or the right-hand edge Rsafe is handled as the collision risk area VE2' in the host vehicle traveling direction.

If lateral-motion-based collision avoidance is impossible, in Step S304, the collision avoidance calculation unit 3 sets the lateral-motion-based collision avoidance limit $\Delta$xstr and the jerk-limited lateral-motion-based collision avoidable distance $\Delta$xstrlmt to a value larger than the relative distance between the object and the host vehicle ($\Delta$x), and terminates processing.

If lateral-motion-based collision avoidance is possible, in Step S305, the collision avoidance calculation unit 3 calculates a required lateral-movement distance $\Delta d$. If rightward lateral movement is possible, the offset amount $\Delta dR$ obtained by the Formula (1) is set as the required lateral-movement distance $\Delta d$; if leftward lateral movement is possible, the offset amount $\Delta dL$ obtained by the Formula (2) is set as the required lateral-movement distance $\Delta d$. Further, if both rightward and leftward lateral movements are possible, the offset amount $\Delta dR$ or the offset amount $\Delta dL$, whichever smaller, is set as the required lateral-movement distance $\Delta d$.

If both rightward and leftward lateral movements are possible, the required lateral-movement distance $\Delta d$ may be determined based on a magnitude relation between the offset amount $\Delta dR$ and the offset amount $\Delta dL$ as well as a magnitude relation between the left-hand side safe area $\Delta dLsafe$ and the right-hand side safe area $\Delta dRsafe$. For example, if the difference between the offset amount $\Delta dR$ and the offset amount $\Delta dL$ is equal to or smaller than a certain threshold value, and the right-hand side safe area $\Delta dRsafe$ is larger than the left-hand side safe area $\Delta dLsafe$, the offset amount $\Delta dR$ may be used as the required lateral-movement distance $\Delta d$. Likewise, if the difference between the offset amount $\Delta dR$ and the offset amount $\Delta dL$ is equal to or smaller than a certain threshold value, and the left-hand side safe area $\Delta dLsafe$ is larger than the right-hand side safe area $\Delta dRsafe$, the offset amount $\Delta dL$ may be used as the required lateral-movement distance $\Delta d$.

After calculation of the required lateral-movement distance $\Delta d$ in Step S306, processing proceeds to Step S306.

In Step S306, the collision avoidance calculation unit 3 calculates the lateral-motion-based collision-avoidable limit distance $\Delta xstr$. As mentioned above, the collision avoidance calculation unit 3 calculates the time $\Delta tstr$ taken for movement with reference to Fig. 4 based on the required lateral-movement distance $\Delta d$, and calculates the lateral-motion-based collision-avoidable limit distance $\Delta xstr$ using Formula (11) based on the time $\Delta tstr$ taken for movement.

In the calculation of the lateral-motion-based collision-avoidable limit distance $\Delta xstr$, the maximum possible lateral acceleration $Gymax$ on the road surface on which the host vehicle is assumed to be the maximum lateral acceleration value that can be generated on the vehicle on a dry road surface, i.e., the maximum possible lateral acceleration $Gymax$ on a dry road surface. If the system includes the above-mentioned maximum acceleration presumption means, the maximum acceleration $|Gmax|$ obtained in this way may be used as the maximum lateral acceleration $Gymax$.

After calculation of the lateral-motion-based collision-avoidable limit distance $\Delta xstr$ in Step S306, processing proceeds to Step S307.

In Step S307, the collision avoidance calculation unit 3 calculates the jerk-limited lateral-motion-based collision avoidable distance $\Delta xstrlmt$. As mentioned above, the collision avoidance calculation unit 3 calculates the time $\Delta tstrlmt$ taken for movement with reference to Fig. 3 from the required lateral-movement distance $\Delta d$, and calculates the jerk-limited lateral-motion-based collision avoidable distance $\Delta xstrlmt$ using Formula (16) from the time $\Delta tstrlmt$ taken for movement.

In the calculation of the jerk-limited lateral-motion-based collision avoidable distance $\Delta xstrlmt$, the upper-limit of the lateral jerk $|Jylmt|$ to be generated is preset to a value that applies neither intensive uncomfortable feeling nor a sudden posture change to a common driver.

Since a desirable value of the upper-limit lateral jerk $|Jylmt|$ depends on the driver, it is possible to provide a plurality of upper-limit lateral jerks $|Jylmt|$ having different magnitudes in advance and allow the driver to select a desired upper-limit lateral jerk $|Jylmt|$. It is also possible to make the upper-limit lateral jerk $|Jylmt|$ variable in a certain fixed range and allow the driver to adjust its magnitude. It is also possible to store an average of lateral jerks generated in driver's steering operation during normal driving as an average lateral jerk, and use a value obtained by multiplying the average jerk by a certain gain or adding a certain value thereto as the upper-limit lateral jerk $|Jylmt|$. It is also possible to store upper-limit lateral jerks $|Jylmt|$ for drivers and change the upper-limit lateral jerk $|Jylmt|$ for each driver. As a method for recognizing a driver, it is possible to allow the driver to make setting for himself or herself, use a camera or other image pickup devices, or use a fingerprint or vein information.

After calculation of the jerk-limited lateral-motion-based collision avoidable distance $\Delta xstrlmt$ in Step S307, the collision avoidance calculation unit 3 terminates processing.

After the processing in Step S300 of Fig. 8, processing proceeds to Step S400 and the collision avoidance calculation unit 3 calculates the jerk-limited collision avoidable distance $\Delta xctl1$ and the collision-avoidable limit distance $\Delta xctl2$.

As shown in Fig. 5, nine regions are created in terms of the deceleration-based collision-avoidable limit distance $\Delta xbrk$, the lateral-motion-based collision-avoidable limit distance $\Delta xstr$, the jerk-limited deceleration-based collision avoidable distance $\Delta xbrklmt$, and the jerk-limited lateral-motion-based collision avoidable distance $\Delta xstrlmt$.

In five regions A1 to A5 out of the nine regions, collision can be avoided with the longitudinal jerk $|Jx|$ or the lateral jerk $|Jy|$ generated which is smaller than the upper-limit longitudinal jerk $|Jxlmt|$ or the upper-limit lateral jerk $|Jylmt|$, respectively. In these regions, the possibility that the driver performs avoidance operation is high. In the regions A1 to A5, therefore, it is not necessary to perform warning for collision avoidance or deceleration control for collision avoidance.

In the regions A6 to A8, collision can be avoided with the longitudinal jerk $|Jx|$ or the lateral jerk $|Jy|$ generated which is equal to or larger than the upper-limit longitudinal jerk $|Jxlmt|$ or the upper-limit lateral jerk $|Jylmt|$, respectively.

Specifically in these regions, avoidance of an object is difficult unless operation is performed with a larger longitudinal or lateral jerk than normal driving. Therefore, in these regions, the driver does not recognize the object and therefore the possibility that the driver performs avoidance operation is low. A boundary between the regions A1 to A5 and the regions A6 to A8 is defined as the jerk-limited collision avoidable distance $\Delta$xctl1 at which a warning for collision avoidance and deceleration control for collision avoidance are started. The region A9 is a region where collision cannot be avoided. A boundary between the regions A6 to A8 and the region A9 is defined as the collision-avoidable limit distance $\Delta$xctl2.

The jerk-limited collision avoidable distance $\Delta$xctl1 is either the jerk-limited deceleration-based collision avoidable distance $\Delta$xbrklmt or the jerk-limited lateral-motion-based collision avoidable distance $\Delta$xstrlmt, whichever smaller. The collision-avoidable limit distance $\Delta$xctl2 is either the deceleration-based collision-avoidable limit distance $\Delta$xbrk or the lateral-motion-based collision-avoidable limit distance $\Delta$xstr, whichever smaller.

For example, if lateral-motion-based collision avoidance is judged to be impossible in Step S303, the deceleration-based collision-avoidable limit distance $\Delta$xbrk, the lateral-motion-based collision-avoidable limit distance $\Delta$xstr, the jerk-limited deceleration-based collision avoidable distance $\Delta$xbrklmt, and the jerk-limited lateral-motion-based collision avoidable distance $\Delta$xstrlmt are given as shown in Fig. 7. As shown in Fig. 7, over a wide relative velocity range, the jerk-limited deceleration-based collision avoidable distance $\Delta$xbrklmt equals the jerk-limited collision avoidable distance $\Delta$xctl1, and the deceleration-based collision-avoidable limit distance $\Delta$xbrk equals the collision-avoidable limit distance $\Delta$xctl2.

Further, if lateral-motion-based collision avoidance is judged to be possible in Step S303, the jerk-limited deceleration-based collision avoidable distance $\Delta$xbrklmt, the jerk-limited deceleration-based collision avoidable distance $\Delta$xbrklmt, the deceleration-based collision-avoidable limit distance $\Delta$xbrk, and the lateral-motion-based collision-avoidable limit distance $\Delta$xstr are given as shown in Fig. 6. As shown in Fig. 6, over a small relative velocity range, the jerk-limited deceleration-based collision avoidable distance $\Delta$xbrklmt equals the jerk-limited collision avoidable distance $\Delta$xctl1, and the deceleration-based collision-avoidable limit distance $\Delta$xbrk equals the collision-avoidable limit distance $\Delta$xctl2; over a large relative velocity range, the jerk-limited lateral-motion-based collision avoidable distance $\Delta$xstrlmt equals the jerk-limited collision avoidable distance $\Delta$xctl1, and the lateral-motion-based collision-avoidable limit distance $\Delta$xstr equals the collision-avoidable limit distance $\Delta$xctl2.

After calculation of the jerk-limited collision avoidable distance $\Delta$xctl1 and the collision-avoidable limit distance $\Delta$xctl2, processing proceeds to Step S500.

In Step S500, the collision avoidance calculation unit 3 calculates a risk of collision.

The collision avoidance calculation unit 3 calculates a risk of collision based on the relative distance $\Delta$x, the relative velocity $\Delta$V, the jerk-limited collision avoidable distance $\Delta$xctl1, and the collision-avoidable limit distance $\Delta$xctl2. For example, the collision avoidance calculation unit 3 performs calculation as follows: the distance over which the relative distance Ax equals the jerk-limited collision avoidable distance $\Delta$xctl1 is set to "0"; the distance is set to "0" if the relative distance Ax is larger than the jerk-limited collision avoidable distance $\Delta$xctl1, increased as the relative distance Ax becomes smaller than the jerk-limited collision avoidable distance $\Delta$xctl1, and set to "100" when the collision-avoidable limit distance $\Delta$xctl2 is reached. The collision avoidance calculation unit 3 may calculate a risk of collision based on a time until the collision avoidance limit is reached, the time being obtained by dividing the difference between the relative distance $\Delta$x and the collision-avoidable limit distance $\Delta$xctl2 by the relative velocity $\Delta$V. After calculation of the risk of collision, processing proceeds to Step S600.

In Step S600, the collision avoidance calculation unit 3 compares the relative distance $\Delta$x with the jerk-limited collision avoidable distance $\Delta$xctl1.

In Step S600, if the relative distance $\Delta$x is larger than the jerk-limited collision avoidable distance $\Delta$xctl1, the collision avoidance calculation unit 3 determines that the collision-avoidable limit distance is in any of the regions A1 to A5, and processing proceeds to Step S1500.

Subsequently in Step S1500, the collision avoidance calculation unit 3 determines whether or not the host vehicle is under deceleration control. If deceleration control is not performed as a result of the last calculation, the collision avoidance calculation unit 3 determines that the host vehicle is not under deceleration control. Even if the host vehicle is under deceleration control as a result of the last calculation, if the brake torque generated by driver's braking operation is almost equal to or larger than the brake torque due to deceleration control, the collision avoidance calculation unit 3 terminates deceleration control and determines that the host vehicle is not under deceleration control.

In Step S1500, if the collision avoidance calculation unit 3 determines that the host vehicle is not under deceleration control by the forward collision avoidance assistance system, processing is terminated; if it determines that the host vehicle is under deceleration, processing proceeds to Step S1600.

Subsequently in Step S1600, the collision avoidance calculation unit 3 determines whether or not the host vehicle is in the stop state. If the vehicle velocity of the host vehicle is zero, the collision avoidance calculation unit 3 determines that the host vehicle is in the stop state, and processing proceeds to Step S1700. If the vehicle velocity of the host vehicle is not zero and accordingly the host vehicle is judged to be not in the stop state, that is, in a traveling state, processing proceeds to Step S1800.

If the host vehicle is judged to be in the stop state, the collision avoidance calculation unit 3 performs target brake torque calculation and warning operation in relation to the vehicle in the stop state due to deceleration control as target brake torque/warning operation 5 in Step S1700. Brake torque necessary to maintain the vehicle stop state is defined as the target brake torque. Then, the collision avoidance calculation unit 3 calculates a drive command for the warning device to prompt driver's braking operation.

If the host vehicle is judged to be in the traveling state, the collision avoidance calculation unit 3 performs target brake torque calculation and warning operation in relation to a state where no object exists ahead of the host vehicle traveling under deceleration control or a state where the relative distance $\Delta x$ is larger than the jerk-limited collision avoidable distance $\Delta xctl1$ as target brake torque/warning operation 6 in Step S1800. This applies to a state where an object ahead of the host vehicle accelerates during deceleration control resulting in an increased relative distance or a state where the object ahead of the host vehicle deviates from the course of the host vehicle through lateral movement. In this case, the collision avoidance calculation unit 3 calculates a target longitudinal acceleration based on the longitudinal acceleration due to deceleration control and the driver-requested longitudinal acceleration presumed from the state of driver's braking operation, and calculates target brake torque of each tire based on the target longitudinal acceleration.

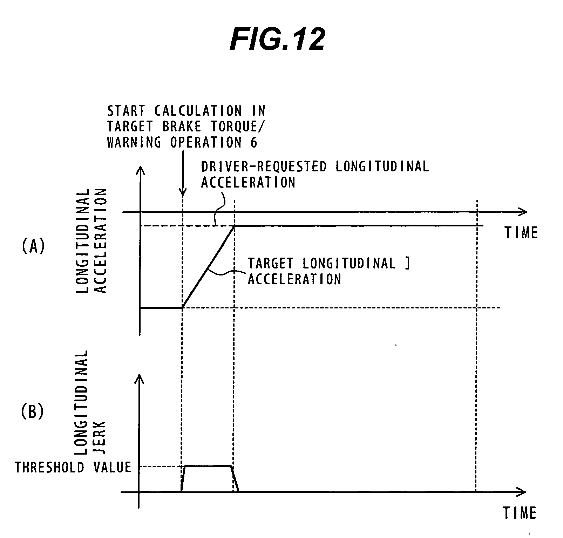

Calculation of the target longitudinal acceleration by the forward collision avoidance assistance system according to the present embodiment is explained below with reference to Fig. 12.

Figs. 12A and 12B are graphs showing calculation of a target longitudinal acceleration by the forward collision avoidance assistance system according to the first embodiment. Fig. 12A shows the longitudinal acceleration, and Fig. 12B the longitudinal jerk. The horizontal axis of Figs. 12A and 12B denotes time t.

In the calculation of the target longitudinal acceleration, the absolute value of the longitudinal jerk generated on the vehicle is maintained not larger than a certain threshold value, as shown in Fig. 12B. As shown in Fig. 12A, the acceleration is changed with the target longitudinal acceleration in relation to the longitudinal jerk not larger than the threshold value so that the target longitudinal acceleration converges to the driver-requested longitudinal acceleration.

When the driver-requested longitudinal acceleration is set as the target longitudinal acceleration, target longitudinal acceleration change may be subjected to filter processing to be used as the target longitudinal acceleration. The collision avoidance calculation unit 3 calculates the target brake torque based on the target longitudinal acceleration obtained in this way. It is also possible to calculate the target brake torque based on brake torque generated at each tire and the driver-requested brake torque calculated from the state of driver's braking operation state, without calculating the target longitudinal acceleration. In this case, it is possible to calculate the target brake torque so as to converge to the driver-requested brake torque while maintaining brake torque change of each tire not larger than a certain threshold value. Then, the collision avoidance calculation unit 3 calculates a drive command for the warning device so as to notify the driver of the fact that the possibility of collision has become low. As a method for notification, it is possible to terminate the warning from the warning device to notify the driver of the fact that the possibility of collision has become low.

In Step S600, if the relative distance Ax is smaller than the jerk-limited collision avoidable distance $\Delta xctl1$, the collision avoidance calculation unit 3 determines that the collision-avoidable limit distance is in any of the regions A6 to A9 and that a warning for collision avoidance support and deceleration control is necessary, and processing proceeds to Step S700.

Subsequently in Step S700, the collision avoidance calculation unit 3 compares the relative distance Ax with the collision-avoidable limit distance $\Delta xctl2$.

In Step S700, if the relative distance Ax is smaller than the collision-avoidable limit distance $\Delta xctl2$, the collision avoidance calculation unit 3 determines that the collision-avoidable limit distance is in the region A9, and processing proceeds to Step S1100.

Subsequently in Step S1100, as target brake torque/warning operation 1, the collision avoidance calculation unit 3 performs target brake torque calculation and warning operation in relation to the region A9. In the region A9 where collision with an object cannot be avoided, the collision avoidance calculation unit 3 sets the target longitudinal acceleration to -|Gmax| so that the vehicle decelerates with the maximum possible acceleration |Gmax| on the road surface to reduce shock at collision, and calculates target brake torque of each tire necessary to generate the target maximum longitudinal acceleration - |Gmax|.

Then, the collision avoidance calculation unit 3 calculates a drive command for the warning device so as to notify the driver of the fact that the possibility of collision is very high. In this case, it is possible to change the seat belt fastening force or the headrest and seat positions to provide against shock at collision. Further, the notification for the driver may include information for prompting driver's brake pedal operation.

Upon completion of target brake torque/warning operation 5 in Step S1700, processing proceeds to Step S1900.

On the other hand, in Step S700, if the relative distance $\Delta x$ is equal to or larger than the collision-avoidable limit distance $\Delta xctl2$, the collision avoidance calculation unit 3 determines that the collision-avoidable limit distance is in any of the regions A6 to A8, and processing proceeds to Step S800.

Subsequently in Step S800, the collision avoidance calculation unit 3 compares the relative distance $\Delta x$ with the lateral-motion-based collision-avoidable limit distance $\Delta xstr$.

In Step S800, if the relative distance $\Delta x$ is smaller than the lateral-motion-based collision-avoidable limit distance $\Delta xstr$, the collision avoidance calculation unit 3 determines that the collision-avoidable limit distance is in the region A8, and processing proceeds to Step S1200.

Subsequently in Step S1200, as target brake torque/warning operation 2, the collision avoidance calculation unit 3 performs target brake torque calculation necessary to perform deceleration-based collision avoidance, and warning operation.

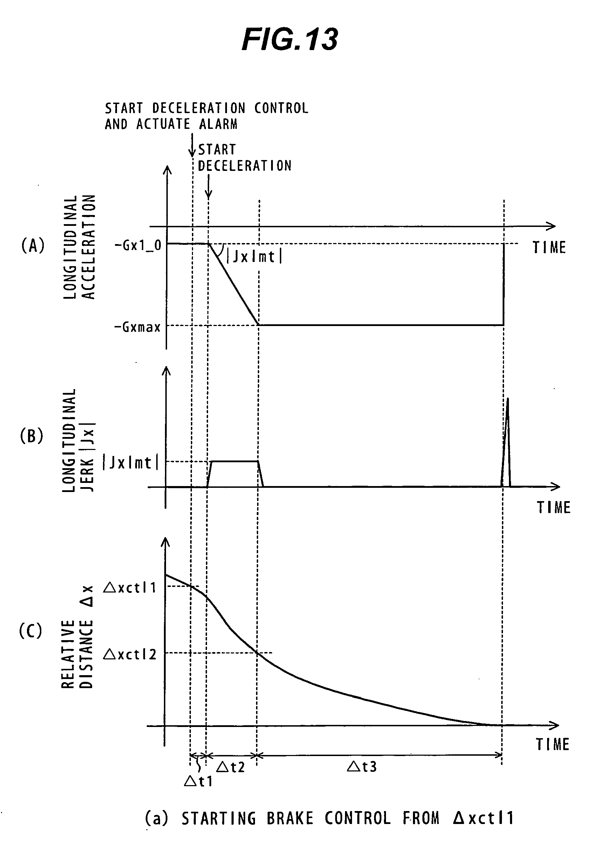

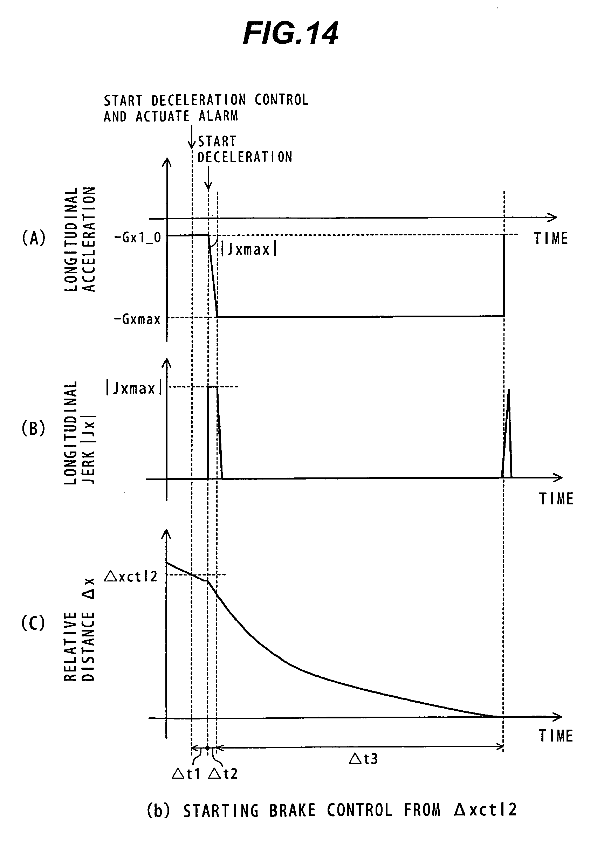

The difference between control with the upper-limit longitudinal jerk |Jxlmtl in target brake torque/warning operation 2 and control with the maximum longitudinal jerk |Jxmax| by the forward collision avoidance assistance system according to the present embodiment is explained below with reference to Figs. 13 and 14.

Figs. 13A, 13B, and 13C are graphs showing control with the upper-limit longitudinal jerk |Jxlmt| in target brake torque/warning operation 2 by the forward collision avoidance assistance system according to the first embodiment.

Figs. 14A, 14B, and 14C are graphs showing control with the maximum longitudinal jerk |Jxmax|.

Fig. 13A shows the longitudinal acceleration, Fig. 13B shows the longitudinal jerk, and Fig. 13C the relative distance Ax. Fig. 14A shows the longitudinal acceleration, Fig. 14B shows the longitudinal jerk, and Fig. 14C the relative distance $\Delta x$. The horizontal axis of Figs. 13A to 13C and 14A to 14C denotes time t.

As shown in Fig. 13C, the collision avoidance calculation unit 3 starts deceleration control when the relative distance $\Delta x$ becomes equal to the jerk-limited collision avoidable distance $\Delta xctl1$. When the relative distance becomes equals to the collision-avoidable limit distance $\Delta xctl2$, the collision avoidance calculation unit 3 determines the longitudinal jerk |Jx| shown in Fig. 13B so as to attain the maximum deceleration -|Gxmax| shown in Fig. 13A. The collision avoidance calculation unit 3 calculates the target longitudinal acceleration based on the determined longitudinal jerk |Jx|, and calculates target brake torque of each tire necessary to generate the target longitudinal acceleration. In a relative velocity $\Delta V$ range where the jerk-limited deceleration-based collision avoidable distance $\Delta xbrklmt$ equals the jerk-limited collision avoidable distance $\Delta xctl1$, i.e., in a case where the jerk-limited deceleration-based collision avoidable distance $\Delta xbrklmt$ is smaller the jerk-limited lateral-motion-based collision avoidable distance $\Delta xstrlmt$, if the maximum possible acceleration on the road surface does not change with a road surface change, a maximum acceleration |Gmax| presumption error, or the like, and if the relative velocity does not suddenly change even after the start of deceleration control, the longitudinal jerk |Jx| generated while the relative distance changes from the jerk-limited collision avoidable distance $\Delta xctl1$ to the collision-avoidable limit distance $\Delta xctl2$ is maintained not larger than the upper-limit longitudinal jerk |Jxlmt|.

Fig. 14C shows a case where deceleration control is started when the relative distance Ax is equal to the collision-avoidable limit distance $\Delta xctl2$, and deceleration control is performed with the maximum deceleration -|Gxmax| shown in Fig. 13A and the maximum longitudinal jerk |Jxmax| shown in Fig. 13B.

In the case of Fig. 13B, the generated longitudinal jerk |Jx| can be maintained low in comparison with the case of Fig. 14B.

In target brake torque/warning operation 2 in Step S1200, further, the collision avoidance calculation unit 3 calculates a drive command for the warning device so as to notify the driver of the fact that there is a possibility of collision with an object and that deceleration-based collision avoidance control is to be performed, through the warning device at the start of deceleration control. Further, the notification for the driver may include information for prompting driver's brake pedal operation.

Upon completion of target brake torque/warning operation 2 in Step S1200, processing proceeds to Step S1900.

In Step S800, if the relative distance $\Delta x$ is equal to or larger than the lateral-motion-based collision-avoidable limit distance $\Delta xstr$, the collision avoidance calculation unit 3 determines that the collision-avoidable limit distance is in either the region A6 or A7, and processing proceeds to Step S900.

Subsequently in Step S900, the collision avoidance calculation unit 3 determines whether or not avoidance steering operation is performed by the driver.

In Step S900, the collision avoidance calculation unit 3 determines whether or not avoidance steering operation is performed based on the steering angle and the steering angular velocity. If steering operation toward a direction judged to enable collision avoidance has been performed in Step S303, and if the steering angle is equal to or larger than a certain threshold value or the steering angular velocity has a tendency to increase toward the direction judged to enable collision avoidance, the collision avoidance calculation unit 3 determines that avoidance steering operation is performed. For example, in the Step S303, the collision avoidance calculation unit 3 determines that rightward collision avoidance is possible. If the rightward steering angle is equal to or larger than a certain steering angle threshold value or the rightward steering angular velocity is increasing, the collision avoidance calculation unit 3 determines that rightward avoidance steering is performed. The collision avoidance calculation unit 3 calculates the lateral acceleration necessary for lateral-motion-based collision avoidance and then determines the steering angle threshold value based on a steering angle necessary to generate the lateral acceleration.

In Step S900, if the collision avoidance calculation unit 3 determines that avoidance steering is performed, processing proceeds to Step S1300.

Subsequently in Step S1300, as target brake torque/warning operation 3, the collision avoidance calculation unit 3 performs target brake torque calculation and warning operation in relation to a case where avoidance operation is performed by the driver in either the region A6 or A7.

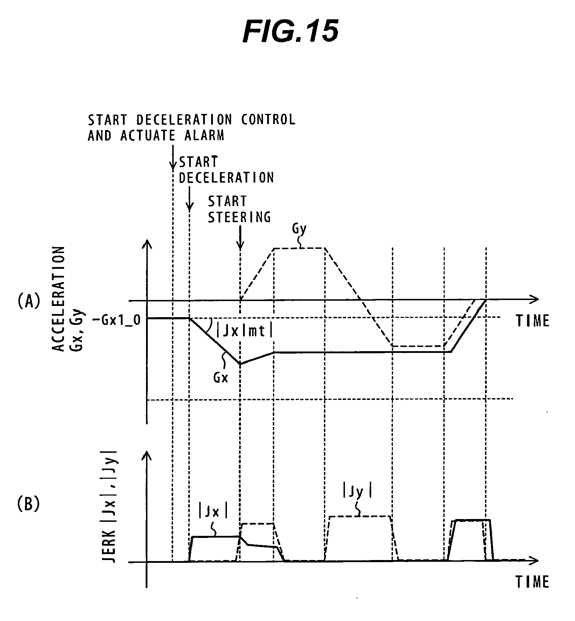

Control in target brake torque/warning operation 3 by the forward collision avoidance assistance system according to the present embodiment is explained below with reference to Fig. 15.

Figs. 15A and 15B are graphs showing control in target brake torque/warning operation 3 by the forward collision avoidance assistance system according to the first embodiment. Fig. 15A shows the longitudinal acceleration Gx and the lateral acceleration Gy, and Fig. 15B the longitudinal jerk |Jx| and the lateral jerk |Jy|. The horizontal axis of Figs. 15A and 15B denotes time t.

As shown in Fig. 15A, the collision avoidance calculation unit 3 calculates the target longitudinal acceleration so that the longitudinal acceleration Gx may fluctuate in response to driver's steering operation. As a method for fluctuating the longitudinal acceleration Gx, the control method is changed depending on the deceleration generated at the start of steering operation. For example, if the deceleration at the start of steering operation is large, the deceleration is decreased based on the steering speed. If the deceleration at the start of steering operation is small or zero, the deceleration is maintained unchanged or fluctuated based on the steering speed.

Further, if driver's steering operation is judged to be inappropriate for lateral-motion-based collision avoidance, the deceleration is increased. After calculation of the target longitudinal acceleration, the collision avoidance calculation unit 3 calculates the target brake torque of each tire so as to generate the target longitudinal acceleration.

If the direction of driver's steering operation is judged to be inappropriate for lateral-motion-based collision avoidance, the collision avoidance calculation unit 3 calculates the target brake torque of each tire so as to generate a moment for swirling the vehicle toward a direction in which lateral-motion-based collision avoidance is possible.

Then, the collision avoidance calculation unit 3 calculates a drive command for the warning device so as to notify the driver of the fact that there is a possibility of collision with an object and that deceleration-based collision avoidance control is to be performed, and then notify the driver of the steering direction, through the warning device at the start of deceleration control. In this case, it is possible to notify the driver of required amount of steering in addition to the steering direction. The content of the warning regarding the steering direction and the amount of steering may be changed in relation to the amount of steering by the driver. For example, if the amount of steering by the driver is not sufficient for object avoidance, it is possible to give a warning so as to increase the amount of steering. Upon completion of target brake torque/warning operation 3 in Step S1300, processing proceeds to Step S1900.

On the other hand, in Step S900, if the collision avoidance calculation unit 3 determines that avoidance steering is not performed, processing proceeds to Step S1000.

Subsequently in Step S1000, the collision avoidance calculation unit 3 compares the relative distance Ax with the deceleration-based collision-avoidable limit distance Δxbrk.

In Step S1000, if the relative distance Δx is equal to or larger than the deceleration-based collision-avoidable limit distance Δxbrk, the collision avoidance calculation unit 3 determines that the collision-avoidable limit distance is in the region A6, and processing proceeds to Step S1200. Subsequently in Step S1200, the collision avoidance calculation unit 3 performs the above-mentioned calculation.

On the other hand, in Step S800, if the relative distance Ax is smaller than the deceleration-based collision-avoidable limit distance Δxbrk, the collision avoidance calculation unit 3 determines that the collision-avoidable limit distance is in the region A7, and processing proceeds to Step S1400.

In Step S1400, as target brake torque/warning operation 4, the collision avoidance calculation unit 3 performs target brake torque calculation and warning operation for the region A7. In the region A7, deceleration-based collision avoidance is impossible and lateral-motion-based collision avoidance is possible and therefore the collision avoidance calculation unit 3 instructs the driver to perform steering operation toward a direction in which lateral-motion-based collision avoidance is possible. At the same time, the collision avoidance calculation unit 3 generates a moment for swirling the vehicle toward a direction in which lateral-motion-based collision avoidance is possible by means of the brake torque of each tire. In this case, the collision avoidance calculation unit 3 calculates a required moment as a target moment, and calculates the target brake torque of each tire so as to generate the target longitudinal acceleration and the target moment.

Then, the collision avoidance calculation unit 3 calculates a drive command for the warning device so as to notify the driver of the fact that there is a possibility of collision with an object and that deceleration-based collision avoidance control is to be performed, and then notify the driver of the steering direction, through the warning device at the start of deceleration control. In this case, it is possible to notify the driver of the required amount of steering in addition to the steering direction.

Upon completion of target brake torque/warning operation 4 in Step S1400, processing proceeds to Step S1900.

In Step S1900, the collision avoidance calculation unit 3 performs drive control of the brake actuator so as to attain the target brake torque and drive control of the alarm unit so as to attain the above-mentioned warning, and turns on the tail-light in response to the drive of the brake actuator.

If driver's braking operation has been performed, the collision avoidance calculation unit 3 performs drive control of the brake actuator using the brake torque generated by driver's braking operation or the brake torque calculated in Steps S1100 to S1400, whichever larger, as the target brake torque. If a target moment is calculated in Steps S1300 and S1400 and brake torque is calculated so as to generate the target moment, the collision avoidance calculation unit 3 gives priority to the brake torque calculated in Steps S1300 to S1400 and performs drive control of the brake actuator as the target brake torque.

The brake actuator may be either a brake system which generates brake torque by pushing a brake pad to a brake disc attached on each tire or a method for generating brake torque through regenerative drive of a motor. With the present invention, the brake actuator for generating brake torque at each tire is not limited thereto.

The alarm unit may be a warning device which auditorily gives a warning or a warning device which visually gives a warning. Further, the warning device may be combined with a warning device which tactually gives a warning.

As a warning method, it is possible to visually display or auditorily announce a result of calculations performed in above-mentioned target brake torque/warning operations 1 to 6, or use a combination of visual display and auditory announcement. For example, it is possible to visually display a warning and generate an alarm sound to inform the driver of the warning.

It is also possible to change control variables of the warning device in relation to the risk of collision. For example, in the case of a warning device which auditorily gives a warning, it is possible to change the alarm sound volume in relation to the risk of collision, that is, the larger the risk of collision, the larger becomes the alarm sound volume. In the case of a warning device which visually gives a warning, it is possible to change the display image in relation to the risk of collision. Further, in the case of the warning device which tactually gives a warning, it is possible to change the interval and amplitude of vibration in relation to the risk of collision.

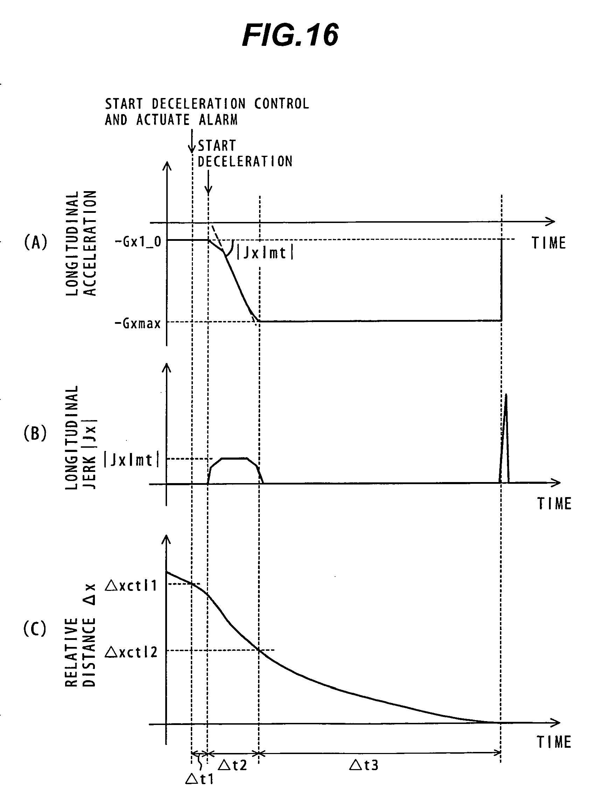

Another example of the maximum value of the longitudinal jerk $|Jx|$ set with the forward collision avoidance assistance system according to the present embodiment is explained below with reference to Fig. 16.

Figs. 16A, 16B, and 16C are graphs showing another example of the maximum value of the longitudinal jerk $|Jx|$ set with the forward collision avoidance assistance system according to the first embodiment.

Fig. 16A shows the longitudinal acceleration Gx, Fig. 16B shows the longitudinal jerk $|Jx|$, and Fig. 16C the relative distance Ax. The horizontal axis of Figs. 16A to 16C denotes time t.

As shown in Fig. 16B, it is possible to give a longitudinal acceleration ranging from -Gx1_0 at the start of deceleration to the maximum deceleration -Gxmax in deceleration control so that the maximum value of the longitudinal jerk $|Jx|$ ranging from -Gx1_0 at the start of deceleration to the maximum deceleration -Gxmax becomes the upper-limit longitudinal jerk $|Jxlmt|$, and the longitudinal jerk $|Jx|$ forms a convex curve. In this case, $\Delta t2$ changes with the shape of the longitudinal jerk $|Jx|$ and therefore it is possible to correct the jerk-limited collision avoidable distance $\Delta xctl1$ and the collision-avoidable limit distance $\Delta xctl2$ in relation to the longitudinal jerk $|jx|$,

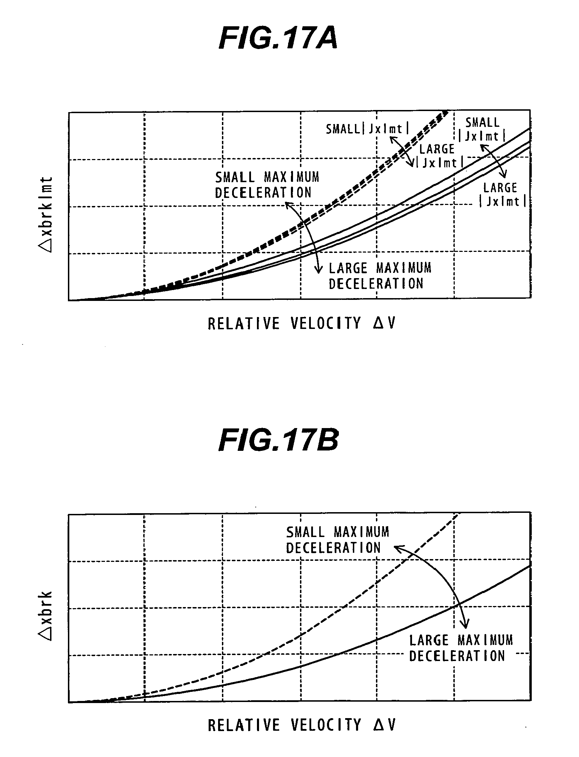

Other examples of the deceleration-based collision-avoidable limit distance $\Delta xbrk$, the lateral-motion-based collision-avoidable limit distance $\Delta xstr$, the jerk-limited deceleration-based collision avoidable distance $\Delta xbrklmt$, and the jerk-limited lateral-motion-based collision avoidable distance $\Delta xstrlmt$ used in the forward collision avoidance assistance system according to the present embodiment are explained below with reference to Fig. 17.

Figs. 17A and 17B are graphs showing another example of the deceleration-based collision-avoidable limit distance $\Delta xbrk$ and the jerk-limited deceleration-based collision avoidable distance $\Delta xbrklmt$ used by the forward collision avoidance assistance system according to the first embodiment.

As shown in Figs. 17A and 17B, it is possible to create the deceleration-based collision-avoidable limit distance $\Delta xbrk$ and the jerk-limited deceleration-based collision avoidable distance $\Delta xbrklmt$ using a map created in advance based on the relative velocity V0, the maximum deceleration -Gxmax, and the upper-limit longitudinal jerk $|Jxlmt|$. Likewise, it is possible to create the lateral-motion-based collision-avoidable limit distance $\Delta xstr$ and the jerk-limited lateral-motion-based collision avoidable distance $\Delta xstrlmt$ using a map created in advance based on the relative velocity V0, the maximum lateral acceleration Gymax, the lateral-movement distance $\Delta d$ for collision avoidance, and the upper-limit lateral jerk $|Jylmt|$.

As explained above, in the regions A1 to A5 out of the nine regions, neither warning for collision avoidance nor deceleration control for collision avoidance is performed. In order not to give uncomfortable feeling to the driver, it is also important that neither warning nor deceleration control is performed if collision avoidance is judged to be possible even without performing any operation, which is a difference from conventional systems.

In the region A9 where collision with an object cannot be avoided, the collision avoidance calculation unit 3 calculates necessary target brake torque of each tire so that the vehicle decelerates with the maximum possible acceleration -|Gmax| on the road surface to reduce shock at collision.

In the region A6, the collision avoidance calculation unit 3 sets the deceleration with the upper-limit longitudinal jerk $|Jxlmt|$ or below or the maximum longitudinal jerk $|Jxmax|$ or below in relation to relative distance $\Delta$. Further, if driver's steering operation is performed, the collision avoidance calculation unit 3 performs deceleration control in response to driver's steering operation.

In the region A7 where deceleration-based collision avoidance is impossible and lateral-motion-based collision avoidance is possible, the collision avoidance calculation unit 3 instructs the driver to perform steering toward a direction in which lateral-motion-based collision avoidance is possible. At the same time, the collision avoidance calculation unit 3 generates a moment for swirling the vehicle toward a direction in which lateral-motion-based collision avoidance is possible by means of the brake torque of each tire.

In the region A8, the collision avoidance calculation unit 3 sets the deceleration with the upper-limit longitudinal jerk |Jxlmt| or below or the maximum longitudinal jerk |Jxmax| or below in relation to relative distance Δ, and warns about the prohibition of steering operation.

As explained above, the present embodiment supports collision avoidance suitable for each of the nine regions to attain the reduction of driver's uncomfortable feeling and the improvement of the drivability while ensuring the collision avoidance performance at the time of avoidance of collision with an object.

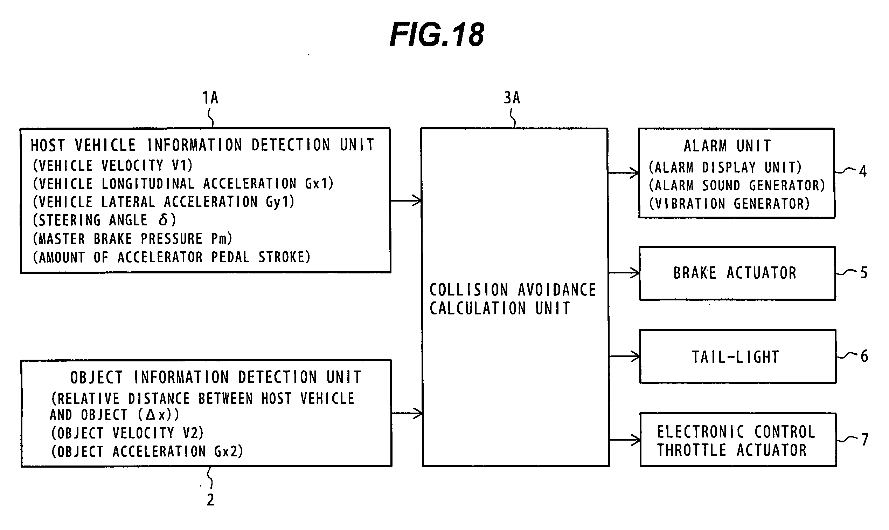

The configuration and operation of a forward collision avoidance assistance system according to a second embodiment are explained below with reference to Figs. 18 to 21.

First of all, the configuration of the forward collision avoidance assistance system according to the second embodiment is explained with reference Fig. 18.

Fig. 18 is a system block diagram showing the configuration of the forward collision avoidance assistance system according to the second embodiment. The same reference numerals as in Fig. 1 denote identical parts.

The forward collision avoidance assistance system of the present embodiment is mounted on a vehicle, the system comprising: a host vehicle information detection unit 1A for obtaining the host vehicle movement state and driver's operation variables; an object information detection unit 2A for detecting an object existing in the host vehicle traveling direction; a collision avoidance calculation unit 3A for calculating a risk of collision between the host vehicle and the object and giving control commands to an alarm unit 4, a brake actuator 5, a tail-light 6, and electronic control throttle actuator 7; an alarm unit 4 for giving a warning to the driver based on a command from the collision avoidance calculation unit 3; a brake actuator 5 for generating brake force at each tire; a tail-light 6 for indicating the deceleration of the host vehicle to a following vehicle; and an electronic control throttle actuator 7 for controlling the engine torque, as shown in Fig. 18.

Specifically, the present embodiment is provided with the electronic control throttle actuator 7 in addition to the configuration shown in Fig. 1.

The object information detection unit 2, the alarm unit 4, the brake actuator 5, and the tail-light 6 are the same as in Fig. 1.

The host vehicle information detection unit 1A includes the amount of accelerator pedal stroke, a driver's accelerator pedal operation variable, detected as an electric signal by a detector in addition to the host vehicle information detection unit 1 of Fig. 1.

The electronic control throttle actuator 7 performs predetermined calculation processing for the amount of accelerator pedal stroke and performs open/close control of the throttle as a throttle valve control apparatus for the on-board engine. This operation replaces direct throttle valve opening adjustment operation through driver's accelerator pedal operation.

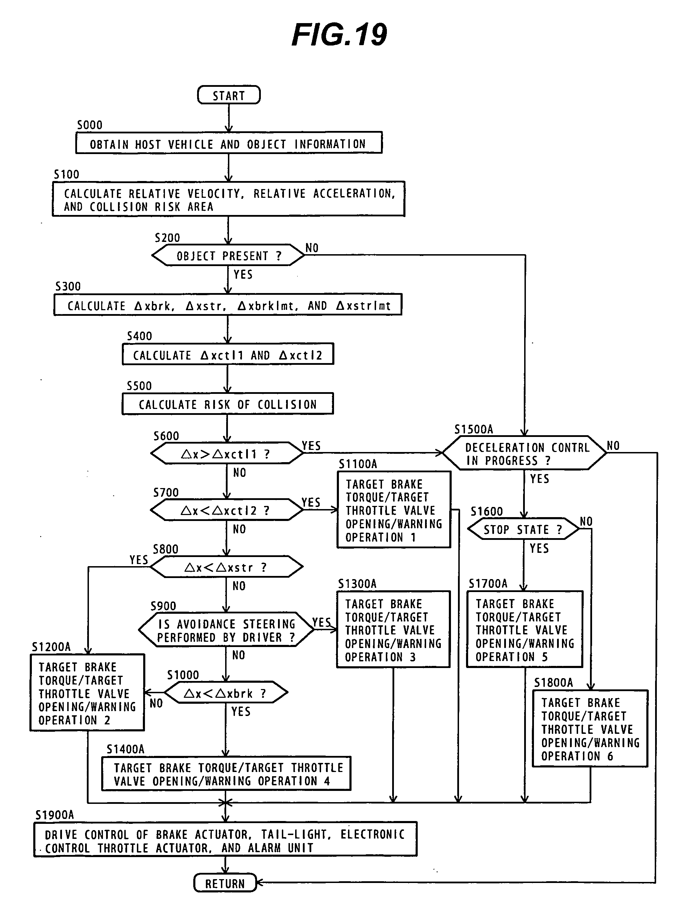

Calculations of the collision avoidance calculation unit 3A are explained below with reference to Fig. 19.

Collision avoidance support control through deceleration control by the forward collision avoidance assistance system according to the second embodiment is explained below with reference to Figs. 19 to 21.

First of all, the overall operation of the forward collision avoidance assistance system according to the present embodiment is explained with reference to Fig. 19.

Fig. 19 is a flow chart showing the operation of the forward collision avoidance assistance system according to the second embodiment.

Referring to Fig. 19, Steps S000 to S1000 and S1600 are the same as Steps S000 to S1000 and S1600 of Fig. 8.

In Step S1100A to S1400A, the collision avoidance calculation unit 3A performs target throttle valve opening calculation in addition to target brake torque/warning operations 1 to 4 described in Steps S1100 to S1400 of Fig. 8.

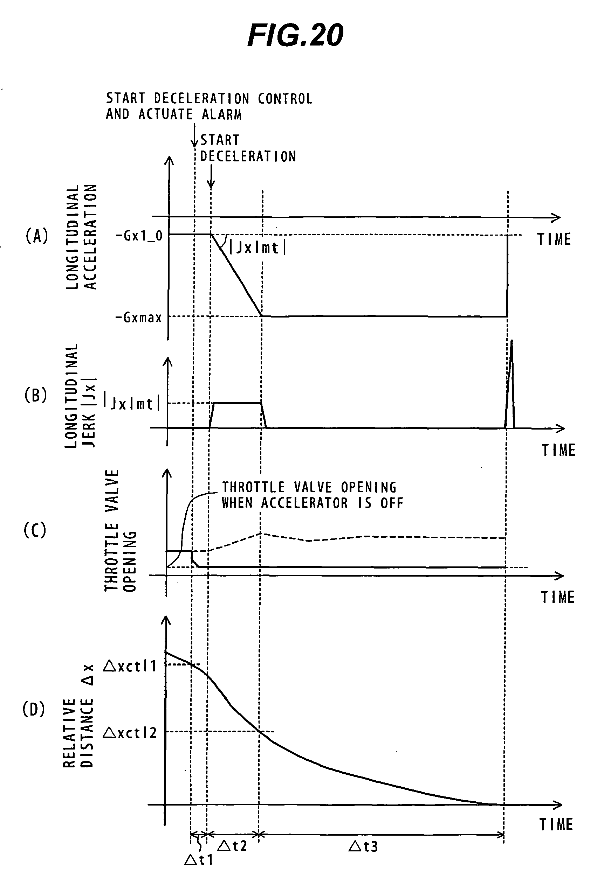

Calculation of the target throttle valve opening in the forward collision avoidance assistance system according to the present embodiment is explained below with reference to Fig. 20.

Figs. 20A, 20B, 20C, and 20D are graphs showing calculation of a target throttle valve opening in the forward collision avoidance assistance system according to the second embodiment.

Fig. 20A shows the longitudinal acceleration, Fig. 20B shows the longitudinal jerk, Fig. 20C shows the throttle valve opening, and Fig. 20D the relative distance Δx. The horizontal axis of Figs. 20A to 20D denotes time t.

Referring to Fig. 20C, the dashed line shows the throttle valve opening in relation to the driver's accelerator pedal operation variable, and the solid line shows the throttle valve opening calculated by the collision avoidance calculation unit 3A of the present embodiment.

As shown in Fig. 20C, the collision avoidance calculation unit 3A calculates the target throttle valve opening so that, after the start of deceleration control, the throttle valve opening in a state where the driver does not depress the accelerator, i.e., accelerator-off state is attained regardless of driver's accelerator pedal operation. Thus, after the start of deceleration, deceleration control can be performed without engine torque increase even if the amount of accelerator pedal depression by the driver changes with the longitudinal acceleration generated.

In Step S1500A of Fig. 19, the collision avoidance calculation unit 3A determines whether or not the host vehicle is under deceleration control. If deceleration control is not performed as a result of last calculation processing, the collision avoidance calculation unit 3A determines that the host vehicle is not under deceleration control. Even if the host vehicle is under deceleration control as a result of the last calculation, if the brake torque generated by driver's braking operation is almost equal to or larger than the brake torque due to deceleration control, and if the throttle valve opening generated by driver's accelerator pedal operation is almost the same as the throttle valve opening due to deceleration control, the collision avoidance calculation unit 3A terminates deceleration control and determines that the host vehicle is not under deceleration control.

In Step S1700A, the collision avoidance calculation unit 3A performs target throttle valve opening calculation in addition to target brake torque/warning operation 5 described in Step S1700 of Fig. 8. The collision avoidance calculation unit 3A calculates the target throttle valve opening so that the throttle valve opening in a state where the driver does not depress the accelerator, i.e., accelerator-off state is attained regardless of driver's accelerator pedal operation.

In Step S1800A, as target brake torque/target throttle valve opening/warning operation 6, the collision avoidance calculation unit 3A performs target brake torque and target throttle valve opening calculations, and warning operation in relation to a state where no object exists ahead of the vehicle traveling under deceleration control or a state where the relative distance $\Delta x$ is larger than the jerk-limited collision avoidable distance $\Delta xctl1$. This applies to a state where an object ahead of the host vehicle accelerates during deceleration control resulting in an increased relative distance or a state where the object ahead of the host vehicle deviates from the course of the host vehicle through lateral movement. In this case, the collision avoidance calculation unit 3A calculates the target longitudinal acceleration based on the longitudinal acceleration due to deceleration control and the driver-requested longitudinal acceleration presumed from the states of driver's braking and accelerator pedal operations, and calculates the target brake torque of each tire and the target throttle valve opening based on the target longitudinal acceleration.

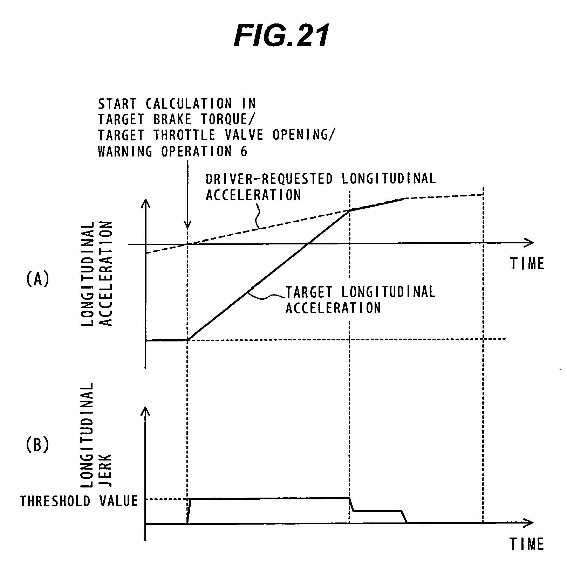

Calculation of the target longitudinal acceleration in the forward collision avoidance assistance system according to the present embodiment is explained below with reference to Fig. 21.

Figs. 21A and 21B are graphs showing calculations of the target longitudinal acceleration in the forward collision avoidance assistance system according to the second embodiment.

Fig. 21A shows the longitudinal acceleration, and Fig. 21B the longitudinal jerk. The horizontal axis of Fig. 21 denotes time t.

As a method for calculating the target longitudinal acceleration, the target longitudinal acceleration is changed to converge the target longitudinal acceleration to the driver-requested longitudinal acceleration as shown in Fig. 21A while maintaining the absolute value of the longitudinal jerk generated on the vehicle not larger than a certain threshold value as shown in Fig. 21B.

When the driver-requested longitudinal acceleration is set as the target longitudinal acceleration, target longitudinal acceleration change may be subjected to filter processing to be used as the target longitudinal acceleration. It is also possible to calculate the target brake torque based on brake torque generated at each tire and the driver-requested brake torque calculated from driver's braking operation state, without calculating the target longitudinal acceleration, and calculate the target throttle valve opening based on the driver-requested brake torque calculated from the state of driver's accelerator pedal operation. In this case, it is possible to calculate the target brake torque so as to converge to the driver-requested brake torque while maintaining brake torque change of each tire not larger than a certain threshold value; and then, after the target brake torque has converged to the driver-requested brake torque, calculate the target throttle valve opening so as to converge to the driver-requested throttle valve opening while maintaining engine torque change accompanying a throttle valve opening change not larger than a certain threshold value, thus converging the target throttle valve opening to the driver-requested throttle valve opening.

Then, the collision avoidance calculation unit 3A calculates a drive command of the warning device to notify the driver of the fact that the possibility of collision has become low. As a method for notification, it is possible to terminate the warning from the warning device to notify the driver of the fact that the possibility of collision has become low.

In Step S1900A, in the same way as in Step S1900 of Fig. 8, the collision avoidance calculation unit 3A performs drive control of the brake actuator and the alarm unit, and turns on the tail-light in response to the drive of the brake actuator. Further, the collision avoidance calculation unit 3A performs drive control of the electronic control throttle actuator so as to attain the target throttle valve opening.

Although a vehicle using engine torque as a drive source has been explained with the present embodiment, the same effect can also be obtained by a vehicle using motor torque as a drive source by driving an electronic control throttle actuator to control the motor torque instead of the engine torque.

As explained above, the present embodiment supports collision avoidance suitable for each of the nine regions to attain the reduction of driver's uncomfortable feeling and the improvement of the drivability while ensuring the collision avoidance performance at the time of avoidance of collision with an object.

Further, after the start of deceleration, deceleration control can be performed without engine torque increase even if the amount of accelerator pedal depression by the driver changes with the longitudinal acceleration generated.

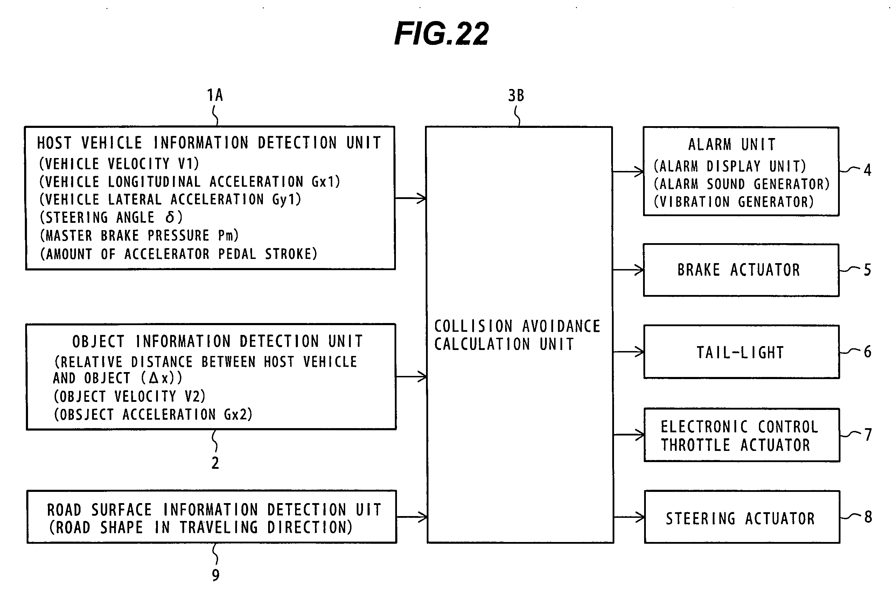

The configuration and operation of a forward collision avoidance assistance system according to a third embodiment are explained below with reference to Figs. 22 to 24.

First of all, the configuration of the forward collision avoidance assistance system according to the third embodiment is explained with reference to Fig. 22.

Fig. 22 is a system block diagram showing the configuration of the forward collision avoidance assistance system according to the third embodiment. The same reference numerals as in Fig. 1 denote identical parts.

The forward collision avoidance assistance system of the present embodiment is mounted on a vehicle, the system comprising: a host vehicle information detection unit 1A for obtaining the host vehicle movement state and driver's operation variables; an object information detection unit 2A for detecting an object existing in the host vehicle traveling direction; a collision avoidance calculation unit 3B for calculating a risk of collision between the host vehicle and the object and giving control commands to an alarm unit 4, a brake actuator 5, a tail-light 6, an electronic control throttle actuator 7, and a steering actuator 8; an alarm unit 4 for giving a warning to the driver based on a command from the collision avoidance calculation unit 3B; a brake actuator 5 for generating brake force at each tire; a tail-light 6 for indicating the deceleration of the host vehicle to a following vehicle; an electronic control throttle actuator 7 for controlling the engine torque; a steering actuator 8 for generating lateral acceleration on the vehicle; and a road surface information detection unit 9 for obtaining the road shape such as the road surface curvature in the host vehicle traveling direction, as shown in Fig. 22.

The host vehicle information detection unit 1A, the object information detection unit 2, the alarm unit 4, the brake actuator 5, the tail-light 6, and the electronic control throttle actuator 7 are the same as in the embodiment of Fig. 18.

The steering actuator 8 changes the skid angle of each tire to generate the lateral acceleration on the vehicle. The steering actuator 8 may be a front-wheel steering mechanism which changes the skid angle of the front tires of the vehicle, a rear-wheel steering mechanism which changes the skid angle of the rear tires of the vehicle, or a four-wheel steering mechanism which changes the skid angle of all tires. Further, the steering mechanism is a steering-by-wire mechanism which converts the steering angle generated by driver's steering wheel operation to an electric signal, and performs drive control of the actuator so as to change the skid angle of each tire based on the electric signal. The steering wheel is not mechanically connected with the steering mechanism of each tire.

The road surface information detection unit 9 inputs the road shape on which the host vehicle will travel in the future. The road surface information detection unit 9 may input information about the lane width of the host vehicle driving lane and the lane width of lanes adjacent to the host vehicle driving lane. As a method for obtaining the road shape information, it is possible to use a GPS and road surface map information or calculate the road shape from images of the road surface ahead of the host vehicle imaged using an image pickup device such as a CCD image pickup element. Further, the road surface information detection unit 9 may input information about the road surface friction coefficient.

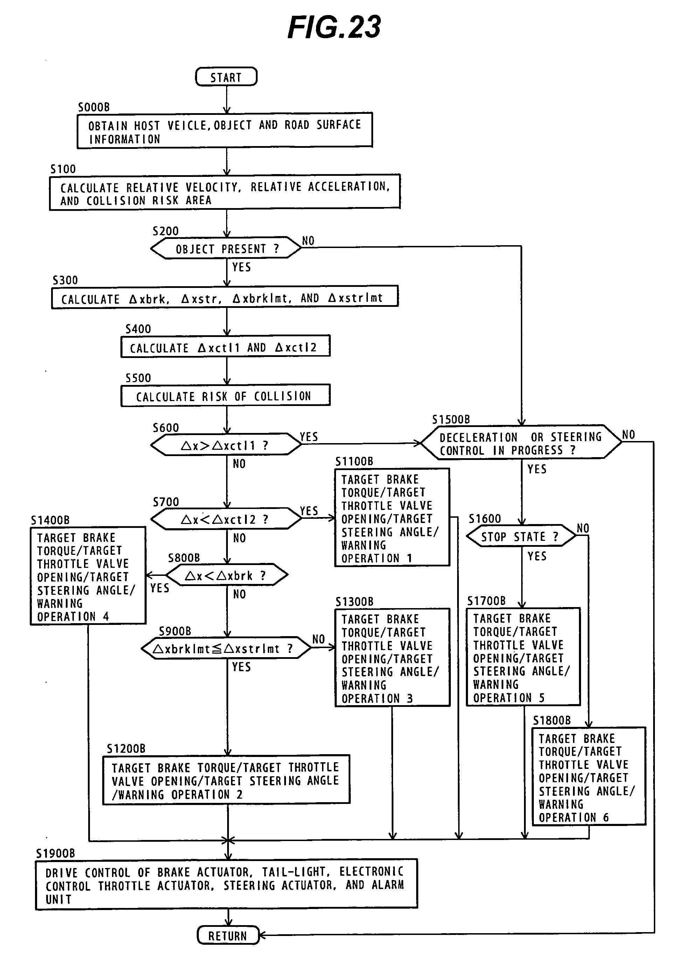

The collision avoidance calculation unit 3B will be explained later with reference to Fig. 23.

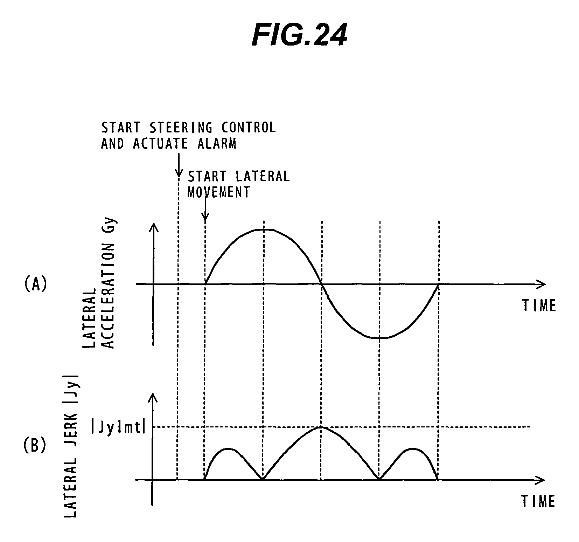

Collision avoidance support control through steering control by the forward collision avoidance assistance system according to the third embodiment is explained below with reference to Figs. 23 and 24.

Fig. 23 is a flow chart showing the operation of the forward collision avoidance assistance system according to the third embodiment.

Referring to Fig. 23, Steps S100 to S700 and S1600 are the same as Steps S100 to S700 and S1600 of Fig. 8.

In Step S000B of Fig. 23, the collision avoidance calculation unit 3B obtains host vehicle information, object information, and road surface information. As host vehicle information, the collision avoidance calculation unit 3B inputs the vehicle velocity $V1\_0$, the vehicle longitudinal acceleration rate $Gx1\_0$, the vehicle lateral acceleration rate $Gy1\_0$, the steering angle $\delta$, the master cylinder pressure $Pm$, and the amount of accelerator pedal stroke from the host vehicle information detection unit 1A. In addition to the vehicle velocity $V1\_0$, the vehicle longitudinal acceleration rate $Gx1\_0$, the vehicle lateral acceleration rate $Gy1\_0$, the steering angle 6, the master cylinder pressure $Pm$, and the amount of accelerator pedal stroke, the collision avoidance calculation unit 3B may input the yaw rate $r$ and the lateral moving velocity $Vy1\_0$.

As object information, the collision avoidance calculation unit 3B inputs the relative distance $\Delta x$, the relative velocity $\Delta V$, and the relative acceleration $\Delta Gx$ with respect to the host vehicle, the collision risk area width $d2$, and the collision risk area offset amount $\Delta y$ from the object information detection unit 2.

As road surface information, the collision avoidance calculation unit 3B inputs the road shape on which the host vehicle will travel in the future from the road surface information detection unit 9. Further, the collision avoidance calculation unit 3B may input the information about the lane width of the host vehicle driving lane and the lane width of lanes adjacent to the host vehicle driving lane. Further, the collision avoidance calculation unit 3B may input information about the road surface friction coefficient.

In Step S1100B of Fig. 23, as target brake torque/target throttle valve opening/target steering angle/warning operation 1, the collision avoidance calculation unit 3B performs target brake torque, target throttle valve opening, and target steering angle calculations, and warning operation in relation to the region A9. In the region A9 where collision with an object cannot be avoided, the collision avoidance calculation unit 3B sets the target longitudinal acceleration to -|Gmax| so that the vehicle decelerates with the maximum possible acceleration |Gmax| on the road surface to reduce shock at collision, and calculates target brake torque and target steering angle for each tire necessary to generate the target longitudinal acceleration -|Gmax|. As shown in Fig. 20, the collision avoidance calculation unit 3B calculates the target throttle valve opening so that, after the start of deceleration control, the throttle valve opening in a state where the driver does not depress the accelerator, i.e., accelerator-off state is attained regardless of driver's accelerator pedal operation.

Then, the collision avoidance calculation unit 3B calculates a drive command for the warning device so as to notify the driver of the fact that the possibility of collision is very high. In this case, it is possible to change the seat belt fastening force or the headrest and seat positions to provide against shock at collision. Further, the notification for the driver may include information for prompting driver's brake pedal operation.

In Step S800B, the collision avoidance calculation unit 3B compares the relative distance $\Delta x$ with the deceleration-based collision-avoidable limit distance $\Delta xbrk$.

In Step S800B, if the relative distance $\Delta x$ is smaller than the deceleration-based collision-avoidable limit distance $\Delta xbrk$, the collision avoidance calculation unit 3B determines that the collision-avoidable limit distance is in the region A7, and processing proceeds to Step S1400B.

In Step S1400B, as target brake torque/target throttle valve opening/target steering angle/warning operation 4, the collision avoidance calculation unit 3B performs target brake torque, target throttle valve opening, and target steering angle calculations, and warning operation in relation to the region A7 of Fig. 5. In the region A7 where deceleration-based collision avoidance is impossible and lateral-motion-based collision avoidance is possible, the collision avoidance calculation unit 3B calculates the target lateral acceleration necessary for collision avoidance, and calculates the target steering angle so as to generate the target lateral acceleration.

Calculation of the target lateral acceleration in the forward collision avoidance assistance system according to the present embodiment is explained below with reference to Fig. 24.

Figs. 24A and 24 are graphs showing calculation of a target lateral acceleration in the forward collision avoidance assistance system according to the third embodiment.

Fig. 24A shows the lateral acceleration, and Fig. 24B the lateral jerk. The horizontal axis of Fig. 24 denotes time t.

As shown in Fig. 24B, the lateral jerk $|Jy|$ generated by the lateral movement is equal to or smaller than the upper-limit lateral jerk $|Jylmt|$. In comparison with a case where steering control is started from the lateral-motion-based collision-avoidable limit distance $\Delta xstr$, the lateral jerk $|Jy|$ generated can be maintained low.

The lateral jerk $|Jy|$ calculated here applies to a case where the maximum possible acceleration on the road surface does not change with a road surface change, a presumption error of the maximum acceleration $|Gmax|$, or the like, and the relative velocity does not suddenly change. If collision avoidance with the upper-limit lateral jerk $|Jylmt|$ or below is difficult, the collision avoidance calculation unit 3B calculates the target lateral acceleration necessary for collision avoidance regardless of the upper-limit lateral jerk $|Jylmt|$, giving priority to collision avoidance. Even in this case, in comparison with a case where steering control is started from the lateral-motion-based collision-avoidable limit distance $\Delta xstr$, the lateral jerk $|Jy|$ generated can be maintained low.

In Step S1400B, the collision avoidance calculation unit 3B calculates the target brake torque and the target throttle valve opening so as to attain the target lateral acceleration. For example, if the driver is performing strong braking operation, it is possible to calculate the target brake torque so as to decrease the brake torque in relation to the lateral acceleration to be generated. It is also possible to calculate the target brake torque and the target throttle valve opening in relation to the lateral jerk to be generated.

It is also possible to correct the target lateral acceleration depending on the road surface shape in the traveling direction obtained by the road surface information detection unit 9. For example, if the host vehicle under running on a curved road avoids an object with lateral movement, the collision avoidance calculation unit 3B corrects the target lateral acceleration in relation to the lateral acceleration necessary to travel the curve.

Then, the collision avoidance calculation unit 3B calculates a drive command for the warning device so as to notify the driver of the fact that there is a possibility of collision with an object and that lateral-motion-based collision avoidance control is to be performed, through the warning device at the start of steering control. Further, the notification for the driver may include information for prompting steering operation toward a direction in which lateral-motion-based collision avoidance is possible.

In Step S900B of Fig. 23, the collision avoidance calculation unit 3B compares the jerk-limited deceleration-based collision avoidable distance $\Delta xbrklmt$ with the jerk-limited lateral-motion-based collision avoidable distance $\Delta xstrlmt$.

In Step S900B, if the jerk-limited deceleration-based collision avoidable distance $\Delta xbrklmt$ is equal to or smaller than the jerk-limited lateral-motion-based collision avoidable distance $\Delta xstrlmt$, the collision avoidance calculation unit 3B determines that deceleration-based collision avoidance is advantageous, and processing proceeds to Step S1200B.

If the jerk-limited deceleration-based collision avoidable distance Δxbrklmt is larger than the jerk-limited lateral-motion-based collision avoidable distance Δxstrlmt, the collision avoidance calculation unit 3B determines that steering-based collision avoidance is advantageous, and processing proceeds to Step S1300B.

In Step S1200B, as target brake torque/target throttle valve opening/target steering angle/warning operation 2, the collision avoidance calculation unit 3B performs target brake torque, target throttle valve opening, and target steering angle calculations necessary to perform deceleration-based collision avoidance, and warning operation. The target brake torque, the target throttle valve opening, and the content of warning are the same as in Step S1200 of Fig. 8 and Step S1200A of Fig. 19. Further, the collision avoidance calculation unit 3B sets the target longitudinal acceleration to -|Gmax| so that the vehicle decelerates with the maximum possible acceleration |Gmax| on the road surface, and calculates target steering angle for each tire necessary to generate the target longitudinal acceleration -|Gmax|.

Then, the collision avoidance calculation unit 3B calculates a drive command for the warning device so as to notify the driver of the fact that there is a possibility of collision with an object and that deceleration-based collision avoidance control is to be performed, through the warning device at the start of deceleration control. Further, the notification for the driver may include information for prompting driver's brake pedal operation.

In Step S1300B, as target brake torque/target throttle valve opening/target steering angle/warning operation 3, the collision avoidance calculation unit 3B performs target brake torque, target throttle valve opening, and target steering angle calculations, and warning operation in a case where steering-based collision avoidance is performed on a priority basis in the region A6 of Fig. 5. In Step 1300B, in the same way as in Step S1400B, the collision avoidance calculation unit 3B calculates the target lateral acceleration necessary for collision avoidance, and calculates the target steering angle so as to generate the target lateral acceleration. If the maximum possible acceleration on the road surface does not change with a road surface change, a maximum acceleration |Gmax| presumption error, or the like, and if the relative velocity does not suddenly change, the lateral jerk |Jy| generated by lateral movement is maintained not larger than the upper-limit lateral jerk |Jylmt| as shown in Fig. 24.

In comparison with a case where steering control is started from the lateral-motion-based collision-avoidable limit distance Δxstr, the lateral jerk |Jy| generated can be maintained low.

In the region A6 where deceleration-based collision avoidance is possible, if the driver is performing braking operation, it is possible to calculate the target steering angle and the target brake torque so as to perform deceleration-based collision avoidance, giving priority to driver's deceleration request.

In the case of steering-based collision avoidance control, further, the collision avoidance calculation unit 3B calculates a drive command for the warning device so as to notify the driver of the fact that there is a possibility of collision with an object and that lateral-motion-based collision avoidance control is to be performed, through the warning device at the start of steering control. In the case of deceleration-based collision avoidance control, further, the collision avoidance calculation unit 3B calculates a drive command for the warning device so as to notify the driver of the fact that there is a possibility of collision with an object and that deceleration-based collision avoidance control is to be performed, through the warning device at the start of deceleration control.

In Step S1500B, the collision avoidance calculation unit 3B determines whether or not the host vehicle is under deceleration control or steering control. If deceleration control is not performed as a result of last calculation processing, the collision avoidance calculation unit 3B determines that the host vehicle is not under deceleration control. Even if the host vehicle is under deceleration control as a result of the last calculation, if the brake torque generated by driver's braking operation is almost equal to or larger than the brake torque due to deceleration control, and if the throttle valve opening generated by driver's accelerator pedal operation is almost the same as the throttle valve opening due to deceleration control, the collision avoidance calculation unit 3B terminates deceleration control and determines that the host vehicle is not under deceleration control. If steering control is not performed as a result of last calculation processing, the collision avoidance calculation unit 3B determines that the host vehicle is not under steering control. Further, if the steering angle of each tire calculated from the steering angle generated by driver's steering wheel operation is almost the same as the steering angle due to steering control, the collision avoidance calculation unit 3B terminates steering control and determines that the host vehicle is not under steering control.

In Step S1500B, if the host vehicle is under deceleration control or steering control by the forward collision avoidance assistance system, the collision avoidance calculation unit 3B determines that the host vehicle is under deceleration control or steering control, and processing proceeds to Step S1600. If the host vehicle is judged to be neither under deceleration control nor steering control, the collision avoidance calculation unit 3B terminates processing.

In Step S1600, the collision avoidance calculation unit 3B determines whether or not the host vehicle is in the stop state. If the vehicle velocity of the host vehicle is zero, the collision avoidance calculation unit 3B determines that the host vehicle is in the stop state, and processing proceeds to Step S1700B. If the vehicle velocity of the host vehicle is not zero and accordingly the host vehicle is judged to be not in the stop state, i.e., in a traveling state, processing proceeds to Step S1800B.

In Step S1700B, as target brake torque/target throttle valve opening/target steering angle/warning operation 5, the collision avoidance calculation unit 3B performs target brake torque, target throttle valve opening, and target steering angle calculations, and warning operation in relation to the vehicle in the stop state. If the driver's braking operation variable is smaller than the brake torque necessary to maintain the stop state, the brake torque necessary to maintain the stop state is set as the target brake torque. Then, the collision avoidance calculation unit 3B calculates a drive command for the warning device to prompt driver's braking operation. If the host vehicle is judged to be under steering control, the collision avoidance calculation unit 3B terminates steering control.

In Step S1800B, as target brake torque/target throttle valve opening/target steering angle/warning operation 6, the collision avoidance calculation unit 3B performs target brake torque, target throttle valve opening, and target steering angle calculations, and warning operation in relation to a state where no object exists ahead of the vehicle traveling under deceleration control or a state where the relative distance $\Delta x$ is larger than the jerk-limited collision avoidable distance $\Delta xctl1$. This applies to a state where an object ahead of the host vehicle accelerates during deceleration control resulting in an increased relative distance or a state where the object ahead of the host vehicle deviates from the course of the host vehicle through lateral movement. In this case, if the host vehicle is under deceleration control, the collision avoidance calculation unit 3B calculates the target longitudinal acceleration based on the longitudinal acceleration due to deceleration control and the driver-requested longitudinal acceleration presumed from the states of driver's braking and accelerator pedal operations, and calculates the target brake torque of each tire and the target throttle valve opening based on the target longitudinal acceleration.

As a method for calculating the target longitudinal acceleration, the target longitudinal acceleration is changed to converge the target longitudinal acceleration to the driver-requested longitudinal acceleration while maintaining the absolute value of the longitudinal jerk generated on the vehicle not larger than a certain threshold value as shown in Fig. 21.

When the target longitudinal acceleration is set as the driver-requested longitudinal acceleration, target longitudinal acceleration change may be subjected to filter processing to be used as the target longitudinal acceleration. It is also possible to calculate the target brake torque based on brake torque generated at each tire and the driver-requested brake torque calculated from driver's braking operation state, without calculating the target longitudinal acceleration, and calculate the target throttle valve opening based on the driver-requested brake torque calculated from the state of driver's accelerator pedal operation. In this case, it is possible to calculate the target brake torque so as to converge to the driver-requested brake torque while maintaining brake torque change of each tire not larger than a certain threshold value; and then, after the target brake torque has converged to the driver-requested brake torque, calculate the target throttle valve opening so as to converge to the driver-requested throttle valve opening while maintaining longitudinal acceleration change accompanying a throttle valve opening change not larger than a certain threshold value, thus converging the target throttle valve opening to the driver-requested throttle valve opening.

If the host vehicle is under steering control, the collision avoidance calculation unit 3B calculates the target steering angle for each tire based on the driver-requested steering angle calculated from the lateral acceleration generated by steering control and the driver's steering operation state. As a method for calculating the target steering angle, it is possible to change the target steering angle so as to converge to the driver-requested steering angle while maintaining the absolute value of the lateral jerk generated on the vehicle by steering angle change not larger than a certain threshold value. When the driver-requested steering angle is set as the target steering angle, the target steering angle may be subjected to filter processing to be used as the target steering angle.

Then, the collision avoidance calculation unit 3B calculates a drive command of the warning device to notify the driver of the fact that the possibility of collision has become low. As a method for notification, it is possible to terminate the warning from the warning device to notify the driver of the fact that the possibility of collision has become low.

In Step S1900B, in the same way as in Step S1900A of Fig. 19, the collision avoidance calculation unit 3B performs drive control of the brake actuator, the electronic control throttle actuator, and the alarm unit, and turns on the tail-light in response to the drive of the brake actuator. Then, the collision avoidance calculation unit 3B performs drive control of the steering actuator so as to attain the target steering angle.

Although a case where the target steering angle is used for drive control of the steering actuator 8 has been explained with the present embodiment, it is possible to calculate the target steering torque from the target lateral acceleration to be generated on the vehicle and perform drive control of the steering actuator 8 based on the target steering torque.

As explained above, in the regions A1 to A5 out of the nine regions, neither warning for collision avoidance nor deceleration control for collision avoidance is performed. In order not to give uncomfortable feeling to the driver, it is also important that neither warning nor deceleration control is performed if collision avoidance is judged to be possible even without performing any operation, which is a difference from conventional systems.

In the region A9 where collision with an object cannot be avoided, the collision avoidance calculation unit 3B calculates necessary target brake torque of each tire so that the vehicle decelerates with the maximum possible acceleration $|Gmax|$ on the road surface to reduce the shock at collision.

In the region A6, a region where the jerk-limited deceleration-based collision avoidable distance $\Delta xbrklmt$ is equal to or smaller than the jerk-limited lateral-motion-based collision avoidable distance $\Delta xstrlmt$ is defined as a region A6-1, and a region where the jerk-limited deceleration-based collision avoidable distance $\Delta xbrklmt$ is larger than the jerk-limited lateral-motion-based collision avoidable distance $\Delta$xstrlmt is defined as a region A6-2. In the region A6-2, the collision avoidance calculation unit 3B sets the lateral acceleration to the upper-limit lateral jerk |Jylmt| or below or the maximum lateral jerk |Jymax| or below. In the region A6-1, the collision avoidance calculation unit 3B sets the upper-limit longitudinal jerk |Jxlmt| or below or the maximum longitudinal jerk |Jxmax| or below.

In the region A7 where deceleration-based collision avoidance is impossible and lateral-motion-based collision avoidance is possible, the collision avoidance calculation unit 3B sets the lateral acceleration to the upper-limit lateral jerk |Jylmt| or below or the maximum lateral jerk |Jymax| or below in relation to the relative distance $\Delta$x.

In the region A8, the collision avoidance calculation unit 3B sets the deceleration to the upper-limit longitudinal jerk |Jxlmt| or the maximum longitudinal jerk |Jxmax| or below in relation to the relative distance $\Delta$x, and warns about the prohibition of steering operation.

As explained above, the present embodiment supports collision avoidance suitable for each of the nine regions to attain the reduction of driver's uncomfortable feeling and the improvement of the drivability while ensuring the collision avoidance performance at the time of avoidance of collision with an object.

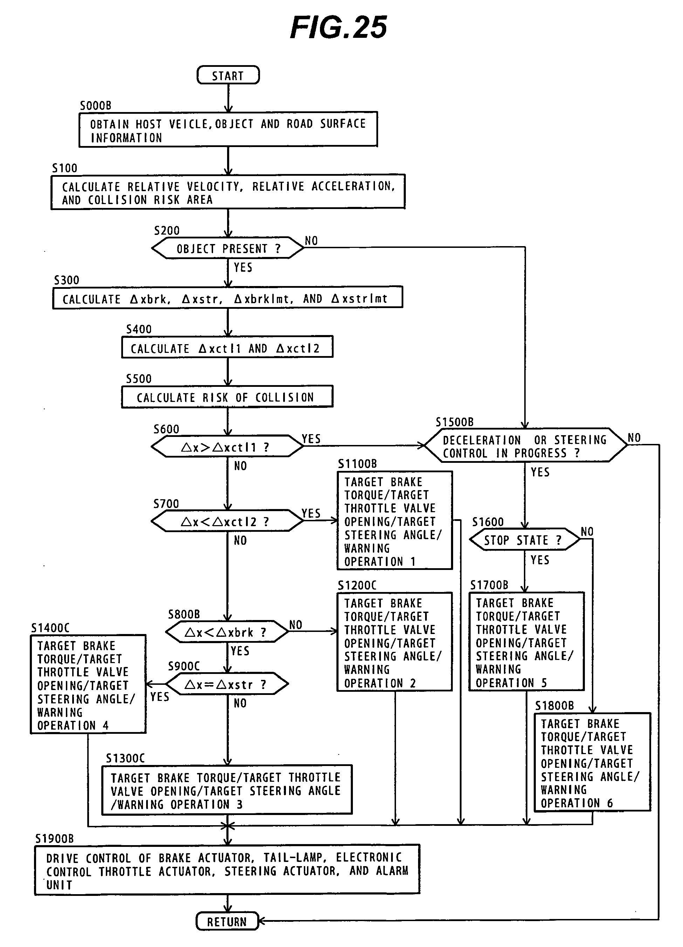

The configuration and operation of a forward collision avoidance assistance system according to a fourth embodiment are explained below with reference to Fig. 25. The configuration of the forward collision avoidance assistance system according to the present embodiment is the same as that of Fig. 22.

Fig. 25 is a flow chart showing the operation of the forward collision avoidance assistance system according to the fourth embodiment.

The present embodiment mainly performs deceleration-based collision avoidance and, after starting deceleration control, performs steering-based collision avoidance.

Referring to Fig. 25, Steps S000B to S800B, S1100B, and S1500B to S1900B are the same Steps S000B to S800B, S1100B, and S1500B to S1900B of Fig. 23.

In Step S1200C of Fig. 25, as target brake torque/target throttle valve opening/target steering angle/warning operation 2, the collision avoidance calculation unit 3B performs target brake torque, target throttle valve opening, and target steering angle calculations necessary to perform deceleration-based collision avoidance, and warning operation. The target brake torque, the target throttle valve opening, and the content of warning are the same as in Step S1200 of Fig. 8 and Step S1200A of Fig. 19. Further, the collision avoidance calculation unit 3B sets the target longitudinal acceleration to -|Gmax| so that the vehicle decelerates with the maximum possible acceleration |Gmax| on the road surface, and calculates target steering angle for each tire necessary to generate the target longitudinal acceleration -|Gmax|.

Then, the collision avoidance calculation unit 3B calculates a drive command for the warning device so as to notify the driver of the fact that there is a possibility of collision with an object and that deceleration-based collision avoidance control is to be performed, through the warning device at the start of deceleration control. Further, the notification for the driver may include information for prompting driver's brake pedal operation.

In Step S900C, the collision avoidance calculation unit 3B compares the relative distance $\Delta$x with the lateral-motion-based collision-avoidable limit distance $\Delta$xstr.

In Step S900C, if the relative distance $\Delta$x is the lateral-motion-based collision-avoidable limit distance $\Delta$xstr, the collision avoidance calculation unit 3B determines that the vehicle is at the steering-based collision avoidance limit, and processing proceeds to Step S100C; otherwise, processing proceeds to Step S1300C.

In Step S1300C, as target brake torque/target throttle valve opening/target steering angle/warning operation 3, the collision avoidance calculation unit 3B performs target brake torque, target throttle valve opening, and target steering angle calculations, and warning operation in relation to deceleration control in the region A7 of Fig. 5. If the driver is not performing avoidance steering operation, the collision avoidance calculation unit 3B calculates the target brake torque and the target throttle valve opening in the same way as in Step S1200C. If the driver is performing avoidance steering operation, the collision avoidance calculation unit 3B calculates the target longitudinal acceleration so that the longitudinal acceleration Gx may fluctuate in response to driver's steering operation, as shown in Fig. 15. As a method for fluctuating the longitudinal acceleration Gx, the control method is changed depending on the deceleration generated at the start of steering operation. For example, if the deceleration at the start of steering operation is large, the deceleration is decreased based on the steering speed. If the deceleration at the start of steering operation is small or zero, the deceleration is maintained unchanged or fluctuated based on the steering speed. Further, if driver's steering operation is judged to be inappropriate for lateral-motion-based collision avoidance, the deceleration is increased. After calculation of the target longitudinal acceleration, the collision avoidance calculation unit 3B calculates the target brake torque of each tire so as to generate the target longitudinal acceleration.

Then, the collision avoidance calculation unit 3B calculates a drive command for the warning device so as to notify the driver of the fact that there is a possibility of collision with an object and that deceleration-based collision avoidance control is to be performed, and then notify the driver of the steering direction, through the warning device at the start of deceleration control. In this case, it is possible to notify the driver of required amount of steering in addition to the steering direction. The content of the warning regarding the steering direction and the amount of steering may be changed in relation to the amount of steering by the driver. For example, if the amount of steering by the driver is not sufficient for object avoidance, it is possible to give a warning so as to increase the amount of steering.

In Step S1400C, as target brake torque/target throttle valve opening/target steering angle/warning operation 4, the collision avoidance calculation unit 3B performs target brake torque, target brake torque, target throttle valve opening, and target steering angle calculations, and warning operation in a case where steering-based collision avoidance is performed. In the same way as in Step S1400B of Fig. 23, the collision avoidance calculation unit 3B calculates the target lateral acceleration necessary for collision avoidance, and calculates the target steering angle so as to generate the target lateral acceleration. The collision avoidance calculation unit 3B calculates the target brake torque and the target throttle valve opening in relation to the target lateral acceleration to be generated.

In the case of steering-based collision avoidance control, further, the collision avoidance calculation unit 3B calculates a drive command for the warning device so as to notify the driver of the fact that there is a possibility of collision with an object and that lateral-motion-based collision avoidance control is to be performed, through the warning device at the start of steering control.

As explained above, in the regions A1 to A5 out of the nine regions, neither warning for collision avoidance nor deceleration control for collision avoidance is performed. In order not to give uncomfortable feeling to the driver, it is also important that neither warning nor deceleration control is performed if collision avoidance is judged to be possible even without performing any operation, which is a difference from conventional systems.

In the region A9 where collision with an object cannot be avoided, the collision avoidance calculation unit 3B calculates necessary target brake torque of each tire so that the vehicle decelerates with the maximum possible acceleration $|Gmax|$ on the road surface to reduce the shock at collision.

In the region A6, the collision avoidance calculation unit 3B sets the deceleration with the upper-limit longitudinal jerk $|Jxlmt|$ or below or the maximum longitudinal jerk $|Jxmax|$ or below in relation to relative distance $\Delta$. Further, if driver's steering operation is performed, the collision avoidance calculation unit 3B performs deceleration control in response to driver's steering operation.

In the region A7, the collision avoidance calculation unit 3B generates a moment for swirling the vehicle toward a direction in which lateral-motion-based collision avoidance is possible on a priority basis by means of the brake torque of each tire, and sets the lateral acceleration necessary for collision avoidance as required.

In the region A8, the collision avoidance calculation unit 3B sets the deceleration to the upper-limit longitudinal jerk $|Jxlmt|$ or below or the maximum longitudinal jerk $|Jxmax|$ in relation to the relative distance Ax, and warns about the prohibition of steering operation.

As explained above, the present embodiment supports collision avoidance suitable for each of the nine regions to attain the reduction of driver's uncomfortable feeling and the improvement of the drivability while ensuring the collision avoidance performance at the time of avoidance of collision with an object.

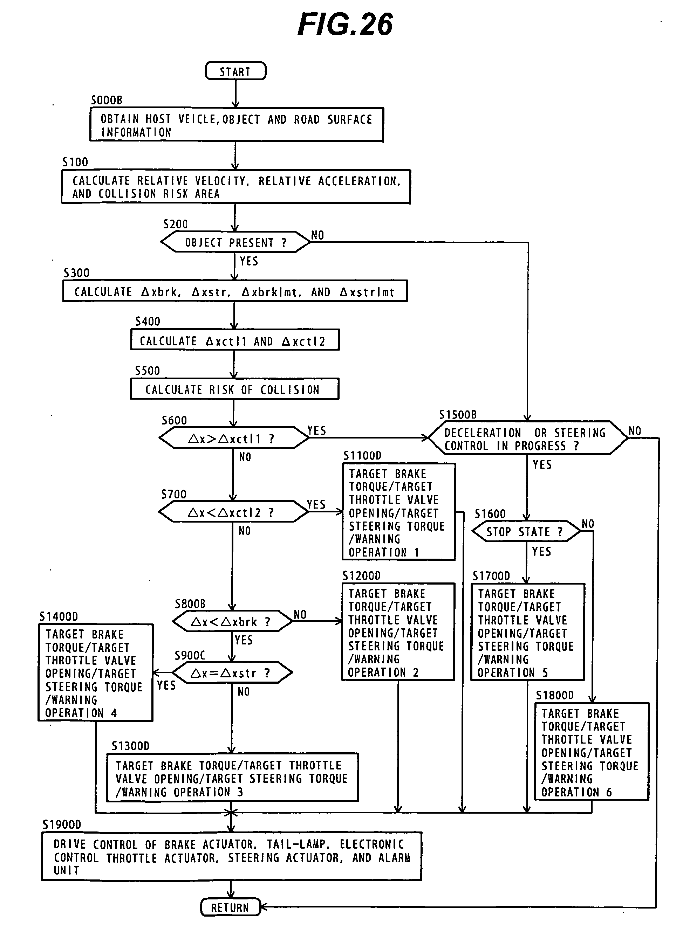

The configuration and operation of the forward collision avoidance assistance system according to the fifth embodiment are explained below with reference to Fig. 26.

Fig. 26 is a flow chart showing the operation of a forward collision avoidance assistance system according to a fifth embodiment.

Although the configuration of the forward collision avoidance assistance system according to the present embodiment is the same as that of Fig. 22, it performs steering-based collision avoidance with the steering actuator 8 in which the steering mechanism of each tire is mechanically connected with the steering wheel.

The steering actuator 8 which generates the lateral acceleration on the vehicle is a mechanism in which the steering mechanism of each tire is mechanically connected with the steering wheel. The steering actuator 8 controls the steering torque to control the steering angle of each tire. The steering actuator 8 may be an electric power steering mechanism which controls the steering torque with a motor or a hydraulic power steering mechanism which hydraulically controls the steering torque.

Referring to Fig. 26, Steps S000B to S900C and S1600 are the same as Steps S000B to S900C and S1600 of Fig. 25.

In Steps S1100D to S1400D, the collision avoidance calculation unit 3B calculates the target steering torque in relation to target lateral acceleration instead of calculating the target steering angle in relation to target lateral acceleration in Steps S1100C to S1400C of Fig. 25.

In Step S1500D, the collision avoidance calculation unit 3B determines whether or not the host vehicle is under deceleration control or steering control. If deceleration control is not performed as a result of last calculation processing, the collision avoidance calculation unit 3B determines that the host vehicle is not under deceleration control. Even if the host vehicle is under deceleration control as a result of the last calculation, if the brake torque generated by driver's braking operation is almost equal to or larger than the brake torque due to deceleration control, and if the throttle valve opening generated by driver's accelerator pedal operation is almost the same as the throttle valve opening due to deceleration control, the collision avoidance calculation unit 3B terminates deceleration control and determines that the host vehicle is not under deceleration control. If steering control is not performed as a result of last calculation processing, the collision avoidance calculation unit 3B determines that the host vehicle is not under steering control. If the target steering torque due to steering control is zero, the collision avoidance calculation unit 3B terminates steering control and determines that the host vehicle is not under steering control.

In Step S1500D, if the host vehicle is under deceleration control or steering control by the forward collision avoidance assistance system, the collision avoidance calculation unit 3B determines that the host vehicle is under deceleration control or steering control, and processing proceeds to Step S1600. If the host vehicle is judged to be neither under deceleration control nor steering control, the collision avoidance calculation unit 3B terminates processing.

In Step S1700D, as target brake torque/target throttle valve opening/target steering torque/warning operation 5, the collision avoidance calculation unit 3B performs target brake torque, target throttle valve opening, and target steering torque calculations, and warning operation in relation to the vehicle in the stop state. If the driver's braking operation variable is smaller than the brake torque necessary to maintain the stop state, the brake torque necessary to maintain the stop state is set as the target brake torque. Then, the collision avoidance calculation unit 3B calculates a drive command for the warning device to prompt driver's braking operation.

If the host vehicle is judged to be under steering control, the collision avoidance calculation unit 3B terminates steering control.

In Step S1800D, as target brake torque/target throttle valve opening/target steering torque/warning operation 6, the collision avoidance calculation unit 3B performs target brake torque, target throttle valve opening, and target steering torque calculations, and warning operation in relation to a state where no object exists ahead of the vehicle traveling under deceleration control or a state where the relative distance $\Delta x$ is larger than the jerk-limited collision avoidable distance $\Delta xctl1$. This applies to a state where an object ahead of the host vehicle accelerates during deceleration control resulting in an increased relative distance or a state where the object ahead of the host vehicle deviates from the course of the host vehicle through lateral movement. In this case, if the host vehicle is under deceleration control, the collision avoidance calculation unit 3B calculates the target longitudinal acceleration based on the longitudinal acceleration due to deceleration control and the driver-requested longitudinal acceleration presumed from the states of driver's braking and accelerator pedal operations, and calculates the target brake torque of each tire and the target throttle valve opening based on the target longitudinal acceleration. As a method for calculating the target longitudinal acceleration, the target longitudinal acceleration is changed to converge the target longitudinal acceleration to the driver-requested longitudinal acceleration while maintaining the absolute value of the longitudinal jerk generated on the vehicle not larger than a certain threshold value as shown in Fig. 21.

When the target longitudinal acceleration is set as the driver-requested longitudinal acceleration, target longitudinal acceleration change may be subjected to filter processing to be used as the target longitudinal acceleration. It is also possible to calculate the target brake torque based on brake torque generated at each tire and the driver-requested brake torque calculated from driver's braking operation state, without calculating the target longitudinal acceleration, and calculate the target throttle valve opening based on the driver-requested brake torque calculated from the state of driver's accelerator pedal operation. In this case, it is possible to calculate the target brake torque so as to converge to the driver-requested brake torque while maintaining brake torque change of each tire not larger than a certain threshold value; and then, after the target brake torque has converged to the driver-requested brake torque, calculate the target throttle valve opening so as to converge to the driver-requested throttle valve opening while maintaining longitudinal acceleration change accompanying a throttle valve opening change not larger than a certain threshold value, thus converging the target throttle valve opening to the driver-requested throttle valve opening. If the host vehicle is under steering control, the collision avoidance calculation unit 3B calculates so that target steering torque becomes zero. In this case, the collision avoidance calculation unit 3B calculates the target steering torque so that target steering torque change is maintained not larger than a certain threshold value.

Then, the collision avoidance calculation unit 3B calculates a drive command of the warning device to notify the driver of the fact that the possibility of collision has become low. As a method for notification, it is possible to terminate the warning from the warning device to notify the driver of the fact that the possibility of collision has become low.

In Step S1900D, in the same way as in Step S1900D of Fig. 19, the collision avoidance calculation unit 3B performs drive control of the brake actuator, the electronic control throttle actuator, and the alarm unit, and turns on the tail-light in response to the drive of the brake actuator. Then, the collision avoidance calculation unit 3B performs drive control of the steering actuator so as to attain the target steering torque.

Although the case where the same deceleration- or steering-based collision avoidance as in the embodiment of Fig. 25 is performed has been explained with the present embodiment, it is possible to perform deceleration- or steering-based collision avoidance in the same way as in Steps S000B to S1800B of Fig. 23, and calculate the target steering torque so as to attain the target lateral acceleration.

With the embodiments of Figs. 1 to 18, it is possible to include the road surface information detection unit 9 shown in the embodiment of Fig. 22. This makes it possible to improve the accuracy for presuming the lateral-motion-based collision-avoidable limit distance $\Delta xstr$ and the jerk-limited deceleration-based collision avoidable distance $\Delta xbrklmt$ also with the embodiment of Figs. 1 to 18. It is also possible to attain deceleration-based collision avoidance control shown in the embodiments of Figs. 8 and 19 as the embodiments shown in Figs. 23, 25, and 26.

As mentioned above, in accordance with the above-mentioned embodiments, when acceleration is generated on the vehicle for deceleration- or lateral-motion-based collision avoidance, maintaining the jerk low makes it easier to respond to an acceleration change generated by the driver. For example, if deceleration is suddenly generated when the driver has not noticed an object by carelessness or the like, the driver cannot respond to the generated deceleration possibly resulting in change of sight due to shaken head or panic steering. As shown in the above-mentioned embodiments, if deceleration is performed while maintaining the jerk low, the driver can afford to feel that the deceleration is increasing. Thus, the driver can notice that the vehicle is decelerating, making it easier to adjust his or her posture in response to the deceleration to be generated. Further, warning and avoidance control is performed at a timing when a limit acceleration change permissible for the driver occurs through object avoidance. In this way, the above-mentioned embodiments can reduce burden and uncomfortable feeling caused by avoidance control before driver's operation or excessive warning when the driver recognizes an object and avoid collision.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A forward collision avoidance assistance system comprising collision avoidance calculation means (3) for calculating control information for judging the risk of collision between the host vehicle and the object detected in the host vehicle traveling direction based on the information on a host vehicle detected by the host vehicle information detection means (1) and the information on the object detected by object information detection means (2), and calculating the control information for collision avoidance to be output to an actuator (5) based on the result of the collision risk judgment;

    wherein the actuator (5) is brake force control means capable of controlling the brake force of the host vehicle; and

    wherein the collision avoidance calculation means (3) causes the brake force control means to control the brake force of the host vehicle with the use of a collision-avoidable limit distance $\Delta x ctl2$ determined based on a physical limit above which collision between the host vehicle and the object cannot be avoided and a jerk-limited collision avoidable distance $\Delta x ctl1$ determined based on the acceleration and jerk generated on the host vehicle by the host vehicle's object avoidance movement.

2. The forward collision avoidance assistance system according to Claim 1,

    wherein the collision avoidance calculation means (3) defines the collision-avoidable limit distance $\Delta x ctl2$ based on a deceleration-based collision-avoidable limit distance $\Delta x brk$, that is, a physical limit for avoiding collision with the object by the deceleration of the host vehicle, and a lateral-motion-based collision-avoidable limit distance $\Delta x str$, that is, a physical limit for avoiding collision with the object by the lateral movement of the host vehicle, and defines the jerk-limited collision avoidable distance $\Delta x ctl1$ based on a jerk-limited deceleration-based collision avoidable distance $\Delta x brklmt$ in which the absolute value of the jerk generated on the host vehicle by the deceleration-based collision avoidance movement of the host vehicle is equal to or smaller than a predetermined value (upper-limit longitudinal jerk $|Jxlmt|$) and based on a jerk-limited lateral-motion-based collision avoidable distance $\Delta x strlmt$ in which the absolute value of the jerk generated on the host vehicle by lateral-motion-based collision avoidance movement of the host vehicle is equal to or smaller than a predetermined value (upper-limit lateral jerk $|Jylmt|$).

3. The forward collision avoidance assistance system according to Claim 1 or 2,
    wherein the collision avoidance calculation means (3) calculates the collision-avoidable limit distance $\Delta x ctl2$ and the jerk-limited collision avoidable distance $\Delta x ctl1$ based on road surface information.

4. The forward collision avoidance assistance system according to Claim 3,
    wherein the collision avoidance calculation means (3) presumes the road surface information based on a brake force generated for each tire by the brake force control means.

5. The forward collision avoidance assistance system according to any of Claims 1 - 4,
    wherein the collision avoidance calculation means (3) controls the opening angle of a throttle valve to limit the absolute values of the jerks to a predetermined value or below.

6. The forward collision avoidance assistance system according to any of Claims 1 - 5,

wherein the actuator (5) serves as lateral force control means for controlling the lateral force of the host vehicle as well as serving as the brake force control means

and wherein the collision avoidance calculation means (3) causes the brake force control means to control the brake force and lateral force of the host vehicle with the use of the collision-avoidable limit distance $\Delta$xctl2 determined based on a physical limit above which collision between the host vehicle and the object cannot be avoided and the jerk-limited collision avoidable distance $\Delta$xctl1 determined based on the acceleration and jerk generated on the host vehicle by the host vehicle's object avoidance movement.

7. The forward collision avoidance assistance system according to Claim 6,
wherein the collision avoidance calculation means (3) defines the collision-avoidable limit distance $\Delta$xctl2 based on the deceleration-based collision-avoidable limit distance $\Delta$xbrk, that is, a physical limit for avoiding collision with the object by the deceleration of the host vehicle, and the lateral-motion-based collision-avoidable limit distance $\Delta$xstr, that is, a physical limit for avoiding collision with the object by the lateral movement of the host vehicle, and defines the jerk-limited collision avoidable distance $\Delta$xctl1 based on the jerk-limited deceleration-based collision avoidable distance $\Delta$xbrklmt in which the absolute value of the jerk generated on the host vehicle by the deceleration-based collision avoidance movement of the host vehicle is equal to or smaller than a predetermined value (upper-limit longitudinal jerk |Jxlmt|) and based on the jerk-limited lateral-motion-based collision avoidable distance $\Delta$strlmt in which the absolute value of the jerk generated on the host vehicle by lateral-motion-based collision avoidance movement of the host vehicle is equal to or smaller than a predetermined value (upper-limit lateral jerk |Jylmt|).

8. The forward collision avoidance assistance system according to Claim 6 or 7,
wherein the collision avoidance calculation means (3) controls the deceleration of the host vehicle using the brake force control means and then controls the lateral force using the lateral force control means.

9. The forward collision avoidance assistance system according to Claim 7 or 8, wherein
if: a region A1 is defined as a region where a collision-avoidable limit distance in relation to a relative velocity $\Delta$V is larger than both the jerk-limited deceleration-based collision avoidable distance $\Delta$xbrklmt and the jerk-limited lateral-motion-based collision avoidable distance $\Delta$xstrlmt;
a region A2 is defined as a region where the collision-avoidable limit distance is equal to or smaller than the jerk-limited deceleration-based collision avoidable distance $\Delta$xbrklmt and larger than both the deceleration-based collision-avoidable limit distance $\Delta$xbrk and the jerk-limited lateral-motion-based collision avoidable distance $\Delta$xstrlmt;
a region A3 is defined as a region where the collision-avoidable limit distance is equal to or smaller than the jerk-limited lateral-motion-based collision avoidable distance $\Delta$xstrlmt and larger than the lateral-motion-based collision-avoidable limit distance $\Delta$xstr and the jerk-limited deceleration-based collision avoidable distance $\Delta$xbrklmt;
a region A4 is defined as a region where the collision-avoidable limit distance is equal to or smaller than the deceleration-based collision-avoidable limit distance $\Delta$xbrk and larger than the jerk-limited lateral-motion-based collision avoidable distance $\Delta$xstrlmt;
a region A5 is defined as a region where the collision-avoidable limit distance is equal to or smaller than the lateral-motion-based collision-avoidable limit distance $\Delta$xstr and larger than the jerk-limited deceleration-based collision avoidable distance $\Delta$xbrklmt;
a region A6 is defined as a region where the collision-avoidable limit distance is equal to or smaller than both the jerk-limited deceleration-based collision avoidable distance $\Delta$xbrklmt and the jerk-limited lateral-motion-based collision avoidable distance $\Delta$xstrlmt and equal to or larger than both the deceleration-based collision-avoidable limit distance $\Delta$xbrk and the lateral-motion-based collision-avoidable limit distance $\Delta$xstr;
a region A7 is defined as a region where the collision-avoidable limit distance is smaller than the deceleration-based collision-avoidable limit distance $\Delta$xbrk, equal to or smaller than the jerk-limited lateral-motion-based collision avoidable distance $\Delta$xstrlmt, and equal to or larger than the lateral-motion-based collision-avoidable limit distance $\Delta$xstr;
a region A8 is defined as a region where the collision-avoidable limit distance is smaller than the lateral-motion-based collision-avoidable limit distance $\Delta$xstr, equal to or smaller than the jerk-limited deceleration-based collision avoidable distance $\Delta$xbrklmt, and equal to or larger than the deceleration-based collision-avoidable limit distance $\Delta$xbrk; and
a region A9 is defined as a region where the collision-avoidable limit distance is smaller than both the deceleration-based collision-avoidable limit distance $\Delta$xbrk and the lateral-motion-based collision-avoidable limit distance $\Delta$xstr,
the collision avoidance calculation means (3) does not perform collision avoidance control when the collision-avoidable limit distance in relation to the relative velocity $\Delta$V is included in the region A1, A2, A3, A4, or A5; decelerates the vehicle at a maximum possible acceleration |Gmax| in the region A9; in the region A6, sets a deceleration rate such that the longitudinal jerk generated by deceleration-based collision avoidance movement becomes equal to or smaller than a maximum possible longitudinal jerk |Jxmax| or sets a lateral acceleration rate such that the lateral jerk generated by lateral-motion-based collision avoidance movement becomes equal to or smaller than a maximum possible lateral jerk |Jymax|; sets the lateral acceleration rate to the maximum lateral jerk |Jymax| or below in the region A7; and sets the deceleration rate to the maximum longitudinal jerk |Jxmax| or below in the region A8.

10. A forward collision avoidance assistance system comprising collision avoidance calculation means (3) for judging the risk of collision between the host vehicle and the object detected in the host vehicle traveling direction based on the information on the host vehicle detected by the host vehicle information detection means (1) and the information on the object detected by object information detection means (2), and calculating the control information for collision avoidance to be output to an actuator (5) based on the result of the collision risk judgment;
wherein the actuator (5) is brake force control means capable of controlling the brake force of the host vehicle and also lateral force control means capable of controlling the lateral force of the host vehicle; and
wherein the collision avoidance calculation means (3) causes the brake force control means to control the brake force and lateral force of the host vehicle with the use of a collision-avoidable limit distance ΔLxct12 determined based on a physical limit above which collision between the host vehicle and the object cannot be avoided and a jerk-limited collision avoidable distance Δxct11 determined based on the acceleration and jerk generated on the host vehicle by the host vehicle's object avoidance movement.

11. The forward collision avoidance assistance system according to Claim 10,
wherein the collision avoidance calculation means (3) defines the collision-avoidable limit distance Δxct12 based on a deceleration-based collision-avoidable limit distance Δxbrk, that is, a physical limit for avoiding collision with the object by the deceleration of the host vehicle, and a lateral-motion-based collision-avoidable limit distance Δxstr, that is, a physical limit for avoiding collision with the object by the lateral movement of the host vehicle, and defines the jerk-limited collision avoidable distance Δxctl1 based on a jerk-limited deceleration-based collision avoidable distance Δxbrklmt in which the absolute value of the jerk generated on the host vehicle by the deceleration-based collision avoidance movement of the host vehicle is equal to or smaller than a predetermined value (upper-limit longitudinal jerk |Jxlmt|) and based on a jerk-limited lateral-motion-based collision avoidable distance Δxstrlmt in which the absolute value of the jerk generated on the host vehicle by lateral-motion-based collision avoidance movement of the host vehicle is equal to or smaller than a predetermined value (upper-limit lateral jerk |Jylmt|).

12. The forward collision avoidance assistance system according to Claim 10 or 11,
wherein the collision avoidance calculation means (3) controls the deceleration of the host vehicle using the brake force control means and then controls the lateral force using the lateral force control means.

13. The forward collision avoidance assistance system according to Claim 11 or 12, wherein
if: a region A1 is defined as a region where a collision-avoidable limit distance in relation to a relative velocity ΔV is larger than both the jerk-limited deceleration-based collision avoidable distance Δxbrklmt and the jerk-limited lateral-motion-based collision avoidable distance Δxstrlmt;
a region A2 is defined as a region where the collision-avoidable limit distance is equal to or smaller than the jerk-limited deceleration-based collision avoidable distance Δxbrklmt and larger than both the deceleration-based collision-avoidable limit distance Δxbrk and the jerk-limited lateral-motion-based collision avoidable distance Δxstrlmt;
a region A3 is defined as a region where the collision-avoidable limit distance is equal to or smaller than the jerk-limited lateral-motion-based collision avoidable distance Δxstrlmt and larger than the lateral-motion-based collision-avoidable limit distance Δxstr and the jerk-limited deceleration-based collision avoidable distance Δxbrklmt;
a region A4 is defined as a region where the collision-avoidable limit distance is equal to or smaller than the deceleration-based collision-avoidable limit distance Δxbrk and larger than the jerk-limited lateral-motion-based collision avoidable distance Δxstrlmt;
a region A5 is defined as a region where the collision-avoidable limit distance is equal to or smaller than the lateral-motion-based collision-avoidable limit distance Δxstr and larger than the jerk-limited deceleration-based collision avoidable distance Δxbrklmt;
a region A6 is defined as a region where the collision-avoidable limit distance is equal to or smaller than both the jerk-limited deceleration-based collision avoidable distance Δxbrklmt and the jerk-limited lateral-motion-based collision avoidable distance Δxstrlmt and equal to or larger than both the deceleration-based collision-avoidable limit distance Δxbrk and the lateral-motion-based collision-avoidable limit distance Δxstr;
a region A7 is defined as a region where the collision-avoidable limit distance is smaller than the deceleration-based collision-avoidable limit distance Δxbrk, equal to or smaller than the jerk-limited lateral-motion-based collision avoidable distance Δxstrlmt, and equal to or larger than the lateral-motion-based collision-avoidable limit distance Δxstr;
a region A8 is defined as a region where the collision-avoidable limit distance is smaller than the lateral-motion-based collision-avoidable limit distance Δxstr, equal to or smaller than the jerk-limited deceleration-based collision

avoidable distance $\triangle$xbrklmt, and equal to or larger than the deceleration-based collision-avoidable limit distance $\triangle$xbrk; and

a region A9 is defined as a region where the collision-avoidable limit distance is smaller than both the deceleration-based collision-avoidable limit distance $\triangle$xbrk and the lateral-motion-based collision-avoidable limit distance $\triangle$xstr, the collision avoidance calculation means (3) does not perform collision avoidance control when the collision-avoidable limit distance in relation to the relative velocity $\triangle$V is included in the region A1, A2, A3, A4, or A5; decelerates the vehicle at a maximum possible acceleration |Gmax| in the region A9; in the region A6, sets a deceleration rate such that the longitudinal jerk generated by deceleration-based collision avoidance movement becomes equal to or smaller than a maximum possible longitudinal jerk |Jxmax| or sets a lateral acceleration rate such that the lateral jerk generated by lateral-motion-based collision avoidance movement becomes equal to or smaller than a maximum possible lateral jerk |Jymax|; sets the lateral acceleration rate to the maximum lateral jerk |Jymax| or below in the region A7; and sets the deceleration rate to the maximum longitudinal jerk |Jxmax| or below in the region A8.

# FIG.1

| 1 | 3 | |
|---|---|---|
| HOST VEHICLE INFORMATION DETECTION UNIT<br>(VEHICLE VELOCITY V1)<br>(VEHICLE LONGITUDINAL ACCELERATION Gx1)<br>(VEHICLE LATERAL ACCELERATION Gy1)<br>(STEERING ANGLE $\delta$)<br>(MASTER BRAKE PRESSURE Pm) | | ALARM UNIT<br>(ALARM DISPLAY UNIT)<br>(ALARM SOUND GENERATOR)<br>(VIBRATION GENERATOR) ~4 |
| | COLLISION AVOIDANCE CALCULATION UNIT | |
| OBJECT INFORMATION DETECTION UNIT<br>(RELATIVE DISTANCE BETWEEN HOST VEHICLE AND OBJECT ($\Delta$x))<br>(OBJECT VELOCITY V2)<br>(OBJECT ACCELERATION Gx2) | | BRAKE ACTUATOR ~5 |
| 2 | | TAIL-LIGHT ~6 |

# FIG.2

# FIG.3

START DECELERATION CONTROL

START DECELERATION

RANGE 1

RANGE 2

RANGE 3

(A) ACCELERATION

-Gx1_0

|Jxmax|

-Gxmax

TIME

(B) RELATIVE VELOCITY ΔV

TIME

(C) TRAVEL DISTANCE x

△x3

△xbrk

△x2

△x1

△t1 △t1

△t3

TIME

FIG.4

LATERAL-MOVEMENT TIME

LATERAL-MOVEMENT DISTANCE

LATERAL MOVEMENT WITH
JERK |Jylmt| OR BELOW

LATERAL MOVEMENT WITH
MAXIMUM ACCELERATION Gymax

$\triangle$tstrlmt

$\triangle$tstr

$\triangle$d

EP 2 060 464 A2

# FIG.5

# FIG.6

# FIG.7

# FIG.8

```
                        ┌─ START ─┐
                             │
  S000                       ▼
  ┌──────────────────────────────────────────────────┐
  │  OBTAIN HOST VEHICLE AND OBJECT INFORMATION        │
  └──────────────────────────────────────────────────┘
                             │
  S100                       ▼
  ┌──────────────────────────────────────────────────┐
  │  CALCULATE RELATIVE VELOCITY, RELATIVE ACCELERATION,│
  │  AND COLLISION RISK AREA                            │
  └──────────────────────────────────────────────────┘
                             │
  S200                       ▼              NO
              < OBJECT PRESENT ? >───────────────┐
                             │ YES               │
  S300                       ▼                   │
  ┌──────────────────────────────────────────┐   │
  │  CALCULATE Δxbrk, Δxstr, Δxbrklmt,        │   │
  │  AND Δxstrlmt                             │   │
  └──────────────────────────────────────────┘   │
                     │                            │
  S400               ▼                            │
  ┌──────────────────────────────────┐            │
  │  CALCULATE Δxctl1 AND Δxctl2      │            │
  └──────────────────────────────────┘            │
                     │                            │
  S500               ▼                            │
  ┌──────────────────────────────────┐            │
  │  CALCULATE RISK OF COLLISION      │            │
  └──────────────────────────────────┘            │
                     │            S1500           ▼
  S600               ▼    YES            DECELERATION CONTROL   NO
              < Δx>Δxctl1 ? >──────────►< IN PROGRESS ? >──────────┐
                     │ NO                        │ YES            │
  S700  S1100        ▼    YES ┌─────────────┐    ▼                │
   < Δx<Δxctl2 ? >────────►│TARGET BRAKE │  S1600           NO   │
                     │ NO   │TORQUE/WARNING│  < STOP STATE ? >─────┤
                     │      │OPERATION 1  │         │ YES         │
  S800               ▼      └─────────────┘         │             │
  YES ┌──< Δx<Δxstr ? >                   S1700      ▼             │
      │        │ NO                       ┌─────────────┐         │
      │  S900  ▼    YES S1300             │TARGET BRAKE │         │
      │ < IS AVOIDANCE STEERING >──►┌─────────────┐     │TORQUE/WARNING│     │
      │ < PERFORMED BY DRIVER ? >   │TARGET BRAKE │     │OPERATION 5  │     │
      │        │ NO                 │TORQUE/WARNING│    └─────────────┘     │
  S1200        │                    │OPERATION 3  │                         │
  ┌─────────┐  │  S1000             └─────────────┘    S1800               │
  │TARGET   │  ▼   NO                                   ┌─────────────┐     │
  │BRAKE    │◄──< Δx<Δxbrk ? >                          │TARGET BRAKE │◄────┘
  │TORQUE/  │         │ YES                             │TORQUE/WARNING│
  │WARNING  │         │                                 │OPERATION 6  │
  │OPERATION 2│       │                                 └─────────────┘
  └─────────┘  S1400  ▼
      │        ┌──────────────────────────────┐
      │        │  TARGET BRAKE TORQUE/WARNING  │
      │        │  OPERATION 4                  │
      │        └──────────────────────────────┘
      │                    │
  S1900                    ▼
  ┌──────────────────────────────────────────────────┐
  │  DRIVE CONTROL OF BRAKE ACTUATOR, TAIL-LIGHT,      │
  │  AND ALARM UNIT                                    │
  └──────────────────────────────────────────────────┘
                     │
                     ▼
                ┌─ RETURN ─┐
```

FIG.9

EP 2 060 464 A2

## FIG.10

# FIG.11

```
                    ┌──────────────────┐
                    │      START       │
                    └──────────────────┘
                             │
   S301                      ▼
        ┌─────────────────────────────────────────┐
        │          CALCULATE  Δxbrk                │
        └─────────────────────────────────────────┘
                             │
   S302                      ▼
        ┌─────────────────────────────────────────┐
        │         CALCULATE  Δxbrklmt              │
        └─────────────────────────────────────────┘
                             │
        S303                 ▼
        ╱─────────────────────────────────╲   NO
       ⟨    IS LATERAL-MOTION-BASED         ⟩────────────┐
        ╲   AVOIDANCE POSSIBLE ?           ╱             │
         ╲─────────────────────────────────╱            │
   S305              │ YES            S304               │
        ┌────────────▼──────────────┐   ┌───────────────▼─────────────────┐
        │  CALCULATE LATERAL-MOVEMENT│   │  Δxstr,  Δxstrimt               │
        │  DISTANCE  Δd              │   │  = PREDETERMINED VALUE (> Δx)   │
        └───────────────────────────┘   └─────────────────────────────────┘
   S306              │                                   │
        ┌────────────▼──────────────┐                   │
        │     CALCULATE  Δxstr        │                  │
        └───────────────────────────┘                   │
   S307              │                                   │
        ┌────────────▼──────────────┐                   │
        │    CALCULATE  Δxstrimt      │                  │
        └───────────────────────────┘                   │
                     │                                   │
                     ▼                                   │
              ┌──────────────┐◄──────────────────────────┘
              │     END      │
              └──────────────┘
```

# FIG.12

(A)

START CALCULATION IN
TARGET BRAKE TORQUE/
WARNING OPERATION 6

DRIVER-REQUESTED LONGITUDINAL
ACCELERATION

LONGITUDINAL
ACCELERATION

TIME

TARGET LONGITUDINAL ]
ACCELERATION

(B)

LONGITUDINAL
JERK

THRESHOLD VALUE

TIME

# FIG.13

(a) STARTING BRAKE CONTROL FROM △xctl1

# FIG.14

(b) STARTING BRAKE CONTROL FROM △xctl2

# FIG.15

START DECELERATION CONTROL
AND ACTUATE ALARM

↓START
DECELERATION

↓START
STEERING

Gy

(A)  ACCELERATION Gx,Gy

−Gx1_0

|Jx|mt|

TIME

Gx

(B)  JERK |Jx|,|Jy|

|Jx|

|Jy|

TIME

49

## FIG.16

# FIG.17A

SMALL |Jxlmt|

SMALL |Jxlmt|

LARGE |Jxlmt|

SMALL MAXIMUM DECELERATION

LARGE |Jxlmt|

△xbrklmt

LARGE MAXIMUM DECELERATION

RELATIVE VELOCITY △V

# FIG.17B

SMALL MAXIMUM DECELERATION

△xbrk

LARGE MAXIMUM DECELERATION

RELATIVE VELOCITY △V

# FIG.18

HOST VEHICLE INFORMATION DETECTION UNIT
(VEHICLE VELOCITY V1)
(VEHICLE LONGITUDINAL ACCELERATION Gx1)
(VEHICLE LATERAL ACCELERATION Gy1)
(STEERING ANGLE $\delta$)
(MASTER BRAKE PRESSURE Pm)
(AMOUNT OF ACCELERATOR PEDAL STROKE)

1A

3A

COLLISION AVOIDANCE
CALCULATION UNIT

OBJECT INFORMATION DETECTION UNIT
(RELATIVE DISTANCE BETWEEN HOST VEHICLE
AND OBJECT ($\Delta$x))
(OBJECT VELOCITY V2)
(OBJECT ACCELERATION Gx2)

2

ALARM UNIT
(ALARM DISPLAY UNIT)
(ALARM SOUND GENERATOR)
(VIBRATION GENERATOR)

4

BRAKE ACTUATOR

5

TAIL-LIGHT

6

ELECTRONIC CONTROL
THROTTLE ACTUATOR

7

EP 2 060 464 A2

# FIG.19

START

S000
OBTAIN HOST VEHICLE AND OBJECT INFORMATION

S100
CALCULATE RELATIVE VELOCITY, RELATIVE ACCELERATION, AND COLLISION RISK AREA

S200
OBJECT PRESENT ? — NO

YES

S300
CALCULATE Δxbrk, Δxstr, Δxbrklmt, AND Δxstrlmt

S400
CALCULATE Δxctl1 AND Δxctl2

S500
CALCULATE RISK OF COLLISION

S600
Δx>Δxctl1 ? — YES

NO

S700
Δx<Δxctl2 ? — YES

NO

S800
Δx<Δxstr ? — YES

NO

S900
IS AVOIDANCE STEERING PERFORMED BY DRIVER ? — YES

NO

S1000
Δx<Δxbrk ? — NO

YES

S1100A
TARGET BRAKE TORQUE/TARGET THROTTLE VALVE OPENING/WARNING OPERATION 1

S1200A
TARGET BRAKE TORQUE/TARGET THROTTLE VALVE OPENING/WARNING OPERATION 2

S1300A
TARGET BRAKE TORQUE/TARGET THROTTLE VALVE OPENING/WARNING OPERATION 3

S1400A
TARGET BRAKE TORQUE/TARGET THROTTLE VALVE OPENING/WARNING OPERATION 4

S1500A
DECELERATION CONTRL IN PROGRESS ? — NO

YES

S1600
STOP STATE ? — NO

YES

S1700A
TARGET BRAKE TORQUE/TARGET THROTTLE VALVE OPENING/WARNING OPERATION 5

S1800A
TARGET BRAKE TORQUE/TARGET THROTTLE VALVE OPENING/WARNING OPERATION 6

S1900A
DRIVE CONTROL OF BRAKE ACTUATOR, TAIL-LIGHT, ELECTRONIC CONTROL THROTTLE ACTUATOR, AND ALARM UNIT

RETURN

53

EP 2 060 464 A2

# FIG.20

# FIG.21

START CALCULATION IN
TARGET BRAKE TORQUE/
TARGET THROTTLE VALVE OPENING/
WARNING OPERATION 6

DRIVER-REQUESTED LONGITUDINAL
ACCELERATION

(A)

LONGITUDINAL
ACCELERATION

TARGET LONGITUDINAL
ACCELERATION

TIME

(B)

LONGITUDINAL
JERK

THRESHOLD VALUE

TIME

# FIG.22

**1A**
HOST VEHICLE INFORMATION DETECTION UNIT
(VEHICLE VELOCITY V1)
(VEHICLE LONGITUDINAL ACCELERATION Gx1)
(VEHICLE LATERAL ACCELERATION Gy1)
(STEERING ANGLE $\delta$)
(MASTER BRAKE PRESSURE Pm)
(AMOUNT OF ACCELERATOR PEDAL STROKE)

OBJECT INFORMATION DETECTION UNIT
(RELATIVE DISTANCE BETWEEN HOST VEHICLE
AND OBJECT ($\Delta$x))
(OBJECT VELOCITY V2)
(OBSJECT ACCELERATION Gx2)

**2**

ROAD SURFACE INFORMATION DETECTION UIT
(ROAD SHAPE IN TRAVELING DIRECTION)

**9**

**3B**
COLLISION AVOIDANCE
CALCULATION UNIT

ALARM UNIT
(ALARM DISPLAY UNIT)
(ALARM SOUND GENERATOR)
(VIBRATION GENERATOR) ～4

BRAKE ACTUATOR ～5

TAIL-LIGHT ～6

ELECTRONIC CONTROL
THROTTLE ACTUATOR ～7

STEERING ACTUATOR ～8

EP 2 060 464 A2

# FIG.23

START

S000B
OBTAIN HOST VEICLE,OBJECT AND ROAD SURFACE INFORMATION

S100
CALCULATE RELATIVE VELOCITY, RELATIVE ACCELERATION, AND COLLISION RISK AREA

S200
OBJECT PRESENT ?  —— NO

YES

S300
CALCULATE $\triangle$xbrk, $\triangle$xstr, $\triangle$xbrklmt, AND $\triangle$xstrlmt

S400
CALCULATE $\triangle$xctl1 AND $\triangle$xctl2

S500
CALCULATE RISK OF COLLISION

S600
$\triangle$x>$\triangle$xctl1 ?  —— YES

NO

S1500B
DECELERATION OR STEERING CONTROL IN PROGRESS ?  —— NO

YES

S1100B
TARGET BRAKE TORQUE/TARGET THROTTLE VALVE OPENING/TARGET STEERING ANGLE/ WARNING OPERATION 1

S700
$\triangle$x<$\triangle$xctl2 ?  —— YES

NO

S1600
STOP STATE ?  —— NO

YES

S1400B
TARGET BRAKE TORQUE/TARGET THROTTLE VALVE OPENING/TARGET STEERING ANGLE/ WARNING OPERATION 4

S800B
$\triangle$x<$\triangle$xbrk ?  —— YES

NO

S1300B
TARGET BRAKE TORQUE/TARGET THROTTLE VALVE OPENING/TARGET STEERING ANGLE/ WARNING OPERATION 3

S1700B
TARGET BRAKE TORQUE/TARGET THROTTLE VALVE OPENING/TARGET STEERING ANGLE/ WARNING OPERATION 5

S900B
$\triangle$xbrklmt$\leqq$$\triangle$xstrlmt ?  —— NO

YES

S1800B
TARGET BRAKE TORQUE/TARGET THROTTLE VALVE OPENING/TARGET STEERING ANGLE/ WARNING OPERATION 6

S1200B
TARGET BRAKE TORQUE/TARGET THROTTLE VALVE OPENING/TARGET STEERING ANGLE /WARNING OPERATION 2

S1900B
DRIVE CONTROL OF BRAKE ACTUATOR, TAIL-LIGHT, ELECTRONIC CONTROL THROTTLE ACTUATOR, STEERING ACTUATOR, AND ALARM UNIT

RETURN

# FIG.24

START STEERING CONTROL
AND ACTUATE ALARM

START LATERAL
MOVEMENT

(A) LATERAL ACCELERATION Gy

TIME

(B) LATERAL JERK |Jy|

|Jylmt|

TIME

# FIG.25

START

S000B
OBTAIN HOST VEICLE, OBJECT AND ROAD SURFACE INFORMATION

S100
CALCULATE RELATIVE VELOCITY, RELATIVE ACCELERATION, AND COLLISION RISK AREA

S200
OBJECT PRESENT ? — NO

YES

S300
CALCULATE $\triangle$xbrk, $\triangle$xstr, $\triangle$xbrklmt, AND $\triangle$xstrlmt

S400
CALCULATE $\triangle$xctl1 AND $\triangle$xctl2

S500
CALCULATE RISK OF COLLISION

S600
$\triangle$x>$\triangle$xctl1 ? — YES

NO

S700
$\triangle$x<$\triangle$xctl2 ? — YES

NO

S1100B
TARGET BRAKE TORQUE/TARGET THROTTLE VALVE OPENING/TARGET STEERING ANGLE/ WARNING OPERATION 1

S800B
$\triangle$x<$\triangle$xbrk ? — NO

YES

S900C
$\triangle$x=$\triangle$xstr ? 

NO

S1200C
TARGET BRAKE TORQUE/TARGET THROTTLE VALVE OPENING/TARGET STEERING ANGLE/ WARNING OPERATION 2

S1400C
TARGET BRAKE TORQUE/TARGET THROTTLE VALVE OPENING/TARGET STEERING ANGLE/ WARNING OPERATION 4

YES

S1300C
TARGET BRAKE TORQUE/TARGET THROTTLE VALVE OPENING/TARGET STEERING ANGLE /WARNING OPERATION 3

S1500B
DECELERATION OR STEERING CONTROL IN PROGRESS ? — NO

YES

S1600
STOP STATE ? — NO

YES

S1700B
TARGET BRAKE TORQUE/TARGET THROTTLE VALVE OPENING/TARGET STEERING ANGLE/ WARNING OPERATION 5

S1800B
TARGET BRAKE TORQUE/TARGET THROTTLE VALVE OPENING/TARGET STEERING ANGLE/ WARNING OPERATION 6

S1900B
DRIVE CONTROL OF BRAKE ACTUATOR, TAIL-LAMP, ELECTRONIC CONTROL THROTTLE ACTUATOR, STEERING ACTUATOR, AND ALARM UNIT

RETURN

## FIG.26

```
                              ┌─────────┐
                              │  START  │
                              └────┬────┘
   S000B                          │
   ┌──────────────────────────────┴──────────────────────────┐
   │ OBTAIN HOST VEICLE,OBJECT AND ROAD SURFACE               │
   │ INFORMATION                                              │
   └──────────────────────────────┬──────────────────────────┘
   S100                           │
   ┌──────────────────────────────┴──────────────────────────┐
   │ CALCULATE RELATIVE VELOCITY, RELATIVE ACCELERATION,      │
   │ AND COLLISION RISK AREA                                  │
   └──────────────────────────────┬──────────────────────────┘
              S200                 │
           ╱──────────────────────┴──────╲    NO
           ╲   OBJECT PRESENT ?           ╱─────────────────────┐
            ╲────────────────────────────╱                      │
                      │ YES                                     │
   S300               │                                         │
   ┌──────────────────┴──────────────────────────────────┐     │
   │ CALCULATE Δxbrk, Δxstr, Δxbrklmt, AND Δxstrlmt       │     │
   └──────────────────┬──────────────────────────────────┘     │
       S400           │                                         │
       ┌──────────────┴──────────────────┐                      │
       │ CALCULATE Δxctl1 AND Δxctl2      │                      │
       └──────────────┬──────────────────┘                      │
       S500           │                                         │
       ┌──────────────┴──────────────────┐                      │
       │ CALCULATE RISK OF COLLISION      │                      │
       └──────────────┬──────────────────┘                      │
          S600         │                         S1500B         │
       ╱───────────────┴────╲  YES    ╱────────────────────────╲ NO
       ╲  Δx>Δxctl1 ?        ╱────────╲ DECELERATION OR STEERING ╲──┐
        ╲──────────────────╱           ╲ CONTROL IN PROGRESS ?   ╱  │
               │ NO                      ╲───────────────────────╱  │
               │              S1100D           │ YES                │
               │          ┌──────────────┐     │                    │
          S700 │          │ TARGET BRAKE │  S1600                   │
       ╱───────┴────╲ YES │ TORQUE/TARGET│ ╱──────────╲ NO          │
       ╲ Δx<Δxctl2 ? ╱────│ THROTTLE VALVE│╲ STOP STATE ?╱──────────┤
        ╲──────────╱      │ OPENING/TARGET│ ╲──────────╱            │
               │ NO       │ STEERING TORQUE│     │ YES              │
               │          │ /WARNING      │ S1700D                  │
               │          │ OPERATION 1   │ ┌──────────────┐        │
               │          └──────────────┘ │ TARGET BRAKE │        │
               │              S1200D        │ TORQUE/TARGET│        │
               │          ┌──────────────┐ │ THROTTLE VALVE│        │
   S1400D      │          │ TARGET BRAKE │ │ OPENING/TARGET│        │
   ┌─────────┐ S800B      │ TORQUE/TARGET│ │ STEERING TORQUE│       │
   │TARGET   │╱────┴────╲ │ THROTTLE VALVE│ │ /WARNING      │       │
   │BRAKE    │╲Δx<Δxbrk ? ╱ NO │OPENING/TARGET│ OPERATION 5   │      │
   │TORQUE/  │ ╲────────╱──┘│ STEERING TORQUE│└──────────────┘      │
   │TARGET   │    │ YES     │ /WARNING      │     S1800D            │
   │THROTTLE │ S900C        │ OPERATION 2   │  ┌──────────────┐     │
   │VALVE    │╱────┴────╲   └──────────────┘  │ TARGET BRAKE │     │
   │OPENING/ │╲Δx=Δxstr ?╱                    │ TORQUE/TARGET│     │
   │TARGET   │ ╲────────╱                     │ THROTTLE VALVE│     │
   │STEERING │YES  │ NO                        │ OPENING/TARGET│     │
   │TORQUE   │     │                          │ STEERING TORQUE│    │
   │/WARNING │     │                          │ /WARNING      │     │
   │OPERATION│     │        S1300D             │ OPERATION 6   │     │
   │4        │     │    ┌──────────────────┐  └──────────────┘     │
   └─────────┘     │    │ TARGET BRAKE TORQUE/TARGET THROTTLE │    │
                   │    │ VALVE OPENING/TARGET STEERING TORQUE│    │
                   │    │ /WARNING OPERATION 3               │    │
                   │    └──────────────────┘                      │
   S1900D          │                                              │
   ┌───────────────┴──────────────────────────────────────────┐  │
   │ DRIVE CONTROL OF BRAKE ACTUATOR, TAIL-LAMP, ELECTRONIC    │  │
   │ CONTROL THROTTLE ACTUATOR, STEERING ACTUATOR, AND ALARM   │  │
   │ UNIT                                                      │  │
   └───────────────┬──────────────────────────────────────────┘  │
                   │         ┌─────────┐                          │
                   └─────────│ RETURN  │◄─────────────────────────┘
                             └─────────┘
```

**REFERENCES CITED IN THE DESCRIPTION**

**Patent documents cited in the description**

- JP 6298022 A
- JP 11203598 A
- JP 2003182544 A